# EUROPEAN PATENT SPECIFICATION

(11) **EP 0 642 540 B1**
(45) Date of publication and mention of the grant of the patent: **06.08.1997**
(21) Application number: 93914075.2
(22) Date of filing: 24.05.1993
(51) Int. Cl.: C08F 220/28, C08F 220/04, C09D 4/00, C08F 246/00

(54) **COMPLEX HYDROPHOBE COMPOUNDS, MACROMONOMERS AND MACROMONOMER-CONTAINING POLYMERS**
KOMPLEXE HYDROPHOBE VERBINDUNGEN, MAKROMONOMERE UND POLYMERE, DIE MAKROMONOMERE ENTHALTEN
COMPOSES HYDROFUGES COMPLEXES, MACROMONOMERES ET POLYMERES CONTENANT DES MACROMONOMERES

(30) Priority: 29.05.1992 US 887647; 29.05.1992 US 887673; 29.05.1992 US 887648; 29.05.1992 US 887645; 29.05.1992 US 887644
(43) Date of publication of application: 15.03.1995
(73) Proprietor: UNION CARBIDE CHEMICALS & PLASTICS TECHNOLOGY CORPORATION, Danbury, Connecticut 06817-0001 (US)
(72) Inventor: JENKINS, Richard, Duane, Hurrican, WV 25526 (US); BASSET, David, Robinson, Charleston, WV 25314 (US); SHAY, Gregory, Dean, Cary, NC 27511 (US); SMITH, Danny, Elwood, Cross Lanes, WV 25313 (US); ARGYROPOULOS, John, Nicholas, Scott Depot, WV 25560 (US); LOFTUS, James, Edward, Hurricane, WV 25526 (US)
(74) Representative: Wibbelmann, Jobst, Dr., Dipl.-Chem.
(86) International application number: US9304872
(87) International publication number: WO9324544

(56) References cited:
- EP-A- 0 011 806
- EP-A- 0 173 109
- EP-A- 0 216 479
- EP-A- 0 222 059
- US-A- 4 029 872

## Description

### Brief Summary of the Invention

### Technical Field

This invention relates to polymers which contain macromonomers and which can contain nonionic, cationic, anionic and/or amphoteric monomers. The polymers are especially useful as thickeners for aqueous systems, e.g., certain of the polymers are soluble in, or swelled by, an aqueous alkaline medium to provide thickeners for use in aqueous coating compositions, especially latex paints. This invention also relates to macromonomers containing complex hydrophobic groups and to complex hydrophobe compounds.

### Background of the Invention

Thickeners for aqueous systems are needed for various purposes, such as for architectual coatings, industrial coatings, automotive coatings and the like to improve rheology of the coatings. Hydroxyethyl cellulose is a well known thickener for aqueous systems, but it has various deficiencies in that excessive amounts must be used and the rheology of the thickened system is inadequate. Various ethoxylated carboxyl-functional polymers which form alkali soluble thickeners are also known, but these have various deficiencies, including inadequate hydrolytic stability.

It has long been desired to provide superior thickeners for aqueous systems which are highly efficient, which better resist hydrolysis, and which provide better rheology. This is achieved herein by providing new polymers which possess these desired characteristics.

### Disclosure of the Invention

This invention relates to polymers (I) comprising the reaction product of:
(A) about 0-99.9, preferably about 10-10, weight percent of one or more nonionic, cationic, anionic or amphoteric monomers;
(B) about 0-99.9, preferably about 30-85, weight percent of one or more monoethylenically unsaturated monomers different from (A);
(C) about 0.1-100, preferably about 5-60, weight percent of one or more monoethylenically unsaturated macromonomers; and
(D) about 0-20, preferably about 0-10, weight percent or greater of one or more polyethylenically unsaturated monomers different from (A) and (B); in which the monoethylenically unsaturated macromonomers (C) are represented by the formula: 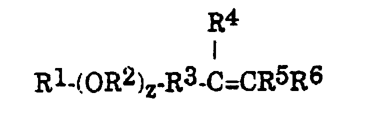
wherein:
R¹ is a monovalent residue of a substituted or unsubstituted complex hydrophobe compound;
each R² is the same or different and is a substituted or unsubstituted divalent hydrocarbon residue;
R³ is a substituted or unsubstituted divalent hydrocarbon residue;
R⁴, R⁵ and R⁶ are the same or different and are hydrogen or a substituted or unsubstituted monovalent hydrocarbon residue; and
z is a value of 0 or greater;
and in which said substituted or unsubstituted complex hydrophobe compound (R¹) is represented by the formula selected from: 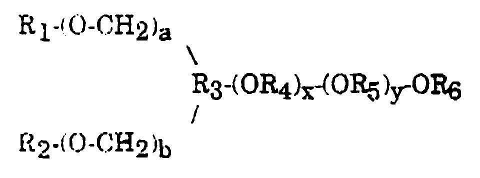 wherein R₁ and R₂ are the same or different and are hydrogen or a substituted or unsubstituted monovalent hydrocarbon residue, R₃ is a substituted or unsubstituted divalent or trivalent hydrocarbon residue, each R₄ is the same or different and is a substituted or insubstituted divalent hydrocarbon residue, each R₅ is the same or different and is a substituted or unsubstituted divalent hydrocarbon residue, R₆ is hydrogen, a substituted or unsubstituted monovalent hydrocarbon residue or an ionic substituent, a and b are the same or different and are a value of 0 or 1, and x and y are the same or different and are a value of 0 or greater; provided at least two of R₁, R₂, R₃, R₄, R₅ and R₆ are a hydrocarbon residue having greater than 2 carbon atoms in the case of R₁, R₂ and R₆ or having greater than 2 pendant carbon atoms in the case of R₃, R₄ and R₅; and 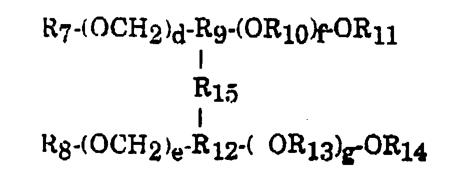 wherein R₇ and R₈ are the same or different and are hydrogen or a substituted or unsubstituted monovalent hydrocarbon residue, R₉ and R₁₂ are the same or different and are a substituted or unsubstituted divalent or trivalent hydrocarbon residue, each R₁₀ is the same or different and is a substituted or unsubstituted divalent hydrocarbon residue, each R₁₃ is the same or different and is a substituted or unsubstituted divalent hydrocarbon residue, R₁₁ and R₁₄ are the same or different and are hydrogen, a substituted or unsubstituted monovalent hydrocarbon residue or an ionic substituent, R₁₅ is a substituted or unsubstituted divalent hydrocarbon residue, d and e are the same or different and are a value of 0 or 1, and f and g are the same or different and are a value of 0 or greater; provided at least two of R₇, R₈, R₉, R₁₀, R₁₁, R₁₂, R₁₃, R₁₄ and R₁₅ are a hydrocarbon residue having greater than 2 carbon atoms in the case of R₇, R₈, R₁₁ an R₁₄ or having greater than 2 pendant carbon atoms in the case of R₉, R₁₀, R₁₂, R₁₃ and R₁₅.

This invention also relates to an emulsion of the above-identified polymer (I) in water, which emulsion is useful as a thickening agent in aqueous compositions. In order to obtain the thickening effect, the polymer (I) is dissolved in the aqueous composition to be thickened.

This invention further relates in part to an aqueous composition, and more particularly an improved latex paint composition containing the above-defined polymer (I).

This invention yet further relates in part to a process for thickening an aqueous composition which comprises adding the above-defined polymer (I) to an aqueous composition and dissolving the polymer (I) in the aqueous composition.

This invention relates to polymers (II) comprising the reaction product of:
(A) about 1-99.9, preferably about 10-70, weight percent of one or more alpha, beta-monoethylenically unsaturated carboxylic acids, typically methacrylic acid;
(B) about 0-98.9, preferably about 30-85, weight percent of one or more monoethylenically unsaturated monomers, typically ethyl acrylate, different from component (A);
(C) about 0.1-99, preferably about 5-60, weight percent of one or more monoethylenically unsaturated macromonomers as defined above and different from components (A) and (B); and
(D) about 0-20, preferably about 0-10, weight percent or greater of one or more polyethylenically unsaturated monomers, typically trimethylol propane triacrylate, different from components (A), (B) and (C).

This invention also relates in part to an emulsion of the above-identified polymer (II) in water, which emulsion is useful as a thickening agent in aqueous compositions. In order to obtain the thickening effect, the polymer (II) is dissolved in the aqueous composition to be thickened.

This invention further relates in part to an aqueous composition, and more particularly an improved latex paint composition containing the above-defined polymer (II).

This invention yet further relates in part to a process for thickening an aqueous composition which comprises adding the above-defined polymer (II) to an aqueous composition and dissolving the polymer (II) in the aqueous composition.

This invention relates in part to polymers (III) comprising the reaction product of:
(A) from 1 to about 99.9 weight percent, preferably from about 60 to 95 weight percent and more preferably from about 70 to 95 weight percent, of one or more nonionic monoethylenically unsaturated monomers, for example, acrylamide, N,N-dimethyl acrylamide, vinyl pyrrolidone and hydroxyethyl acrylate; and
(B) from about 0.1 weight percent to 99 weight percent, preferably from about 5 to 40 weight percent and more preferably from about 5 to 30 weight percent, of one or more monoethylenically unsaturated macromonomers different from component (A).

This invention also relates in part to an emulsion of the above-identified polymer (III) in water, which emulsion is useful as a thickening agent in aqueous compositions. In order to obtain the thickening effect, the polymer (III) is dissolved in the aqueous composition to be thickened.

This invention further relates in part to an aqueous composition, and more particularly an improved latex paint composition containing the above-defined polymer (III).

This invention yet further relates in part to a process for thickening an aqueous composition which comprises adding the above-defined polymer (III) to an aqueous composition and dissolving the polymer (III) in the aqueous composition.

This invention relates to compounds represented by the formula: 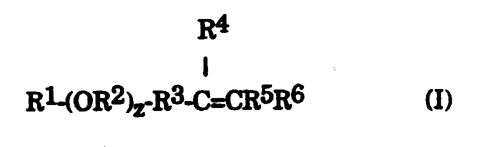 wherein:
R¹ is a monovalent residue of a substituted or unsubstituted complex hydrophobe compound;
each R² is the same or different and is a substituted or unsubstituted divalent hydrocarbon residue;
R³ is a substituted or unsubstituted divalent hydrocarbon residue;
R⁴, R⁵ and R⁶ are the same or different and are hydrogen or a substituted or unsubstituted monovalent hydrocarbon residue; and
z is a value of 0 or greater.

This invention relates to compounds represented by the formula: 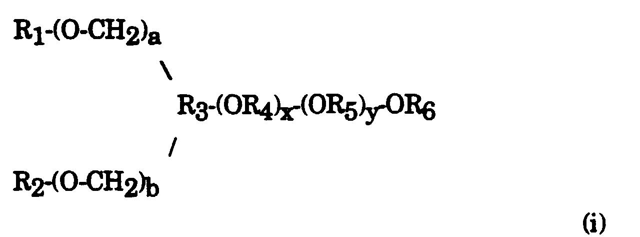 wherein R₁ and R₂ are the same or different and are hydrogen or a substituted or unsubstituted monovalent hydrocarbon residue, R₃ is a substituted or unsubstituted divalent or trivalent hydrocarbon residue, each R₄ is the same or different and is a substituted or unsubstituted divalent hydrocarbon residue, each R₅ is the same or different and is a substituted or unsubstituted divalent hydrocarbon residue, R₆ is hydrogen, a substituted or unsubstituted monovalent hydrocarbon residue or an ionic substituent, a and b are the same or different and are a value of 0 or 1, and x and y are the same or different and are a value of 0 or greater; provided (i) at least two of R₁, R₂, R₃, R₄, R₅ and R₆ are a hydrocarbon residue having greater than 2 carbon atoms in the case of R₁, R₂ and R₆ or having greater than 2 pendant carbon atoms in the case of R₃, R₄ and R₅, (ii) at least one of R₄ and R₅ is other than -CH₂CH₂- when R₁ and R₂ are nonylphenyl, R₃ is 〉CH-, R₆ is hydrogen or SO₃, a is a value of 1, b is a value of 1, and at least one of x and y is a value of 1 or greater, and (iii) R₄ is -CH₂CH₂- and x is a value of at least 2 when R₁ is hexadecyl, R₂ is tetradecyl, R₃ is 〉CH-, at least one R₅ is -CH₂CH(tetradecyl)-, R₆ is hydrogen, y is a value of 1 or greater, a is a value of 1, and b is a value of 0.

This invention also relates to compounds represented by the formula: 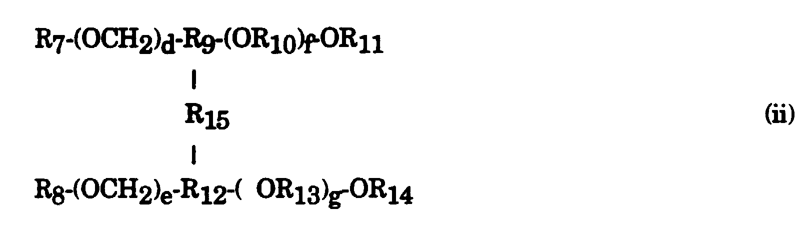 wherein R₇ and R₈ are the same or different and are hydrogen or a substituted or unsubstituted monovalent hydrocarbon residue, R₁₁ and R₁₄ are the same or different and are hydrogen, a substituted or unsubstituted monovalent hydrocarbon residue or an ionic substituent, R₉ and R₁₂ are the same or different and are a substituted or unsubstituted divalent or trivalent hydrocarbon residue, each R₁₀ is the same or different and is a substituted or unsubstituted divalent hydrocarbon residue, each R₁₃ is the same or different and is a substituted or unsubstituted divalent hydrocarbon residue, R₁₅ is a substituted or unsubstituted divalent hydrocarbon residue, d and e are the same or different and are a value of 0 or 1, and f and g are the same or different and are a value of 0 or greater; provided at least two of R₇, R₈, R₉, R₁₀, R₁₁, R₁₂, R₁₃, R₁₄ and R₁₅ are a hydrocarbon residue having greater than 2 carbon atoms in the case of R₇, R₈, R₁₁ and R₁₄ or having greater than 2 pendant carbon atoms in the case of R₉, R₁₀, R₁₂, R₁₃ and R₁₅.

This invention further relates to alkoxylation product mixtures which can have relatively narrow alkoxylation product distributions. These product mixtures are relatively free from large amounts of substantially higher alkoxylation moieties, i.e, those having at least three more alkoxyl groups than the average peak alkoxylate specie. Advantageously, these narrow distributions can be obtained where the most prevalent alkoxylation moiety has four or greater alkoxy units, that is, in the regions which generally have a relatively wide range of alkoxylation species.

### Detailed Description

Illustrative nonionic, cationic, anionic and amphoteric monomers useful in this invention include those monomers which impart water solubility to the polymer. Preferably, a large proportion of component (A) is employed to impart water solubility to the polymers of this invention. The key to water solubility lies in positioning sufficient numbers of hydrophilic functional groups along the backbone or side chains. Suitable functional groups which impart water solubility and suitable nonionic, cationic, anionic and amphoteric monomers useful in this invention are described in Water-Soluble Polymers, Synthesis, Solution Properties and Applications, ACS Symposium Series 467, American Chemical Society (1991). Mixtures of nonionic, cationic, anionic and amphoteric monomers may be employed in this invention, e.g., mixtures of nonionic monomers, mixtures of nonionic and cationic monomers, etc.

Illustrative nonionic monomers useful in this invention include, for example, acrylamide, N, N-dimethyl acrylamide, vinyl pyrrolidone, ethylene oxide, vinyl alcohol, vinyl acetate, N-vinylpyrrolidinone, hydroxyethyl acrylate and the like including mixtures thereof. Illustrative cationic monomers useful in this invention include, for example, ammonium, sulfonium and phosphonium salts, preferably quarternary ammonium salts such as diallyldimethylammonium chloride, diallyldiethylammonium chloride, diethylaminoethyl methacrylate, dimethylaminoethyl methacrylate, methacryloyloxyethyltrimethylammonium sulfate, methacryloyloxyethyltrimethylammonium chloride, 3-(methacrylamido)propyltrimethylammonium chloride and the like including mixtures thereof.

Illustrative anionic monomers useful in this invention include, for example, acrylic acid, methacrylic acid, maleic anhydride, p-styrene carboxylic acids, p-styrene sulfonic acids, vinyl sulfonic acid, 2-sulfoethyl methacrylate, 3-sulfopropyl methacrylate, 3-sulfopropyl acrylate, 2-acrylamido-2-methylpropane sulfonic acid, 3-acrylamido-3-methylbutanoic acid and the like including mixtures thereof and salts thereof. Illustrative amphoteric monomers useful in this invention contain zwitterions on the same monomers, i.e., betaines, or along the same polymer backbone, i.e., ampholytes, and include, for example, N,N-dimethyl-N-methacryloxyethyl-N-(3-sulfopropyl)ammonium-betain, N,N-dimethyl-N-methacrylamidopropyl-N-(3-sulfopropyl)ammonium-betain, 1-(3-sulfopropyl)-2-vinylpyridinium-betain, 3-(2-acrylamido-2-methyl-propyldimethylammonio)-1-propanesulfonate, N-vinylpyrrolidone-co-N,N-dimethyl-N-methacroyloxyethylammoniopropanesulfonate, N-vinylpyrrolidone- co-N,N-dimethyl-N-methacroylamidopropylammonio- propanesulfonate, N-vinylpyrrolidone-co-2-vinylpyridinio-propanesulfonate and the like including minutes thereof.

Preferably, a large proportion of one or more alpha, beta-monoethylenically unsaturated carboxylic acid monomers can be present in the polymers of this invention. Various carboxylic acid monomers can be used, such as acrylic acid, methacrylic acid, ethacrylic acid, alpha-chloroacrylic acid, crotonic acid, fumaric acid, citraconic acid, mesaconic acid, itaconic acid, maleic acid and the like including mixtures thereof. Methacrylic acid is preferred. A large proportion of carboxylic acid monomer is essential to provide a polymeric structure which will solubilize and provide a thickener when reacted with an alkali like sodium hydroxide.

The polymers of this invention can also contain a significant proportion of one or more monoethylenically unsaturated monomers. The preferred monomers provide water insoluble polymers when homopolymerized and are illustrated by acrylate and methacrylate esters, such as ethyl acrylate, butyl acrylate or the corresponding methacrylate. Other monomers which can be used are styrene, alkyl styrenes, vinyl toluene, vinyl acetate, vinyl alcohol, acrylonitrile, vinylidene chloride, vinyl ketones and the like. Nonreactive monomers are preferred, those being monomers in which the single ethylenic group is the only group reactive under the conditions of polymerization. However, monomers which include groups reactive under baking conditions or with divalent metal ions such as zinc oxide may be used in some situations, like hydroxyethyl acrylate.

Other illustrative monoethylenically unsaturated monomers useful in this invention include, for example, propyl methacrylate, isopropyl methacrylate, butyl methacrylate, n-amyl methacrylate, sec-amyl methacrylate, hexyl methacrylate, lauryl methacrylate, stearyl methacrylate, ethyl hexyl methacrylate, crotyl methacrylate, cinnamyl methacrylate, oleyl methacrylate, ricinoleyl methacrylate, hydroxy ethyl methacrylate, hydroxy propyl methacrylate, vinyl propionate, vinyl butyrate, vinyl tert-butyrate, vinyl caprate, vinyl stearate, vinyl laurate, vinyl oleate, vinyl methyl ether, vinyl ethyl ether, vinyl n-propyl ether, vinyl iso-propyl ether, vinyl n-butyl ether, vinyl iso-butyl ether, vinyl iso-octyl ether, vinyl phenyl ether, a-chlorovinyl phenyl ether, vinyl /-naphthyl ether, methacryonitrile, acrylamide, methacrylamide, N-alkyl acrylamides, N-aryl acrylamides, N-vinyl pyrrolidone, N-vinyl-3-morpholinones, N-vinyl-oxazolidone, N-vinyl-imidazole and the like including mixtures thererof.

The macromonomers useful in this invention can be represented by the formula (I) above. The macromonomer compounds useful in this invention can be prepared by a number of conventional processes, except for inclusion of the complex hydrophobe compounds described herein. Illustrative processes are described, for example, in U.S. Patent Nos. 4,514,552, 4,600,761, 4,569,965, 4,384,096, 4,268,641, 4,138,381, 3,894,980, 3,896,161, 3,652,497, 4,509,949, 4,226,754, 3,915,921, 3,940,351, 3,035,004, 4,429,097, 4,421,902, 4,167,502, 4,764,554, 4,616,074, 4,464,524, 3,657,175, 4,008,202, 3,190,925, 3,794,608, 4,338,239, 4,939,283 and 3,499,876.

In a preferred embodiment, the macromonomer compounds of this invention can be prepared by coupling a compound represented by the formula:

R¹-(OR²)_{z}-OH (II)

with an ethylenically unsaturated compound such as alpha, alphadimethyl meta isopropenyl benzyl isocyanate having the formula: 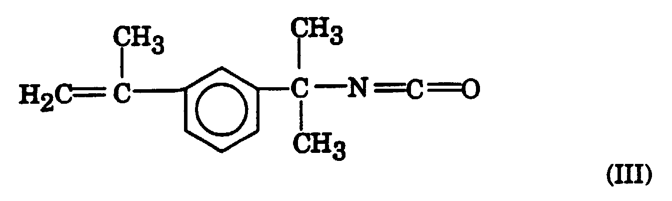 wherein R¹, R² and z are as defined above. This coupling reaction can be carried out in the presence of a catalyst such as bismuth The coupling reaction can be conducted at a temperature of about 50°C to about 150°C and a pressure of about 1 atmosphere or so. Stoichiometric amounts of starting materials can generally be employed.

It is understood that surfactants or alcohols with more than one hydroxyl, or compounds that have amine functionality, and the like can be used. Other unsaturated mono-, di-, and triisocyanates, such as isocyanato ethyl methacrylate and allyl isocyanate can also be used. Other monoisocyanates useful in preparing macromonomer compounds of this invention have the formula: 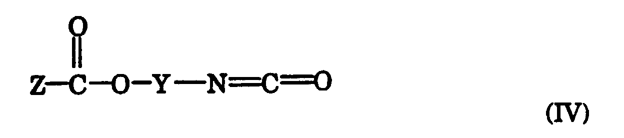 where Y is a substituted or unsubstituted divalent hydrocarbon residue such as defined for R³ herein, and Z is the residue of an ethylenically unsaturated compound such as CH₂=CH-, CH₂=C(CH₃)- or CH₂=CH-CH₂-.

In another embodiment, the compound represented by formula (II) can react with an alpha, beta-unsaturated dicarboxylic acid or acid anhydride having the formula: 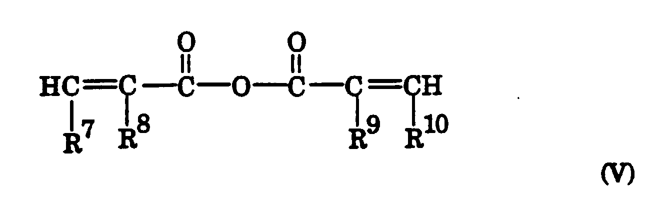 to produce an ester, wherein R⁷, R⁸, R⁹ and R¹⁰ are the same or different and are hydrogen or a substituted or unsubstituted hydrocarbon residue, preferably an alkyl residue. If R⁷, R⁸, R⁹ and R¹⁰ are hydrogen, then the acrylic ester is formed; if R⁷ and R¹⁰ are hydrogen and R⁸ and R⁹ are methyl, then the methacrylic ester is formed; if R⁷ and R¹⁰ are methyl and R⁸ and R⁹ are hydrogen, then the crotonic ester is formed. Other anhydrides, such as itaconic anhydride, crotonic anhydride, allyl succinic, methylene malonic, and the like can also be used.

This reaction can be carried out in the presence of a catalyst such as pyridine, triethylamine and the like. The reaction can be conducted at a temperature of about ambient to about 120°C and a pressure of about 1 atmosphere or so. Stoichiometric amounts of starting materials can generally be employed.

In addition, cyclic alpha, beta-unsaturated dicarboxylic acid anhydrides, such as maleic anhydride can also be used: 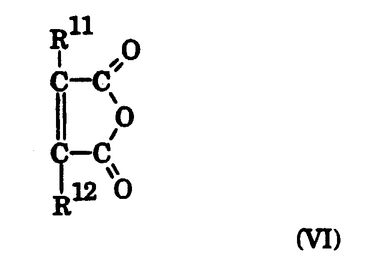 wherein R¹¹ and R¹² are the same or different and are hydrogen or a substituted or unsubstituted hydrocarbon residue, preferably halogen, cyanogen, hydroxyl, lactam and lactone groups, aryl, aralkyl, substituted alkyl, aryl or aralkyl groups, such as methyl, ethyl, propyl, octyl, decyl, phenyl, tolyl, xylyl, benzyl, cyclohexyl, and the like, or -SO₃H. Examples of such compounds are chloromaleic anhydride, citraconic anhydride, fumaric anhydride, mescaconic anhydride, phenyl maleic anhydride, benzyl maleic anhydride, sulfomaleic anhydride, aconitic anhydride, and the like.

Other synthetic routes such as transesterification or nucleophilic substitution reactions can be used. For example, the compound represented by formula (II) can react with an acid halide having the formula: 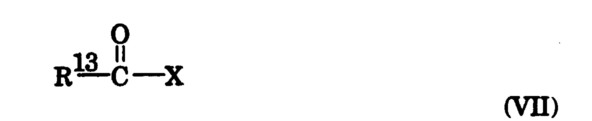 wherein R¹³ is the residue of an ethylenically unsaturated compound such as CH₂=CH-, CH₂=C(CH₃)- or CH₂=CH-CH₂-, and X is NH₂ or halogen such as chloro, bromo, fluoro or iodo. This reaction can be carried out in the presence of a catalyst such as pyridine, triethylamine and the like. The reaction can be conducted at a temperature of about ambient to about 120°C and a pressure of about 1 atmosphere or so. Stoichiometric amounts of starting materials can generally be employed.

In yet another embodiment, the compound represented by formula (II) can react with an epoxide having the formula: 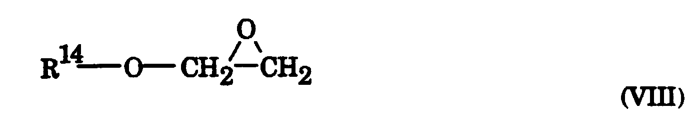 wherein R¹⁴ is a substituted or unsubstituted hydrocarbon residue, preferably the residue of an ethylenically unsaturated compound such as CH₂=CH-, CH₂=C(CH₃)- or CH₂=CH-CH₂-. If R¹⁴ is not a reactive substituent, then the resulting product having the formula: 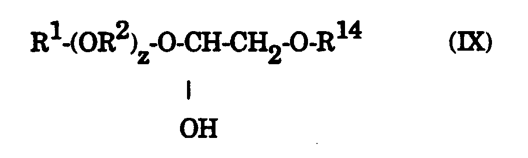 can be reacted with an unsaturated hydrocarbon compound such as an isocyanate having the formula:

R¹⁵-N=C=O (X)

to provide a macromonomer compound having the formula: 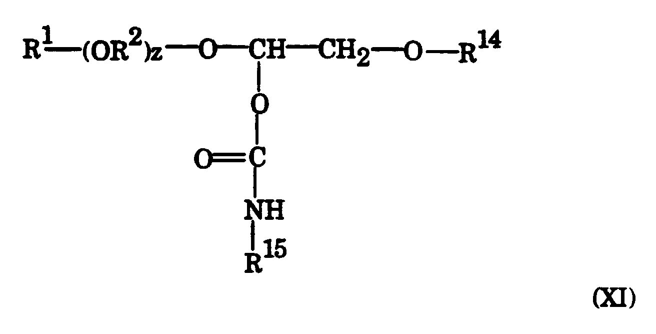 wherein R¹, R², R¹⁴ and z are as defined above and R¹⁵ is the residue of an ethylenically unsaturated compound such as CH₂=CH-, CH₂=C(CH₃)- or CH₂=CH-CH₂-. This reaction can be carried out in the presence of a catalyst such as bismuth octoate, dibutyl tin dilaurate and the like. The reaction can conducted at a temperature of about ambient to about 120°C and a pressure of about 1 atmosphere or so. Stoichiometric amounts of starting materials can generally be employed.

The macromonomer can be prepared by a neat process (without solvent), or in solution. When neat, the complex hydrophobe compound having at least one active hydrogen such as a surfactant or poly(oxyethylene) derivative can be melted and sparged with nitrogen before charging the reactants to remove moisture; when in solution, water is removed by way of an azeotrope. Then the catalyst and capping materials are charged, and the reaction mixture heated until the reaction goes to completion. The reaction stoichiometry of the surfactant and the capping material may be optimized to promote thickener efficiency and minimize coagulum formation during the subsequent polymerization. Afterwards, water can be added to the neat macromonomer to lower its viscosity. The material made in solution is recovered as a solid after solvent removal, or can be put into aqueous solution by the addition of water during azeotropic distillation.

The unsaturation portion of the macromonomer compounds of this invention can be derived from olefinically unsaturated compounds containing at least one activated carbon-to-carbon olefinic double bond which readily functions in polymerization of the macromonomer compound. Suitable olefinically unsaturated compounds include, for example, acrylic acids typified by acrylic acid itself, methacrylic acid, ethacrylic acid, alpha-chloro-acrylic acid, alpha-cyano acrylic acid, beta-methyl acrylic acid (crotonic acid), alpha-phenyl acrylic acid, beta-acryloxy propionic acid, sorbic acid, alpha-chloro sorbic acid, angelic acid, cinnamic acid, p-chloro cinnamic acid, beta-styryl acrylic acid (1-carboxy-4-phenyl butadiene-1,3), itaconic acid, citraconic acid, mesaconic acid, glutaconic acid, aconitic acid, maleic acid, fumaric acid, and tri-carboxy ethylene. Also included are polycarboxylic acids and those acid anhydrides, such as maleic anhydride, wherein the anhydride group is formed by the elimination of one molecule of water from two carboxyl groups located on the same polycarboxylic acid molecule.

Suitable acid anhydrides include alpha, beta-unsaturated dicarboxylic acid anhydrides such as maleic anhydride, chloromaleic anhydride, citraconic anhydride (methyl maleic), fumaric anhydride, phenyl maleic anhydride, benzyl maleic anhydride, sulfomaleic anhydride, aconitic anhydride and the like. Other unsaturated anhydrides useful in this invention include itaconic anhydride, methylene malonic anhydride, allyl succinic anhydride and the like.

Illustrative substituted and unsubstituted divalent hydrocarbon residues represented by R² in formula (I) above include those described for the same type of substituents in formulae (i) and (ii) below. Illustrative substituted and unsubstituted monovalent hydrocarbon residues represented by R⁴, R⁵ and R⁶ in formula (I) above include those described for the same type of substituents in formulae (i) and (ii) below.

Illustrative R³ substituents include, for example, the organic residue of ethers, esters, urethanes, amides, ureas, urethanes, anhydrides and the like including mixtures thereof. The R³ substituent can be generally described as a "linkage" between the complex hydrophobe bearing surfactant or alcohol, and the unsaturation portion of the macromonomer compound. Preferred linkages include the following: urethane linkages from the reaction of an isocyanate with a nonionic surfactant; urea linkages from the reaction of an isocyanate with an amine bearing surfactant; unsaturated esters of surfactants such as the esterification product of a surfactant with of an unsaturated carboxylic acid or an unsaturated anhydride; unsaturated esters of alcohols; esters of ethyl acrylate oligomers, acrylic acid oligomers, and allyl containing oligomers; half esters of surfactants such as those made by the reaction of a surfactant with maleic anhydride; unsaturated ethers prepared by reacting vinyl benzyl chloride and a surfactant or by reacting an allyl glycidyl ether with a surfactant, alcohol, or carboxylic acid.

The oxyalkylene moieties included in the macromonomer compounds of formula (I) may be homopolymers or block or random copolymers of straight or branched alkylene oxides. Mixtures of alkylene oxides such as ethylene oxide and propylene oxide may be employed. It is understood that each R² group in a particular substituent for all positive values of z can be the same or different.

The complex hydrophobe compounds having at least one active hydrogen useful in preparing the macromonomer compounds useful in this invention can be represented by the formula: 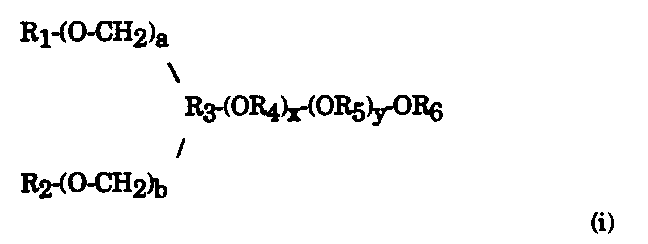 wherein R₁ and R₂ are the same or different and are hydrogen or a substituted or unsubstituted monovalent hydrocarbon residue, R₃ is a substituted or unsubstituted divalent or trivalent hydrocarbon residue, each R₄ is the same or different and is a substituted or unsubstituted divalent hydrocarbon residue, each R₅ is the same or different and is a substituted or unsubstituted divalent hydrocarbon msidue, R₆ is hydrogen, a substituted or unsubstituted monovalent hydrocarbon residue or an ionic substituent, a and b are the same or different and are a value of 0 or 1, and x and y are the same or different and are a value of 0 or greater; provided at least two of R₁, R₂, R₃, R₄, R₅ and R₆ are a hydrocarbon residue having greater than 2 carbon atoms in the case of R₁, R₂ and R₆ or having greater than 2 pendant carbon atoms in the case of R₃, R₄ and R₅. For purposes of the complex hydrophobes of formula (i) above, at least one of R₄ and R₅ is other than -CH₂CH₂- when R₁ and R₂ are nonylphenyl, R₃ is 〉CH-, R₆ is hydrogen or SO₃, a is a value of 1, b is a value of 1, and at least one of x and y is a value of 1 or greater. Also for purposes of the complex hydrophobes of formula (i) above, R₄ is -CH₂CH₂-and x is a value of at least 2 when R₁ is hexadecyl, R₂ is tetradecyl, R₃ is 〉CH-, at least one R₅ is -CH₂CH(tetradecyl)-, R₆ is hydrogen, y is a value of 1 or greater, a is a value of 1, and b is a value of 0. For purposes of the homopolymers and macromonomers of formula (I) above, when z is a value of 0 and R¹ is the residue of a complex hydrophobe of formula (i) in which R₁ is hexadecyl, a is a value of 1, R₂ is tetradecyl, b is a value of 0, R₃ is 〉CH-, R₄ is -CH₂CH(tetradecyl)-, x is a value of 1, R₅ is -CH₂CH₂-, y is a value of 34 and R₆ is hydrogen, then the -R³(R⁴)C=CR⁵R⁶ portion of the macromonomer is other than the residue of maleic anhydride. Also for purposes of the homopolymers and macromonomers of formula (I) above, when R² and R³ are hydrogen, z is a value of 34 and R¹ is the residue of a complex hydrophobe of formula (i) in which R₁ is hexadecyl, a is a value of 1, R₂ is tetradecyl, b is a value of 0, R₃ is 〉CH-, R₄ is -CH₂CH(tetradecyl)-, x is a value of 1, y is a value of 0 and R₆ is hydrogen, then the -R³-(R⁴)C=CR⁵R⁶ portion of the macromonomer is other than the residue of maleic anhydride. For purposes of polymers (I) and (II) above, when z is a value of 0 and R¹ is the residue of a complex hydrophobe of formula (i) in which R₁ is hexadecyl, a is a value of 1, R₂ is tetradecyl, b is a value of 0, R₃ is 〉CH-, R₄ is -CH₂CH(tetradecyl)-, x is a value of 1, R₅ is -CH₂CH₂-, y is a value of 34, R₆ is hydrogen, and the -R³-(R⁴)C=CR⁵R⁶ portion of the macromonomer is the residue of maleic anhydride, then the polymers of this invention are other than a terpolymer of said macromonomer, styrene and maleic anhydride. Also for purposes of polymers (I) and (II) above, when R² is -CH₂CH₂-, z is a value of 34 and R¹ is the residue of a complex hydrophobe of formula (i) in which R₁ is hexadecyl, a is a value of 1, R₂ is tetradecyl, b is a value of 0, R₃ is 〉CH-, R₄ is -CH₂CH(tetradecyl)-, x is a value of 1, y is a value of 0, R₆ is hydrogen and the -R³-(R⁴)C=CR⁵R⁶ portion of the macromonomer is the residue of maleic anhydride, then the polymers of this invention are other than a terpolymer of said macromonomer, styrene and maleic anhydride.

Other complex hydrophobe compounds having at least one active hydrogen useful in preparing the macromonomer compounds useful in this invention can be represented by the formula: 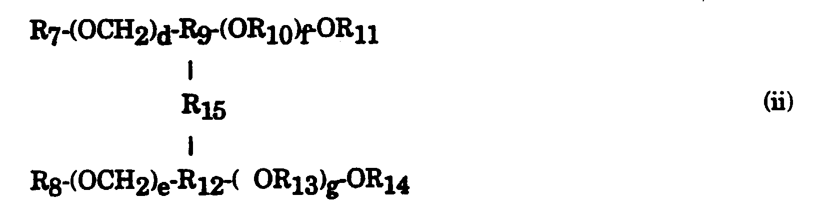 wherein R₇ and R₈ are the same or different and are hydrogen or a substituted or unsubstituted monovalent hydrocarbon residue, R₁₁ and R₁₄ are the same or different and are hydrogen, a substituted or unsubstituted monovalent hydrocarbon residue or an ionic substituent, R₉ and R₁₂ are the same or different and are a substituted or unsubstituted divalent or trivalent hydrocarbon residue, each R₁₀ is the same or different and is a substituted or unsubstituted divalent hydrocarbon residue, each R₁₃ is the same or different and is a substituted or unsubstituted divalent hydrocarbon residue, R₁₅ is a substituted or unsubstituted divalent hydrocarbon residue, d and e are the same or different and are a value of 0 or 1, and f and g are the same or different and are a value of 0 or greater; provided at least two of R₇, R₈, R₉, R₁₀, R₁₁, R₁₂, R₁₃, R₁₄ and R₁₅ are a hydrocarbon residue having greater than 2 carbon atoms in the case of R₇, R₈, R₁₁ and R₁₄ or having greater than 2 pendant carbon atoms in the case of R₉, R₁₀, R₁₂, R₁₃ and R₁₅.

Illustrative substituted and unsubstituted monovalent hydrocarbon residues contain from 1 to about 50 carbon atoms or greater and are selected from alkyl radicals including linear or branched primary, secondary or tertiary alkyl radicals, such as methyl, ethyl, n-propyl, isopropyl, amyl, sec-amyl, t-amyl and 2-ethylhexyl aryl radicals such as phenyl, naphthyl and the like; arylalkyl radicals such as benzyl, phenylethyl and triphenylmethylethane alkylaryl radicals such as octylphenyl, nonylphenyl, dodecylphenyl, tolyl and xylyl, and cycloalkyl radicals such as cyclopentyl, cyclohexyl and cyclohexylethyl.

The permissible hydrocarbon residues may contain fluorine, silicon, or other non-carbon atoms.

Preferably, the substituted and unsubstituted hydrocarbon residues are selected from alkyl and aryl radicals which contain from about 1 to 30 carbon atoms or greater. More preferably, the alkyl radicals contain from 1 to 18 carbon atoms, while the aryl, arylalkyl, alkylaryl and cycloalkyl radicals preferably contain from 6 to 18 carbon atoms or greater.

In a preferred embodiment of this invention, R₁, R₂, R₇ and R₈ can individually be a hydrocarbon radical represented by the formula: 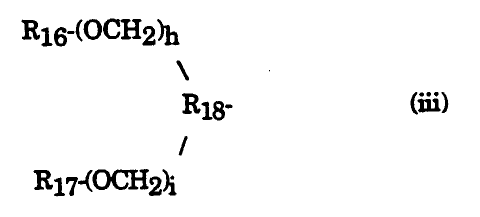 wherein R₁₆ and R₁₇ are as defined for R₁, R₂, R₇ and R₈ above, h and i are the same or different and are a value of 0 or 1, and R₁₈ is as defined for R₃ above. For compounds represented by formulae (i) and (ii), it is understood that each formula (iii) radical in a given compound may be the same or different and the R₁₆ and/or R₁₇ groups may themselves be a formula (iii) radical to provide complex hydrophobes of a dendritic or of a cascading nature as described below. Further, R₄, R₅, R₁₀ and R₁₃ can individually be a hydrocarbon radical represented by the formula:

-CH[(OR₁₉)ⱼOR₂₀]- (iv)

wherein R₁₉ is as defined for R₄, R₅, R₁₀ and R₁₃ above, R₂₀ is as defined for R₆, R₁₁ and R₁₄ above, and j is a value of 0 or greater.

Illustrative ionic substituents for R₆, R₁₁, R₁₄ and R₂₀ include cationic and anionic substituents such as sulfates, sulfonates, phosphates, carboxyls and the like. R₆, R₁₁, R₁₄ and R₂₀ may preferably be an organic residue containing 1 or more hydroxyls or nitrogen derivatives or epoxides or other reactive groups which may or may not contain unsaturation.

Other illustrative terminal groups which are described by R₆, R₁₁, R₁₄ and and R₂₀ include, for example, hydrocarbon residues which may contain allylic or vinylic unsaturation, acrylic or methacrylic functionality, styryl or alpha-methylstyryl functionality, and the like, such as the reaction product between the terminal alcohol (R₆, R₁₁, R₁₄ and R₂₀ = H) and glycidyl methacrylate, isocyanatoethyl methacrylate, alpha, alpha-dimethyl-m-isopropenyl benzyl isocyanate (m-TMI), and the like. Other examples of terminal groups may include hydrocarbon residues of alkyl, aryl, aralkyl, alkaryl, and cycloalkyl radicals which may or may not be substituted with one or more of the following: hydroxyl, carboxyl, isocyanato, amino, mono- or disubstituted amino, quaternary ammonium, sulfate, sulfonate, phosphate, epoxy, and the like and may or may not contain other non-carbon atoms including silicon or fluorine. Also included can be divalent siloxy radicals. Other nonhydrocarbon terminal groups may include sulfates, phosphates, and the like.

Illustrative divalent hydrocarbon residues represented by R₃, R₄, R₅, R₉, R₁₀, R₁₂, R₁₃, R₁₅, R₁₈ and R₁₉ in the above formulae include substituted and unsubstituted radicals selected from alkylene, -alkylene-oxy-alkylene-, -arylene-oxy-arylene-, arylene, alicyclic radicals, phenylene, naphthylene, -phenylene-(CH₂)ₘ(Q)ₙ(CH₂)ₘ-phenylene- and -naphthylene-(CH₂)ₘ(Q)ₙ(CH₂)ₘ-naphthylene- radicals, wherein Q individually represents a substituted or unsubstituted divalent bridging group selected from -CR₂₁R₂₂-, -O-, -S-, -NR₂₃-, -SiR₂₄R₂₅- and -CO-, wherein R₂₁ and R₂₂ individually represent a radical selected from hydrogen, alkyl of 1 to 12 carbon atoms, phenyl, tolyl and anisyl; R₂₃, R₂₄ and R₂₅ individually represent a radical selected from hydrogen and methyl, and each m and n individually have a value of 0 or 1. More specific illustrative divalent radicals represented by R₃, R₄, R₅, R₉, R₁₀, R₁₂, R₁₃, R₁₅, R₁₈ and R₁₉ include, e.g., 1,1-methylene, 1,2-ethylene, 1,3-propylene, 1,6-hexylene, 1,8-octylene, 1,12-dodecylene, 1,4-phenylene, 1,8-napthylene, 1,1'-biphenyl-2,2'-diyl, 1,1'-binaphthyl-2,2'-diyl, 2,2'-binaphthyl-1,1'-diyl and the like. The alkylene radicals may contain from 2 to 12 carbon atoms or greater, while the arylene radicals may contain from 6 to 18 carbon atoms or greater. Preferably, R₃, R₄, R₅, R₉, R₁₀, R₁₂, R₁₃, R₁₅, R₁₈ and R₁₉ are an alkylene or arylene radical. The permissible divalent hydrocarbon residues may contain fluorine, silicon, or other non-carbon atoms.

Illustrative trivalent hydrocarbon residues represented by R₃, R₉, R₁₂ and R₁₈ in the above formulae include substituted and unsubstituted radicals selected from 〉CH-,〉C(R₂₆)-,〉CR₂₇- and the like, wherein R₂₆ is a substituted or unsubstituted monovalent hydrocarbon residue as described herein and R₂₇ is a substituted or unsubstituted divalent hydrocarbon residue as described herein.

Of course, it is to be further understood that the hydrocarbon residues in the above formulae may also be substituted with any permissible substituent. Illustrative substituents include radicals containing from 1 to 18 carbon atoms such as alkyl, aryl, aralkyl, alkaryl and cycloalkyl radicals; alkoxy radicals; silyl radicals such as -Si(R₂₈)₃ and -Si(OR₂₈)₃, amino radicals such as -N(R₂₈)₂; acyl radicals such as -C(O)R₂₈; acyloxy radicals such as -OC(O)R₂₈; carbonyloxy radicals such as -COOR₂₈; amido radicals such as -C(O)N(R₂₈)₂ and -N(R₂₈)COR₂₈; sulfonyl radicals such as -SO₂R₂₈; sulfinyl radicals such as -SO(R₂₈)₂; thionyl radicals such as -SR₂₈; phosphonyl radicals such as -P(O)(R₂₈)₂; as well as halogen, nitro, cyano, trifluoromethyl and hydroxy radicals and the like, wherein each R₂₈ can be a monovalent hydrocarbon radical such as alkyl, aryl, alkaryl, aralkyl and cycloalkyl radicals, with the provisos that in amino substituents such as -N(R₂₈)₂, each R₂₈ taken together can also compromise a divalent bridging group that forms a heterocyclic radical with the nitrogen atom, in amido substituents such as -C(O)N(R₂₈)₂ and -N(R₂₈)COR₂₈, each R₂₈ bonded to N can also be hydrogen, and in phosphonyl substituents such as -P(O)(R₂₈)₂, one R₂₈ can by hydrogen. It is to be understood that each R₂₈ group in a particular substituent may be the same or different. Such hydrocarbon substituent radicals could possibly in turn be substituted with a permissible substituent such as already herein outlined above.

Preferred alkylene oxides which can provide random or block oxyalkylene units in the complex hydrophobe compounds represented by formulae (i) and (ii) include alkylene oxides such as ethylene oxide, propylene oxide, 1,2-butylene oxide, 2,3-butylene oxide, 1,2- and 2,3-pentylene oxide, cyclohexylene oxide, 1,2-hexylene oxide, 1,2-octylene oxide, 1,2-decylene oxide, and higher alpha-olefin epoxides; epoxidized fatty alcohols such as epoxidized soybean fatty alcohols and epoxidized linseed fatty alcohols; aromatic epoxides such as styrene oxide and 2-methylstyrene oxide; and hydroxy- and halogen-substituted alkylene oxides such as glycidol, epichlorohydrin and epibromohydrin. The preferred alkylene oxides are ethylene oxide and propylene oxide. Also included can be hydrocarbon residues from substituted and unsubstituted cyclic esters or ethers such as oxetane and tetrahydrofuran. It is understood that the compounds represented by formulae (i) and (ii) herein can contain random and/or block oxyalkylene units as well as mixtures of oxyalkylene units. It is further understood that each R₄, R₅, R₁₀, R₁₃ and R₁₉ group in a particular substituent for all positive values of x, y, f, g and j respectively can be the same or different.

The values of x, y, z, f, g and j are not narrowly critical and can vary over a wide range. For example, the values of x, y, z, f, g and j can range from 0 to about 200 or greater, preferably from about 0 to about 100 or greater, and more preferably from about 0 to about 50 or greater. Any desired amount of alkylene oxide can be employed, for example, from 0 to about 90 weight percent or greater based on the weight of the complex hydrophobe compound.

Referring to the general formulae (i) and (ii) above, it is appreciated that when R₁, R₂, R₇ and/or R₈ are a hydrocarbon residue of formulae (iii) above, the resulting compound may include any permissible number and combination of hydrophobic groups of the dendritic or cascading type. Such compounds included in the above general formulae should be easily ascertainable by one skilled in the art.

In a preferred embodiment of this invention, the structure shown in formula (iii) can be a residue of the reaction product between epichlorohydrin and an alcohol, including those alcohols whose residues can be described by formula (iii), or a phenolic, or a mixture thereof. The structures which result can be described as complex hydrophobes of a dendritic or of a cascading nature. Pictorially, they can be described as shown below:

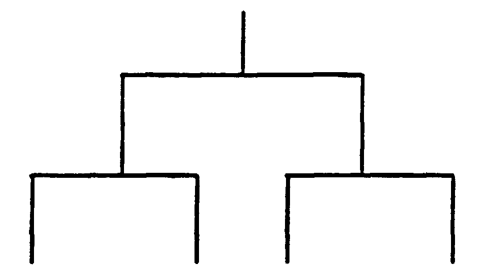

Illustrative starter components useful for making the complex hydrophobe compounds of this invention include those compounds having active hydrogens such as alcohols (mono-, di- and polyhydric alcohols), phenols, carboxylic acids (mono-, di- and polyacids), and amines (primary and secondary). Frequently, the organic compounds contain up to about 100 or 150 carbons (in the case of polyol polymers) and can contain aliphatic and/or aromatic structures. Most often, the starter compounds are selected from the group of mono-, di- and trihydric alcohols having up to about 30 carbon atoms or greater. The organic compounds having active hydrogens can be the product of hydroformylation/hydrogenation reactions. Other useful starters can include the reaction products between epichlorohydrin and the above mentioned starter compounds.

Particularly preferred starter alcohols are primary and secondary monohydric alcohols which are branched chain such as ethanol, propanol, butanol, pentanol, hexanol, heptanol, octanol, nonanol, decanol, undecanol, dodecanol, tridecanol, tetradecanol, pentadecanol, hexadecanol, octadecanol, isopropyl alcohol, 2-ethylhexanol, sec-butanol, isobutanol, 2-pentanol, 3-pentanol and isodecanol. Particularly suitable alcohols are linear and branched primary alcohols (including mixtures) such as produced by the "Oxo" reaction of C₃ to C₂₀ olefins. The alcohols may also be cycloaliphatic such as cyclopentanol, cyclohexanol, cycloheptanol, cyclooctanol, as well as aromatic substituted aliphatic alcohols such as benzyl alcohol, phenylethyl alcohol, and phenylpropyl alcohol. Other aliphatic structures include 2-methoxyethanol.

Phenols include alkylphenyls of up to 30 carbons such as phenol, methylphenol, ethylphenol, butylphenol, heptylphenol, octylphenol, nonylphenol, dinonylphenol and decylphenol. The aromatic radicals may contain other substituents such as halide atoms.

Alcohols (polyols) having 2 or more hydroxyl groups, e.g., about two to six hydroxyl groups and have 2 to 30 carbons, include glycols such as ethylene glycol, propylene glycol, butylene glycol, pentylene glycol, hexylene glycol, neopentylene glycol, decylene glycol, diethylene glycol, triethylene glycol and dipropylene glycol. Other polyols include glycerine, 1,3-propanediol, pentaerythritol, galactitol, sorbitol, mannitol, erythritol, trimethylolethane and trimethylolpropane.

The complex hydrophobe compounds can be prepared using a number of different methods. Three methods are described below, but synthesis of these structures is not limited to just these methods.

The first method involves reaction of an unsubstituted or substituted alcohol or phenol, such as nonylphenol for example, with an epoxide-containing hydrocarbon residue, such as nonylphenol glycidyl ether. The reaction can be carried out under anhydrous conditions in the presence of at least 0.1 weight % but not more than 20 weight % of a suitable catalyst based on the starting weight of alcohol or phenol. Such a suitable catalyst can be, for example, potassium hydroxide. Use of a suitable azeotroping solvent, such as toluene or cyclohexane, can aid in removal of water from the system. The reaction temperature should be at least about 60°C and at most the boiling point of the solvent, unless the reaction is done under pressure. The reaction can be carried out under vacuum or in the absence of a solvent. The catalyst and the alcohol can be added to the solvent, and essentially all water can be removed, typically through azeotroping. Once the reaction temperature is reached, the epoxide can be added. The product can be isolated by removal of solvent. An example of this type of procedure for producing a complex hydrophobe is described in Example 1.

A second method involves reaction of a polymerizable cyclic ether, such as an epoxide, with a suitable polymerization catalyst like boron trifluoride in the presence of an initiating alcohol or phenol, referred to as the starter. The reaction can be done in a suitable polymerization solvent such as cyclohexane, which can be dried prior to polymerization/oligomerization through its azeotrope. The reaction can be carried out in the absence of a solvent. In a typical preparation, the catalyst, usually added at a level of from 0.1 mole % to 50 mole %, preferably from 0.1 mole % to 10 mole % based on the starting epoxide, and the starter, usually added at a level of from 5.0 mole % to 100 mole %, preferably from 5.0 mole % to 50 mole %, based on the starting epoxide, can be added to the solvent. The reaction temperature can be as low as -78°C to as high as the reflux temperature of the solvent at atmospheric pressure, but more preferably from 25°C to 75°C. The cyclic ether can then be added to the catalyst solution and polymerized. An example of this type of procedure for producing a complex hydrophobe is described in Example 5.

A third method involves the reaction of an unsubstituted or substituted alcohol or phenol, such as nonylphenol or hexadecanol, with a functional epoxide, such as epichlorohydrin. The starting alcohol or phenol can be added to a suitable reaction solvent, such as toluene, along with potassium hydroxide, a tetraalkyl ammonium halide, such as tetraethylammonium iodide, and water. The reaction can be carried out in the absence of a solvent. The reaction temperature can be regulated at about 65°C at which time the epichlorohydrin can be added. Varying the amount of epichlorohydrin and other ingredients can result in the formation of various dendritic-like molecules. An example of this type of procedure for producing a complex hydrophobe is described in Example 8.

The alkoxylation is conducted using a catalytically-effective amount of a catalyst, e.g., about 0.01 to 10, often about 0.5 to 5, weight percent based on the weight of a starter component, e.g., a complex hydrophobe compound having at least one active hydrogen. The catalysts should retain their activities during the alkoxylation, regardless of the amount of alkylene oxide employed. Thus, the amount of catalyst can be based on the amount of starter provided to the alkoxylation zone and not the degree of alkoxylation to be effected.

Illustrative alkoxylation catalysts useful in this invention include, for example, potassium hydroxide, diethylaluminum fluoride, oxides and hydroxides of barium and strontium, basic salts of alkaline earth metals especially calcium, calcium oxide (quicklime), calcium hydroxide (slaked line), calcium sulfate, and the like. Preferred catalysts for obtaining alkoxylation product mixtures having a narrow molecular weight distribution are disclosed in U.S. Patent 4,754,075.

This invention is not intended to be limited in any manner by the permissible catalysts.

Normally, the catalyst and the starter component are admixed and then the alkylene oxide is added at the reaction temperature until the desired amount of alkylene oxide has been added, then the product is neutralized and can be finished, if desired, in any procedure including stripping unreacted starter material from the product mixture, filtration, or further reaction.

The temperature of the alkoxylation is sufficient to provide a suitable rate of reaction and without degradation of the reactants or reaction products. Often, the temperatures range from between about 50°C and 270°C, e.g. from about 100°C to 200°C. The pressure may also vary widely, but when low-boiling alkylene oxides such as ethylene oxide and propylene oxide are employed, a pressurized reactor is preferably used.

The alkoxylation reaction medium is preferably agitated to ensure a good dispersal of the reactants and catalyst throughout the reaction medium. Also, the alkylene oxide is usually added at a rate approximating that which it can be reacted.

Neutralization may assist in the recovery of the catalyst from the alkoxylation product mixture. When neutralizing, acids that may tend to form catalyst-containing gel structures or solids that clog filtering apparatus should be avoided. Conveniently, sulfuric acid, phosphoric acid, propionic acid and benzoic acid are used.

The above procedure represents but one of many equally viable versions of suitable alkoxylation processes. Other versions are possible through combinations of the options available in the various process steps.

The catalytic alkoxylation reactions of this invention can be effected, for example, by conventional methods such as (1) batch processes; (2) continuous fixed-bed processes; and (3) continuous fluidized reactor processes. In a batch reactor, the catalyst is kept suspended in the reactant by shaking or stirring. In a fluidized reactor, the catalyst is at a particular original level. As the velocity of the reactant stream is increased, the catalyst bed expands upward to a second level, and at a critical velocity it enters into violent turbulence. The fluidized reactor is particularly useful for removing or supplying the heat necessary to maintain a fixed catalyst temperature. The fluidized reactor can usually be employed only on a rather large scale since good fluidization requires a reactor larger than about 3.81 cm (1.5 inches) in diameter.

As indicated above, the end groups described by R₆, R₁₁, R₁₄ and R₂₀ can be a variety of structures including sulfates. The sulfation of a hydroxyl containing end group can be carried out using one of several methods, such as with SO₃ or sulfamic acid.

In the sulfation reaction using sulfamic acid, a complex hydrophobe alkoxylate, for example ethoxylated 1,3-bis(nonylphenoxy)-2-propanol, is dried at high temperature, at or about 100°C for example, and low pressure, at or below 50 mm Hg for example. The ethoxylate is cooled to a reaction temperature at or about 60°C, for example, and sulfamic acid is charged. The reaction temperature is kept at or about 110°C. Once the reaction is complete, an amount of a mono- or disubstituted alkanolamine can be added to remove residual acid, and prevent hydrolysis upon introduction of water. A diluting solvent, such as ethanol and/or water, can be added along with the alkanolamine. An example of a preparation of a sulfate using sulfamic acid is shown in Example 11.

The alkoxylation products produced by the alkoxylation processes of this invention, including the complex hydrophobe compounds having at least one active hydrogen, can undergo further reaction(s) to afford desired derivatives thereof. Such permissible derivatization reactions can be carried out in accordance with conventional procedures known in the art. Illustrative derivatization reactions include, for example, esterification, etherification, amination, alkylation, hydrogenation, dehydrogenation, reduction, acylation, condensation, carboxylation, oxidation, silylation and the like, including permissible combinations thereof. This invention is not intended to be limited in any manner by the permissible derivatization reactions or permissible derivatives of alkoxylation products and complex hydrophobe compounds.

More particularly, the hydroxyl-terminated alkoxylation products and complex hydrophobe compounds of this invention can undergo any of the known reactions of hydroxyl groups illustrative of which are reactions with acyl halides to form esters; with ammonia, a nitrile, or hydrogen cyanide to form amines; with alkyl acid sulfates to form disulfates; with carboxylic acids and acid anhydrides to form esters and polyesters; with alkali metals to form salts; with ketenes to form esters; with acid anhydrides to form carboxylic acids; with oxygen to form aldehydes and carboxylic acids; ring-opening reactions with lactones, tetrahydrofuran; dehydrogenation to form aldehydes, isocyanates to form urethanes.

Alkoxylation product mixtures prepared by the processes of this invention comprise alkoxylation species that can be represented by the formulae (i) and/or (ii) above. The alkoxylation product mixtures of this invention can be characterized as the condensation reaction products of alkylene oxides and complex hydrophobe compounds having at least one active hydrogen in which the mole ratio of reacted alkylene oxide per active hydrogen is at least about 4, say, about 4 to 16 or 24, preferably about 5 to 12. The product mixtures can have at least one alkoxylation moiety which constitutes at least about 10, say, about 20 to 30 or 40, and most often about 20 to 30, weight percent of the composition. The alkoxylation mixtures of this invention also can have a relatively symmetrical distribution. Hence, the portion of the product mixture having three or more oxyalkylene unit groups (per active hydrogen site of the complex hydrophobe compound) than the peak alkoxylation specie is relatively minor, e.g., often less than about 12, say, less than 10, and often about 1 to 10, weight percent of the mixture. Similarly, the alkoxylation species having fewer oxyalkylene groups (per active hydrogen site of the complex hydrophobe compound) by three or more oxyalkylene groups from the average peak alkoxylation species is usually relatively minor, e.g., less than about 15, say, less than about 10, often about 0.5 to 10, weight percent of the composition. Generally, the one oxyalkylene unit higher and the one oxyalkylene unit lower alkoxylates in respect to the most prevalent alkoxylation specie are present in a weight ratio to the most prevalent alkoxylation specie of about 0.6:1 to 1:1.

The nonionic surfactant compounds encompassed by formulae (i) and (I) may be converted to anionic surfactant compounds by chemically modifying a terminal or pendant hydroxyl group thereof. One such approach includes the steps of reacting the nonionic surfactant compounds encompassed by formulae (i) and (I) with sulfuric acid or sulfamic acid and then optionally converting the resulting free sulfate esters (when sulfuric acid is used) or ammonium salts (when sulfamic acid is used) into corresponding alkali metal or alkanolamine salts such as monoethanolamine by conventional procedures.

Another approach includes the steps of reacting the nonionic surfactant compounds encompassed by formulae (i) and (I) with phosphorus pentoxide or phosphorus oxychloride and then optionally converting the resulting free phosphate esters into corresponding salts with alkali metal, ammonium or alkanolamine salts whereby mixtures of mono-esters and di-esters are obtained. These mixtures may be used as an anionic surfactant without being isolated into their constituents.

A further approach includes the steps of reacting the nonionic surfactant compounds encompassed by formulae (i) and (I) with maleic anhydride, reacting resultant maleate esters with an alkali metal bisulfite and then optionally converting the resulting alkali metal sulfosuccinates into corresponding free acids or ammonium or alkanolamine salts. When at least one mole of maleic anhydride is used relative one mole of the compounds of the formula (i) and (I) in the above reaction, mixtures of half ester isomers having a sulfo group attached to either alpha or beta position relative to the terminal carboxyl group. These mixtures may also be used as an anionic surfactant without isolation. Conversely, when at least two moles of the compounds of the formulae (i) and (I) are reacted with one mole of maleic anhydride, di-esters are obtained.

Preferred macromonomer compounds useful in this invention include those represented by the formulae: 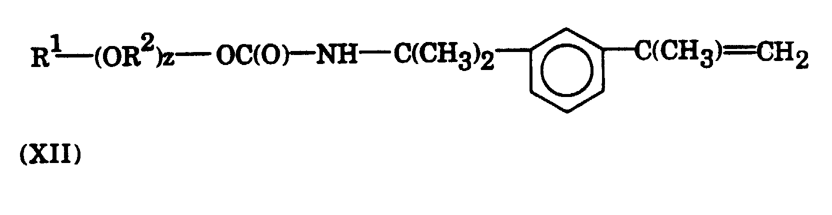 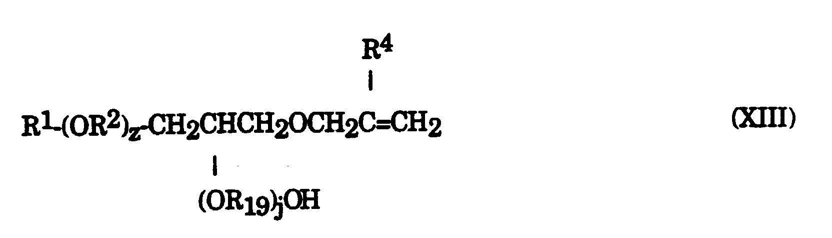 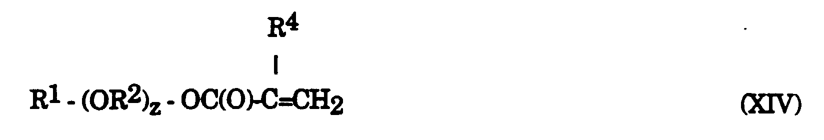 wherein R¹, R², R⁴, R₁₉, z and j are as defined herein.

The macromonomer compounds useful in this invention can undergo further reaction(s) to afford desired derivatives thereof. Such permissible derivatization reactions can be carried out in accordance with conventional procedures known in the art. Illustrative derivatization reactions include, for example, esterification, etherification, alkoxylation, animation, alkylation, hydrogenation, dehydrogenation, reduction, acylation, condensation, carboxylation, oxidation, silylation and the like, including permissible combinations thereof. In an embodiment of this invention, the macromonomers can contain carboxyl or other ionic or acid moieties. This invention is not intended to be limited in any manner by the permissible derivatization reactions or permissible derivatives of macromonomer compounds.

More particularly, the hydroxyl-terminated macromonomer compounds of this invention can undergo any of the known reactions of hydroxyl groups illustrative of which are reactions with acyl halides to form esters; with ammonia, a nitrile, or hydrogen cyanide to form amines; with alkyl acid sulfates to form disulfates; with carboxylic acids and acid anhydrides to form esters and polyesters; with alkali metals to form salts; with ketenes to form esters; with acid anhydrides to form carboxylic acids; with oxygen to form aldehydes and carboxylic acids; ring-opening reactions with lactones, tetrahydrofuran; dehydrogenation to form aldehydes, isocyanates to form urethanes.

The monoethylenically unsaturated macromonomer component is subject to considerably variation within the formula presented previously. The essence of the maromonomer is a complex hydrophobe carrying a polyethoxylate chain (which may include some polypropoxylate groups) and which is terminated with at least one hydroxy group. When the hydroxy-terminated polyethoxylate complex hydrophobe used herein is reacted with a monoethylenically unsaturated monoisocyanate, for example, the result is a monoethylenically unsaturated urethane in which a complex hydrophobe polyethoxylate structure is associated with a copolymerizable monoethylenic group via a urethane linkage.

The monoethylenically unsaturated compound used to provide the monoethylenically unsaturated macromonomer is subject to wide variation. Any copolymerizable unsaturation may be employed, such as acrylate and methacrylate unsaturation. One may also use allylic unsaturation, as provided by allyl alcohol. These, preferably in the form of a hydroxy-fractional derivative, as is obtained by reacting a C₂-C₄ monoepoxide, like ethylene oxide, propylene oxide or butylene oxide, with acrylic or methacrylic acid to form an hydroxy ester, are reacted in equimolar proportions with an organic compound, such as toluene diisocyanate or isophorone diisocyanate. The preferred monoethylenic monoisocyanate is styryl, as in alpha, alpha-dimethyl-m-isopropenyl benzyl isocyanate. Other suitable organic compounds include, for example, monoethylenically unsaturated esters, ethers, amides, ureas, anhydrides and other urethanes.

The polymers of this invention can be prepared via a variety of polymerization techniques known to those skilled in the art. The technique of polymerization influences the microstructure, monomer sequence distribution in the polymer backbone and its molecular weight to influence the performance of the polymer. Illustrative polymerization techniques include, for example, conventional and staged emulsion polymerization via batch, semi-continuous, or continuous processes, micellar polymerization, inverse emulsion polymerization, solution polymerization, non-aqueous dispersion polymerization, interfacial polymerization, emulsion polymerization, suspension polymerization, precipitation polymerization, addition polymerizations such as free radical, anionic, cationic or metal coordination methods, and the like.

The thickeners of this invention possess structural attributes of two entirely different types of thickeners (those which thicken by pH dependent solubilization, e.g., alkali solubilization, of a high molecular weight entity, and those which thicken due to association), and this may account for the superior thickener properties which are obtained herein.

The aqueous emulsion copolymerization is entirely conventional. To obtain an estimate of thickening efficiency, the product can be diluted with water to about 1% solids content and then adjust the pH to solubilize the polymer or neutralized with alkali. The usual alkali is ammonium hydroxide, but sodium and potassium hydroxide, and even amines, like triethylamine, may be used for neutralization. The usual acid is sulfuric acid, acetic acid and the like. After neutralization or adjustment to appropriate pH, the product dissolves in the water to provide an increase in the viscosity. In the normal mode of addition, the unsolubilized or unneutralized thickener is added to a paint and then the pH is adjusted or neutralized. This facilitates handling the thickener because it has a lower viscosity before pH adjustment or neutralization. This procedure also makes more water available for the paint formulation.

The polymers of this invention are preferably produced by conventional aqueous emulsion polymerization techniques, using appropriate emulsifiers for emulsifying the monomers and for maintaining the polymer obtained in a suitable, dispersed condition. Commonly used anionic surfactants such as sodium lauryl sulfate, dodecylbenzene sulfonate and ethoxylated fatty alcohol sulfate can be used as emulsifiers. The emulsifier may be used in a proportion of 1/2 to 6% of the weight monomers.

Preferably, water-soluble initiators such as alkali metal or ammonium persulfate are used in amounts from 0.01 to 1.0% on the weight of monomers. A gradual addition thermal process employed at temperatures between 60°C to 100°C is preferred over redox systems.

The polymerization system may contain small amounts (0.01 to 5% by weight, based on monomer weight) of the chain transfer agent mercaptans such as hydroxyethyl mercaptan, β-mercaptopropionic acid and alkyl mercaptans containing from about 4 to 22 carbon atoms, e.g., ethyl hexyl mercapto propionate and tertiary dodecyl mercaptan, and the like. The use of mercaptan modifier reduces the molecular weight of the polymer and therefore its thickening efficiency.

The polymers of this invention may further be modified by introducing an amount of component (D), namely, one or more polyethylenically unsaturated copolymerizable monomers effective for crosslinking, such as diallylphthalate, divinylbenzene, allyl methacrylate, trimethylol propane triacrylate, ethyleneglycol diacrylate or dimethacrylate, 1,6-hexanediol diacrylate or dimethylacrylate, diallyl benzene, and the like. Thus, from about 0.05 or less to about 20% or greater of such polyethylenically unsaturated compound based on total weight of monomer may be included in the composition forming the polymer. The resulting polymers are either highly branched or in the form of three-dimensional networks. In the neutralized salt form, those networks swell in an aqueous system to act as a highly efficient thickener.

Other illustrative polyethylenically unsaturated monomers useful in this invention include, for example, any copolymerizable compound which contains two or more nonconjugated points of ethylenic unsaturation or two or more nonconjugated vinylidene groups of the structure, CH₂=C=, such as divinyltoluene, trivinylbenzene, divinylnaphthalene, trimethylene glycol diacrylate or dimethacrylate, 2-ethylhexane-1,3-dimethyacrylate, divinylxylene, divinylethylbenzene, divinyl ether, divinyl sulfone, allyl ethers of polyhdric compounds such as of glycerol, pentaerythritol, sorbitol, sucrose and resorcinol, divinylketone, divinylsulfide, allyl acrylate, diallyl maleate, diallyl fumarate, diallyl phthalate, diallyl succinate, diallyl carbonate, diallyl malonate, diallyl ozalate, diallyl adipate, diallyl sebacate, diallyl tartrate, diallyl silicate, triallyl tricarballylate, triallyl aconitate, triallyl citrate, triallyl phosphate, N,N-methylenediacrylamide, N,N'-methylenedimethacrylamide, N,N'-ethylidenediacrylamide and 1,2-di-(a-methylmethylenesulfonamide)-ethylene.

The polymer may be utilized in a variety of ways to provide the thickener or thickened compositions of this invention. For example, the polymer, while in aqueous dispersion or dry form, may be blended into an aqueous system to be thickened followed by addition of a pH adjusting agent, e.g., neutralizing agent. Alternatively, the polymer may first be solubilized or neutralized in aqueous dispersion form and then blended with the aqueous system. Preferably, if co-thickening by a surfactant is desired, the components are separately blended (as dry components or as dispersions or slurries) into an aqueous dispersion to be thickened, followed by the pH adjustment step, e.g., neutralization step. Although aqueous concentrates of the polymer in unsolubilized form, e.g., in acid form, and the surfactant may be formed and added to an aqueous dispersion to be thickened as needed, followed by pH adjustment, e.g., neutralization, such concentrates tend to be too viscous for easy handling. It is nevertheless possible to prepare either a dry blend or an aqueous, high solids composition which is sufficiently low in viscosity as to be pumpable or pourable, and then to further thicken the admixture by addition of alkaline or acidic materials.

The polymer thickener may be provided in a dry state in number of ways. For example, the unsolubilized polymer may be spray or drum dried and, if desired, blended with a surfactant cothickener. However, it is also possible to spray dry or otherwise dehydrate the solubilized polymer thickener, and then reconstitute the aqueous thickener dispersion at a future time and place by agitation in a aqueous medium, provided the pH of the dispersion is maintained at an appropriate value, e.g., at pH 7 or higher for neutralization.

The more usual method of application of the dispersion of this invention for aqueous thickening is to add the aqueous dispersion of the polymer to the medium to be thickened and, after mixing, to introduce an alkaline or acidic material to ionize component (A). The major portion of the thickening effect is usually obtained in a few minutes upon pH adjustment. In the presence of high concentrations of electrolytes, the viscosity development may take much longer. This method of applying a polymer to an aqueous system before pH adjustment enables one to handle a high solids thickener in a non-viscous state, to obtain uniform blend, and then to convert to a highly viscous condition by the simple addition of an alkaline or acidic material to bring the pH of the system to an appropriate value.

The aqueous solutions thickened with the neutralized polymers of this invention exhibit good viscosity stability even at a pH as high as 13. The polymer may be used to thicken compositions under acidic conditions in the presence of a relatively large amount of surfactants wherein the thickened composition, for example, an aqueous system, has a pH below 7, even as low as 1.

An enhancement of thickening (herein termed "co-thickening") can result upon the addition of a surfactant to an aqueous system containing the polymer of this invention, when the polymer is solubilized. In some cases the thickening can be enhanced up to about 40 times the viscosity afforded by the solubilized polymer alone. A wide range of surfactants may be used. Although trace amounts of surfactant may be residually present from the polymerization of the monomers comprising the polymer (for example, whatever may remain of the about 1.5 weight percent surfactant on monomers), such amounts of surfactant are not believed to result in any measurable co-thickening.

On the basis of an aqueous system containing about 0.1 to 5% by weight of polymer solids, a useful amount of surfactant for optimum co-thickening is about 0.1 to 1.0% by weight of the total system. As indicated, the amounts of polymer and surfactant cothickener may vary widely, even outside these ranges, depending on polymer and surfactant type and other components of the aqueous system to be thickened. However, the co-thickening can reach a maximum as surfactant is added and then decreases as more surfactant is added. Hence, it may be uneconomical to employ surfactant in amounts outside the stated concentrations and polymer/surfactant ratios, but this can be determined in a routine manner in each case.

The preferred method of application of the polymer and the surfactant for aqueous thickening is to add in any sequence the polymer and the surfactant to the medium to be thickened and, after mixing, to introduce an alkaline or acidic material to adjust the pH. This method of applying polymer and surfactant to an aqueous system before pH adjustment enables one to handle a high solids thickener in a non-viscous state, to obtain a uniform blend, and then to convert to a highly viscous condition by the simple addition of an alkaline or acidic material to bring the pH of the system to an appropriate value. However, the pH of the aqueous system may also be adjusted before addition of the surfactant.

The surfactants which may be used include nonionics and anionics, singly or in combination, the selection necessarily depending upon compatibility with other ingredients of the thickened or thickenable dispersions of this invention. Cationic and amphoteric surfactants may also be used provided they are compatible with the polymer and other ingredients of the aqueous system, or are used in such small amounts as not to cause incompatibility.

Suitable anionic surfactants that may be used include the higher fatty alcohol sulfates such as the sodium or potassium salt of the sulfates of alcohols having from 8 to 18 carbon atoms, alkali metal salts or amine salts of high fatty acid having 8 to 18 carbon atoms, and sulfonated alkyl aryl compounds such as sodium dodecyl benzene sulfonate. Examples of nonionic surfactants include alkylphenoxypolyethoxyethanols having alkyl groups of about 7 to 18 carbon atoms and about 9 to 40 or more oxyethylene units such as octylphenoxy-polyethoxyethanols, dodecylphenoxypolyethoxy-ethanols; ethylene oxide derivatives of long-chain carboxylic acids, such as lauric, myristic, palmitic, oleic; ethylene oxide condensates of long-chain alcohols such as lauryl or cetyl alcohol.

Examples of cationic surfactants include lauryl pyridinium chloride, octylbenzyltrimethyl-ammonium chloride, dodecyltrimethylammonium chloride condensates of primary fatty amines and ethylene oxide.

The foregoing and numerous other useful nonionic, anionic, cationic, and amphoteric surfactants are described in the literature, such as McCutcheon's Detergents & Emulsifiers 1981 Annual, North America Edition, MC Publishing Company, Glen Rock, NJ 07452, U.S.A..

In general, solvents and non-solvents (or mixtures of solvents, non-solvents other organics and volatiles) can be used to manipulate the viscosity of polymer containing systems. In the examples herein, it is interesting to note how mineral spirits act like co-thickener, and how the water solubility of the other solvent influences how much mineral spirits can be added before the solution separates into a two phase system. The co-thickening with mineral spirits has utility in textile printing pastes, and in waterborne automotive basecoats. These systems usually contain mineral spirits (because of the pigments used therein), so that the mineral spirits provide an economical way of increasing viscosity and improving the efficiency of the thickener.

The amount of the polymer that may be dissolved in any given aqueous composition may fall within a wide range depending on the particular viscosity desired.

Thus, although any effective amount of the polymer may be employed for dissolution, typically from about 0.05 to about 20%, preferably from about 0.1 to about 5%, and most preferably from about 0.1 to about 3% by weight, based on the weight of the final aqueous composition including polymer is used.

For latex paint compositions, the polymer may be dissolved therein in an amount of from about 0.05 to about 5%, and preferably from about 0.1 to about 3% by weight, based on the weight of the total composition including polymer.

The polymers of this invention may be employed as thickeners for controlling viscosity of any aqueous based composition. An aqueous based composition is an aqueous composition as herein defined to be a composition wherein water comprises at least 10% by weight of the total composition (including 100% water).

For example, aqueous dispersions, emulsions, suspensions, solutions, and slurries may be thickened by the polymers of this invention.

Typical aqueous compositions include compositions to be applied to textiles such as latex adhesives, warp sizes, backings for rugs and other pile fabrics. The polymer may also be used when thickening is desired in the purification of raw water such as the saline water used in the recovery of oil from exhausted oil wells by water flooding techniques. Other aqueous coatings compositions to which the polymer can be added for thickening purposes include drilling muds, caulks, adhesives, coating compositions such as paper coatings, furniture finishes, ink compositions, latex paints, and foundary core washes.

Preferably, the polymer is used to thicken aqueous coating compositions, and more preferably latex paint compositions. Examples of suitable latex paint compositions include those based on resins or binders of acrylonitrile, copolymers of acrylonitrile wherein the comonomer is a diene like isoprene, butadiene or chloroprene, homopolymers of styrene, homopolymers and copolymers of vinyl halide resins such as vinyl chloride, vinylidene chloride or vinyl esters such as vinyl acetate, vinyl acetate homopolymers and copolymers, copolymers of styrene and unsaturated acid anydrides like maleic anhydrides, homopolymers and copolymers of acrylic and methacrylic acid and their esters and derivatives, polybutadiene, polyisoprene, butyl rubber, natural rubber, ethylene-propylene copolymers, olefins resins like polyethylene and polypropylene, polyvinyl alcohol, carboxylated natural and synthetic latices, epoxies, epoxy esters and similar polymeric latex materials.

Latex paint compositions are well known in the art and typically comprise an emulsion, dispersion or suspension of discrete particles of resin binder and pigment in water. Optional ingedients typicaly include thickeners, antifoam agents, plasticizers, surfactants and coalescing agents.

The polymers described herein are useful in a variety of aqueous systems, such as textile coatings (woven and nonwoven), latex paint formulations, cosmetic formulations, pigment dispersions and slurries, dentrifrices, hand lotions, liquid detergents, quenchants, agricultural chemicals, concrete additives, transmission fluids, waste water treatment (flocculants), turbulent drag reduction, aircraft anti-icing, automation coatings (OEM and refinish), architectural coatings and industrial coatings.

Other applications include, for example, paper making, mineral processing, brine viscosification, superabsorbency, enhanced oil recovery, personal care products, biomedical, and pharmaceutical.

The macromonomers of this invention are particularly useful as an emulsifier in the emulsion or dispersion polymerization of ethylenically unsaturated monomers. Examples of monomers include acrylic monomers such as acrylic acid, methyl acrylate, butyl acrylate, 2 ethylhexyl acrylate, methyl methacrylate, acrylonitrile, acrylamide and 2-hydroxethyl acrylate; aromatic monomers such as styrene and divinylbenzene; vinyl esters such as vinyl acetate; halogen-containing monomers such as vinyl chloride and vinylidene chloride; conjugated diene monomers such as butadiene, isoprene and chloroprene; ethylene, maleic anhydride and methyl maleate.

Any known initiator such as hydrogen peroxide, potassium persulsfate, azobisisobutyronitrile and benzoyl peroxide may be used in the emulsion polymerization in combination with a known polymerization promoter such as sodium bisulfite and ammonium ferrous sulfate.

The macromonomers of this invention may be used in an amount of 0.1 to 20%, preferably 0.2 to 5.0% by weight of the total monomers singly or in combination with a conventional emulsifiers or protective colloid.

The resulting polymer emulsions or dispersion may be applied to woods, metals, paper, textiles, and concrete structures as an adhesive, coating agent or reinforcing agent.

The macromonomer compounds of this invention find use not only as an emulsifier or dispersant of various materials such as monomers in the emulsion or suspension polymerization, waxes, dyes, pigments and pesticides, but also as latex binders and as post-treating agents for textile materials and antistatic agents for plastic products. By the use of the macromonomers of this invention, defects of conventional surfactants remaining after use may be alleviated.

The macromonomer compounds of this invention can be homopolymerized or copolymerized with conventional monomers via a variety of polymerization techniques known to those skilled in the art. The technique of polymerization influences the microstructure, monomer sequence distribution in the polymer backbone and its molecular weight to influence the performance of the polymer. Illustrative polymerization techniques include, for example, conventional and staged emulsion polymerization via batch, semi-continuous, or continuous processes, inverse emulsion polymerization, solution polymerization, non-aqueous dispersion polymerization, interfacial polymerization, emulsion polymerization, suspension polymerization, precipitation polymerization, addition polymerizations such as free radical, anionic and cationic or metal coordination methods.

The surfactant compounds of this invention can be used wherever there is a need to increase surface activity. They are particularly valuable where process conditions demand the greatest efficiency from water, e.g., in wetting, penetrating, emulsifying, lubricating and dispersing. Illustrative applications include, for example, agriculture, e.g., emulsifiers and wetters, herbicidal adjuvants and fruit washes; cleaners, e.g., household detergents, dry cleaning detergents, industrial hand cleaners, detergent/sanitizers, solvent degreasers, metal cleaners, hard surface cleaners, commercial laundry detergents and car wash detergents; dust wetting, e.g., coal mines, ceramic industries and foundries; leather, e.g., hidesoaking, degreasing, fatliquor stabilization, tanning and dyeing; paint, e.g., emulsion polymerization of latexes latex stabilization, pigment wetting and dispersion; paper, e.g., pulping, absorbent papers, de-inking waste water, wet-felt washing and adhesives; and textiles, e.g., greige goods scouring, bleaching, carbonizing of wool, scouring of cotton, wool and polyester/cotton blends, wetting and rewetting agents, desizing of cotton and polyester/cotton blends, polyethylene softener emulsifiers, mineral oil and solvent emulsifiers, fiber lubricant emulsifiers, emulsion polymerization, dyeing and finishing of synthetics, naturals and blends, dye leveling agents and resin bath additives.

Additionally, the compounds of this invention may be useful as components of sanitizing solutions for use on food processing equipment and utensils and on beverage containers, including milk containers and equipment; emulsifiers and/or surface active agents in the manufacture of articles or components of articles intended for use in producing, manufacturing, packing, processing, preparing, treating, packaging, transporting or holding food; inert (or occasionally active) ingredients for use in formulations applied to growing crops or to raw agricultural commodities after harvest; and inert (or occassionally active) ingredients for use in formulations applied to animals.

As used herein, the term "complex hydrophobe" is contemplated to include all hydrocarbon compounds having 2 or more hydrophobe groups, e.g., bis-dodecylphenyl, bis-nonylphenyl and bis-octylphenyl.

For purposes of this invention, the term "hydrocarbon" is contemplated to include all compounds having at least one hydrogen and one carbon atom. In a broad aspect, the permissible hydrocarbons include acyclic and cyclic, branched and unbranched, carbocyclic and heterocyclic, aromatic and nonaromatic organic compounds which can be substituted or unsubstituted.

As used herein, the term "substituted" is contemplated to include all substituents of organic compounds unless otherwise indicated. In a broad aspect, the permissible substituents include acyclic and cyclic, branched and unbranched, carbocyclic and heterocyclic, aromatic and nonaromatic substituents of organic compounds. Illustrative substituents include, for example, alkyl, alkyloxy, aryl, aryloxy, hydroxy, hydroxyalkyl, amino, aminoalkyl, halogen and the like in which the number of carbons can range from 1 to about 20 or more, preferably from 1 to about 12. The permissible substituents can be one or more and the same or different for appropriate organic compounds. This invention is not intended to be limited in any manner by the permissible substituents of organic compounds.

The invention is illustrated by the following examples. The viscosity values in the tables in cps correspond to mPa·s.

### Example 1

### Preparation of 1,3-Bis(nonylphenoxy)-2-propanol

To a five neck, two liter round bottom flask equipped with an addition funnel, thermometer, nitrogen dispersant tube, mechanical stirrer, and a decanting head with a water-cooled condenser were added 220 grams (1.00 mole) of nonylphenol and 250 milliliters of cyclohexane. The solution was then heated to reflux and 2.8 grams (1.3 wt. % based on nonylphenol) of potassium hydroxide in 10 milliliters of water was slowly added to the flask. After essentially all the water was recovered in the decanting head (10 milliliters + 1 milliliter formed), 250.7 grams (0.91 mole) of nonylphenyl glycidyl ether as added dropwise. During the addition of the glycidyl ether, the reaction temperature was maintained between 60 and 80°C. After the addition was complete, the solution was refluxed for four hours. The contents of the flask were then washed with a five percent aqueous solution of phosphoric acid, and the organic layer was separated from the water layer and washed twice with deionized water. The reaction mixture was then placed in a one liter round bottom flask, and the remaining cyclohexane and unreacted nonylphenol were recovered by distillation, first at atmospheric pressure, then under vacuum at 0.2 mm Hg. The kettle temperature was not allowed to exceed 180°C during the distillation to prevent discoloration of the product. The concentrated solution was then refiltered to give 425 grams of a pale-yellow liquid. End-group MW analysis gave a molecular weight of 506.8 (theoretical MW = 496.8). Ir and nmr spectra were identical to previously recorded spectra for the compound.

### Example 2

### Preparation of 1,3-Bis(nonylphenoxy)-2-propanol

To a five neck, two liter round bottom flask, equipped with an addition funnel, thermometer, nitrogen dispersant tube, mechanical stirrer, and a decanting head with a water-cooled condenser, were added 300 milliliters of cyclohexane and 451.7 grams (2.05 mole) of nonylphenol. The solution was then heated to reflux and 58.9 grams (1.05 mole) of potassium hydroxide in 60 milliliters of water was slowly added via the addition funnel. After essentially all the water was recovered in the decanting head (60 milliliter + 19 milliliters formed), the reaction was cooled to 40°C, and 92.5 grams (1.00 mole) of epichlorohydrin was slowly added. During the addition, the reaction temperature was maintained below 60°C by controlling the rate of epichlorohydrin addition. After all the epichlorohydrin was added, the solution was allowed to stir for one hour, and then brought to reflux for an additional three hours. The reaction mixture was then filtered under vacuum through a steam-jacketed Buchner funnel to remove the potassium chloride formed as a by-product. The filtration process was performed a total of three times to remove the majority of the salts. The reaction mixture was then placed in a one liter round bottom flask, and the remaining cyclohexane and unreacted nonylphenol were recovered by distillation, first at atmospheric pressure, then under vacuum at 0.2 mm Hg. The kettle temperature was not allowed to exceed 180°C during the distillation to prevent discoloration of the product. The concentrated solution was then refiltered to give 275 grams of a pale-yellow liquid. End-group MW analysis gave a molecular weight of 459.7 (theoretical MW = 496.8). Ir and nmr spectra were identical to previously recorded spectra for the compound.

### Example 3

### Preparation of 5 Mole Ethoxylate of 1,3-Bis(nonylphenoxy)-2-propanol

To a 500 milliliter, stainless steel, high pressure autoclave was charged 200 grams (0.40 mole) of 1,3-bis(nonylphenoxy)-2-propanol, which contained a catalytic amount of the potassium salt of the alcohol as described in Example 1. After purging the reactor with nitrogen, the alcohol was heated to 130°C with stirring, and 86.9 grams (2.0 mole) of ethylene oxide was added over a two hour period. The reaction temperature and pressure were maintained from 130°C to 140°C and 60 psig during the course of the reaction. After the addition of ethylene oxide was complete, the reaction mixture was held at 140°C for an additional hour to allow all the ethylene oxide to cook out. The reaction mixture was dumped while hot, under nitrogen, and neutralized with acetic acid to yield 285 grams of a pale-yellow liquid.

### Example 4

### Preparation of Adduct of Nonylphenyl Glycidyl Ether and 5 Mole Ethoxylate of 1,3-Bis(nonylphenoxy)-2-propanol

To a five neck, one liter, round bottom flask equipped as in Example 1 was added 119.8 grams (0.17 mole) of the 5 mole ethoxylate of 1,3-bis(nonylphenoxy)-2-propanol and 100 milliliters of cyclohexane. The mixture was refluxed (100°C) for one hour to remove residual water, and then cooled to 50°C under nitrogen to add 0.5 grams of BF₃/Et₂O. Nonylphenyl glycidyl ether (46.0 grams, 0.17 mole) was then added to the flask over a one hour period, and the reaction was heated to reflux. After three hours at reflux, the reaction mixture was transferred to a separatory funnel, while hot, and washed with a saturated aqueous solution of sodium bicarbonate. The organic layer was separated from the water layer, and washed twice with hot deionized water. The washes were performed at 50°C to facilitate the separation of the two layers. The water and cyclohexane were then evaporated from the organic layer, under vacuum, to yield 145 grams of a pale-yellow, viscous liquid. End-group molecular weight analysis gave a molecular weight of 880 (theoretical molecular weight = 993).

### Example 5

### Preparation of Poly(nonylphenol glycidyl ether)

To a 500 milliliter round bottom equipped with an overhead stirrer, nitrogen inlet, reflux condenser, additional funnel, and temperature controller was charged 1.9 grams of ethanol (22 mmoles) and 200 grams of cyclohexane. The solution was brought to 50°C. Once heated, 0.5 milliliters (4 mmoles) of BF₃/Et₂O was added using a 2 milliliter syringe. Once the acid was added, 100.0 grams of nonylphenol glycidyl ether (362 mmoles) was added dropwise so as to maintain a reaction temperature of 45°C-55°C. Once the glycidyl ether was added, the solution is refluxed for 3 hours, then cooled to about 50°C.

While hot (<60°C) the organic was transferred to a separatory funnel and was washed once with 100 milliliters of 5% sodium bicarbonate solution. The aqueous layer was drained and the organic was washed two more times with 100 milliliter portions of deionized water. The aqueous layers were decanted and the organic was dried for at least 1 hour over magnesium sulfate. Once dry the magnesium sulfate was filtered from the organic which was stripped of solvent using a rotary evaporator. The final yield of viscous polymer was 100 grams. The GPC molecular weight was Mw = 2600 and the Mn = 1700 based on monodisperse polystyrene standards.

### Example 6

### Ethoxylation of Poly(nonylphenol glycidyl ether)

To a 500 milliliter stainless steel Zipperclave was added 60.0 grams (0.035 moles based on an approximate molecular weight of 1700 gram/mole) of the resin prepared in Example 5 along with 0.5 grams of potassium hydroxide. The vessel was attached to an automated ethoxylation unit and was heated to 50°C. The vessel was continuously purged with nitrogen for 15 minutes and was then heated to 100°C where it was again continuously purged with nitrogen for another 15 minutes. The vessel was then heated to 140°C and was given a series of 6 purges by pressuring the vessel up to 80 psi, and then venting. Once the venting process was complete, the vessel was pressured to 20 psi with nitrogen.

The ethylene oxide lines were opened to the motor valves along with the main feed line on the Zipperclave. The feed was continued and the vessel pressure was regulated at 55 psi and a temperature of 140°C. The automation was designed to hold the temperature and the pressure within safe operating limits while addition of ethylene oxide proceeded through a pair of motor control valves. The feed was allowed to continue until 60.0 grams of ethylene oxide (1.362 moles) was added based on a difference weight of the feed cylinder. After the feed was complete, the reaction was allowed to continue for 1 hour after which the vessel was cooled to 60°C, purged 4 times with nitrogen to 80 psi and was dumped to a container. The final product yield was 115 grams with a theoretical yield of 120 grams. The GPC molecular weight of the product was Mw = 3550 and the MN = 2930 based on monodisperse polystyrene standards.

### Example 7

### Preparation of Poly(phenyl glycidyl ether)

To a 500 milliliter round bottom equipped with an overhead stirrer, nitrogen inlet, reflux condenser, addition funnel, and temperature controller was charged 47.06 grams of phenol (500 mmoles) and 100 grams of toluene. The solution was brought to 50°C. Once heated, 1.0 milliliter (8 mmoles) of BF₃/Et₂O was added using a 2 milliliter syringe. Once the acid was added, 68.18 grams of phenyl glycidyl ether (454 mmoles) was added dropwise so as to maintain a reaction temperature of 45°C-55°C. Once the glycidyl ether was added, the solution is refluxed for 3 hours, then cooled to about 50°C.

While hot (<60°C) the organic was transferred to a separatory funnel and was washed once with 100 milliliters of 5% sodium bicarbonate solution. The aqueous layer was drained and the organic was washed two more times with 100 milliliter portions of deionized water. The aqueous layers were decanted and the organic was dried for at least 1 hour over magnesium sulfate. Once dry the magnesium sulfate was filtered from the organic which was stripped of solvent using a rotary evaporator. The final yield of viscous polymer was 90.3 grams (with 11% unreacted phenol). The GPC molecular weight was Mw = 470 and the Mn = 310 (on average a trimer) based on monodisperse polystyrene standards.

### Example 8

### Preparation of 1,3-Bis(phenoxy)-2-propanol using the Cascading Polyol Technique

To a 1 liter round bottom flask equipped with an overhead stirrer, nitrogen inlet, reflux condenser, addition funnel, and temperature controller was charged 94.11 grams of phenol (1 mole), 12.86 grams of tetraethylammonium iodide (0.05 moles), 3.00 grams of water (0.17 moles), 42.08 grams of potassium hydroxide (0.75 moles), and 250 grams of toluene. To a 100 milliliter additional funnel was charged 23.13 grams of epichlorohydrin (0.25 moles) and 50 grams of toluene. The solution was brought to 65°C at which time the epichlorohydrin solution was added over a period of 15 minutes while maintaining a reaction temperature of 65°C ± 5°C. The reaction was allowed to proceed for 48 hours.

After 48 hours, the solution was cooled down to room temperature. The toluene solution was washed with two 250 milliliters portions of deionized water. The aqueous layers were drained off, and the toluene was removed along with unreacted phenol using a rotary evaporator. The final yield of product was 64.5 grams which was 106% of theory (residual is phenol). Final product purity was about 95% as shown by GPC.

### Example 9

### Dimerization of 1,3-Bis(phenoxy)-2-propanol using the Cascading Polyol Technique

To a 250 milliliter round bottom flask equipped with an overhead stirrer, nitrogen inlet, reflux condenser, additional funnel, and temperature controller was charged 20.03 grams of 1,3-bis-(phenoxy)-2-propanol prepared in Example 8 (82 mmoles), 2.06 grams of tetraethylammonium iodide (8 mmoles), 0.49 grams of water (27 mmoles), 6.51 grams of potassium hydroxide (116 mmoles), and 125 grams of toluene. To a 100 milliliter addition funnel was charged 3.61 grams of epichlorohydrin (39 mmoles) and 25 grams of toluene. The solution was brought to 65°C at which time the epichlorohydrin solution was added over a period of 15 minutes while maintaining a reaction temperature of 65°C ± 5°C. The reaction was allowed to proceed for 48 hours.

After 48 hours, the solution was cooled down to room temperature. The toluene solution was washed with two 250 milliliter portions of deionized water. The aqueous layers were drained off, and the toluene was removed using a rotary evaporator. The final yield of product was 21.6 grams which was 101% of theory. GPC showed two major components of the product. The first was the starting material at about 41% (Mn = 220) and the second was the coupled product at about 59% (Mn = 520).

### Example 10

### Preparation of 1,3-Bis(hexadecyloxy)-2-propanol using the Cascading Polyol Technique

To a 500 milliliter round bottom flask equipped with an overhead stirrer, nitrogen inlet, reflux condenser, additional funnel, and temperature controller was charged 60.61 grams of hexadecanol (0.25 moles), 6.18 grams of tetraethylammonium iodide (0.024 moles), 1.44 grams of water (0.082 moles), 20.20 grams of potassium hydroxide (0.36 moles), and 125 grams of toluene. To a 100 milliliter addition funnel was charged 11.10 grams of epichlorohydrin (0.12 moles) and 25 grams of toluene. The solution was brought to 65°C at which time the epichlorohydrin solution was added over a period of 15 minutes while maintaining a reaction temperature of 65°C ± 5°C. The reaction was allowed to proceed for 48 hours.

After 48 hours, the solution was cooled down to room temperature. The toluene solution was washed with two 250 milliliter portions of deionized water. The aqueous layers were drained off, and the toluene was removed using a rotary evaporator. The final yield of product was 70.9 grams which is 109% of theory (residual is hexadecanol).

### Example 11

### Sulfation of 1,3-Bis(nonylphenoxy)-2-propanol-block-(propylene oxide)₁₀-block-(ethylene ozide)₁₀

To a 250 milliliter round bottom flask equipped with an overhead stirrer, a temperature controller, and a vacuum adapter was added 75.0 grams of the material from Example 13 (49 mmoles). The kettle was then evacuated to <20 mmHg and heated to 100°C to remove any water. After 1 hour, the kettle was cooled to 60°C while under vacuum. When reaching 60°C, vacuum was broken with nitrogen and 5.3 grams of sulfamic acid (54 mmoles) was added. After charging the sulfamic acid, the kettle was heated to 110°C and evacuated to <20 mm Hg. The reaction was allowed to proceed for 3 hours.

At the end of the hold period, the kettle was cooled to 85°C and vacuum was broken with nitrogen. 1.2 grams of diethanolamine (11 mmoles) was slowly added under a blanket of nitrogen. This solution was stirred for 30 minutes. 10 grams of ethanol was added to the kettle and the temperature was regulated to 55°C. This solution was stirred for 30 minutes. The heat was removed from the kettle and 30 grams of water along with 20 grams of ethanol were added while maintaining good agitation. The solution was stirred for 15 minutes or until cooled to room temperature (<35°C).

The pH was checked by dissolving 2 grams of the product solution in 18 grams of deionized water. If the pH was below 6.5, 0.2 gram increments of diethanolamine was added until the pH is between 6.5 and 7.5.

### Example 12

### Preparation of 1,3-Bis(nonylphenoxy)-2-propanol-block-(propylene oxide)₁₀

To a 500 milliliter stainless steel Zipperclave was added 100.0 grams (0.202 moles) of 1,3-bis(nonylphenoxy)-2-propanol prepared in Example 1 along with 0.7 grams of potassium hydroxide. The vessel was attached to an automated unit and was heated to 50°C. The vessel was continuously purged with nitrogen for 15 minutes and was then heated to 100°C where it was again continuously purged with nitrogen for another 15 minutes. The vessel was then heated to 140°C and is given a series of 6 purges by pressuring the vessel up to 80 psi, and then venting. Once the venting process was completed, the vessel was pressured to 20 psi with nitrogen.

Lines connected to a cylinder which had been precharged with 117.0 grams of propylene oxide (2.02 moles) were opened to the motor valves along with the main feed line on the Zipperclave. The feed was continued and the vessel pressure was regulated at 55 psi and a temperature of 140°C. The automation was designed to hold the temperature and the pressure within safe operating limits while addition of ethylene oxide proceeded through a pair of motor control valves. The feed was allowed to continue until all of the propylene oxide had been fed. After the feed was complete, the reaction was allowed to continue for 1 hour after which the vessel was cooled to 60°C, purged 4 times with nitrogen to 80 psi and was dumped to a container. The final product yield was 211 grams with a theoretical yield of 277 grams. The GPC molecular weight of the product was Mw = 650 and the Mn = 490 based on monodisperse polystyrene standards.

### Example 13

### Preparation of 1,3-Bis(nonylphenoxy)-2-propanol-block-(propylene -oxide)₁₀-block-(ethylene oxide)₁₀

To a 500 milliliter stainless steel Zipperclave was added 75.0 grams of the propoxylate prepared in Example 12 (0.070 moles) along with 0.3 grams of potassium hydroxide. The vessel was attached to an automated ethoxylation unit and was heated to 50°C. The vessel was continuously purged with nitrogen for 15 minutes and was then heated to 100°C where it was again continuously purged with nitrogen for another 15 minutes. The vessel was then heated to 140°C and was given a series of 6 purges by pressuring the vessel up to 80 psi, and then venting. Once the venting process was completed, the vessel was pressured to 20 psi with nitrogen.

The ethylene oxide lines were opened to the motor valves along with the main feed line on the Zipperclave. The feed was continued and the vessel pressure was regulated at 55 psi and a temperature of 140°C. The automation was designed to hold the temperature and the pressure within safe operating limits while addition of ethylene oxide proceeded through a pair of motor control valves. The feed was allowed to continue until 30.7 grams ethylene oxide (0.696 moles) was added based on a difference weight of the feed cylinder. After the feed was complete, the reaction is allowed to continue for 1 hour after which the vessel was cooled to 60°C, purged 4 times with nitrogen to 80 psi and was dumped to a container. The final product yield was 99 grams with a theoretical yield of 106 grams.

### Example 14

### Preparation of Bis(nonylphenoxy) Adduct of 1,4-Butanediol Diglycidyl Ether

To a five neck, two liter round bottom flask equipped with an addition funnel, thermometer, nitrogen dispersant tube, mechanical stirrer, and a decanting head with a water-cooled condenser were added 506.8 grams (2.30 mole) of nonylphenol and 350 milliliters of cyclohexane. The solution was heated to reflux, and 6.5 grams (1.3 weight percent based on nonylphenol) of potassium hydroxide in 15 milliliters of water was slowly added to the round bottom flask. After all the water was recovered in the decanting head (15 milliliters + 2 milliliters formed), 220 grams (1.09 mole) of 1,4-butanediol diglycidyl ether was added dropwise between 60 and 80°C. After the addition was complete, the solution was refluxed for four hours. The contents of the flask were then washed with a five percent aqueous solution of phosphoric acid, and the organic layer was separated from the water layer and washed twice with deionized water. The reaction mixture was then placed in a one liter round bottom flask, and the remaining cyclohexane and unreacted nonylphenol were recovered by distillation, first at atmospheric pressure, then under vacuum at 0.2 mm Hg. The kettle temperature was not allowed to exceed 180°C during the distillation to prevent discoloration of the product. The concentrated solution was then refiltered to give 710 grams of a pale-yellow liquid. Molecular weight by end-group MW analysis was 689.9 (theoretical MW = 643.0). Ir and nmr spectra were consistent with the expected structure of the product.

### Example 15

### Preparation of 3 Mole Ethoxylate of 1,3-Bis(nonylphenoxy)-2-propanol

To a five hundred milliliter Zipperclave reactor were charged, under nitrogen, 200.1 grams (0.43 mole) of 1,3-bis(nonylphenoxy)-2-propanol prepared in Example 2 and 0.20 grams (0.1 weight percent) of BF₃/Et₂O. The reaction mixture was heated to 80°C, and 55.1 grams (1.25 mole) of ethylene oxide was fed to the reactor over a two hour period. After all the ethylene oxide was fed, the reaction mixture was allowed to cook out for one hour and then dumped hot, under nitrogen, into a jar containing 160 milliliters of a one percent aqueous solution of sodium hydroxide. The organic layer was separated from the water layer and washed twice with deionized water. The washes were performed at 90°C to facilitate the separation of the two layers. The product was then dried by azeotropic removal of the water, using cyclohexane (300 milliliters) as the entrainer. The cyclohexane was stripped off under vacuum to give a pale-yellow liquid with a molecular weight by end-group MW analysis of 601.7 (theoretical MW = 629). Ir and nmr spectra were consistent with the expected structure of the product.

### Example 16

### Preparation of 8 Mole Ethoxylate of Bis(nonylphenoxy) Adduct of 1,4-Butanediol Diglycidyl Ether

To a five hundred milliliter Zipperclave reactor were charged, under nitrogen, 150.2 grams (0.22 mole) of bis(nonylphenoxy) adduct of 1,4-butanediol diglycidyl ether prepared in Example 14 and 0.30 grams (0.2 weight percent) of BF₃/Et₂O. The reaction mixture was heated to 80°C, and 77.5 grams (1.76 mole) of ethylene oxide was fed to the reactor over a two hour period. After all the ethylene oxide was fed, the reaction mixture was allowed to cook out for one hour and then dumped hot, under nitrogen, into a jar containing 160 milliliters of a one percent aqueous solution of sodium hydroxide. The organic layer was separated from the water layer and washed twice with deionized water. The washes were performed at 90°C to facilitate the separation of the two layers. The product was then dried by azeotropic removal of the water, using cyclohexane (300 milliliters) as the entrainer. The cyclohexane was stripped off under vacuum to give a pale-yellow liquid with a molecular weight by end-group MW analysis of 1047 (theoretical MW = 995). Ir and nmr spectra were consistent with the expected structure of the product.

### Examples 17 to 21

### Preparation of Propylene Oxide and Ethylene Oxide/Propylene Oxide Copolymers of 1,3-Bis(nonylphenoxy)-2-propanol

To a 500 milliliter stainless steel autoclave was charged an amount of potassium hydroxide and starter listed in Table A below. The vessel was heated to 50° C. The vessel was continuously purged with nitrogen for 15 minutes, and was then heated to 100° C, where it was again continuously purged with nitrogen for another 15 minutes. The vessel was then heated to 140° C, and was given a series of 6 purges by pressurizing the vessel up to 80 psi, and then venting. Once the venting process was completed, the vessel was pressurized to 20 psi with nitrogen. The feed lines from an oxide feed cylinder (containing a charge of ethylene oxide or propylene oxide as identifed in Table A) to the autoclave were opened. The control system fed the oxide at a rate such that the vessel pressure was regulated at 55 psi and a temperature of 140° C. The reaction was allowed to continue for 1 hour past the end of the oxide feed. The vessel was cooled to 60° C, purged 4 times with nitrogen to 80 psi, and its contents were dumped into a tared container. The final theoretical and actual product yields and molecular weights determined by gel permeation chromatography are listed in Table A.

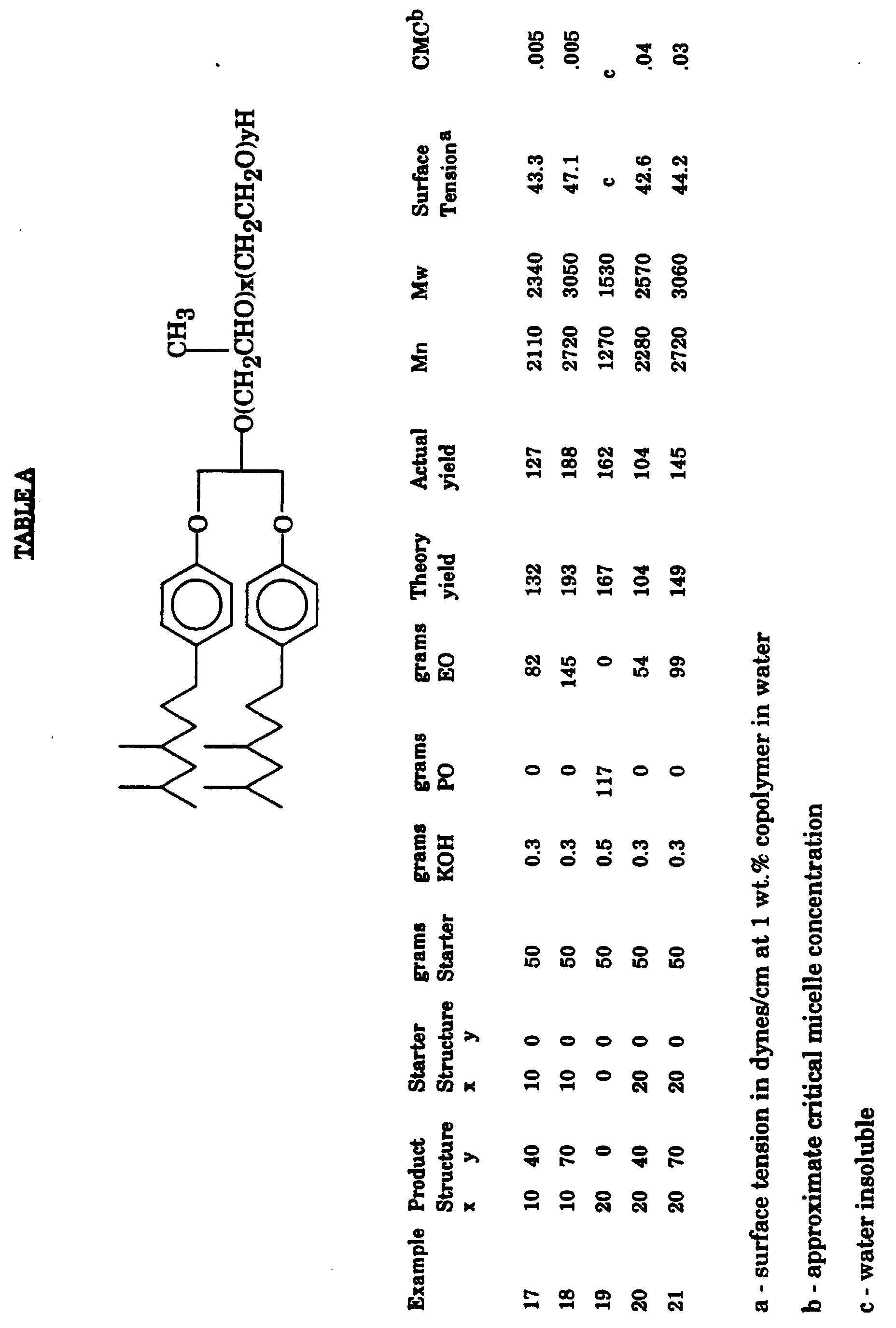

### Examples 22-33

### Preparation of Poly(nonylphenyl glycidyl ether)

An amount of ethanol listed in Table B below, and 200 grams of cyclohexane were charged to a 500 milliliter round bottom flask equipped with an overhead stirrer, nitrogen inlet, reflux condenser, addition funnel, and temperature controller. The solution was heated to 50° C after which an amount of boron trifluoride etherate listed in Table B was added. Subsequently, 100 grams of nonylphenyl glycidyl ether was added dropwise to the reaction mixture so as to maintain a reaction temperature of 45-55° C. The solution was refluxed at 83° C for an additional three hours after the completion of feed, and then cooled to 50° C. While hot (<60° C), the organic material was transferred to a separatory funnel, and was washed once with 100 milliliters of 5% sodium bicarbonate solution. The aqueous layer was washed two more times with 100 milliliter portions of deionized water. The aqueous layers were decanted, and the organic layer was dried for at least 1 hour over magnesium sulfate. Once dry, the magnesium sulfate was filtered from the organic material, which was stripped of solvent using a rotary evaporator. The molecular weights of the polymer based on gel permeation chromatography are listed in Table B.

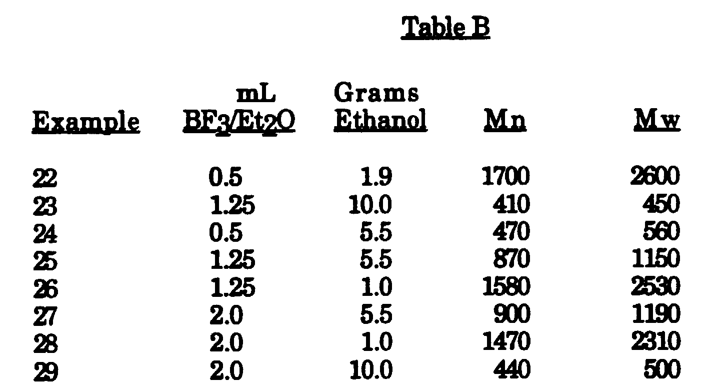

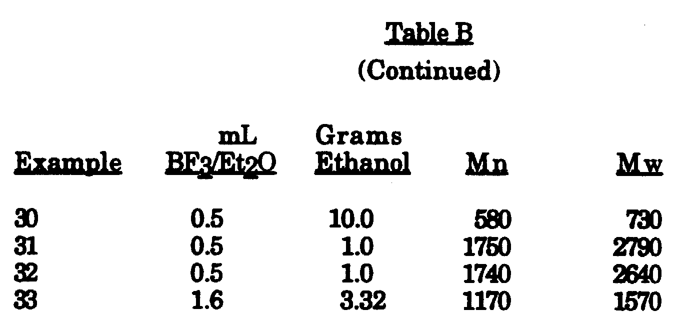

### Examples 34-36

### Preparation of Unsymmetric Biphobes

To a 500 milliter round bottom flask equipped with an overhead stirrer, nitrogen inlet, reflux condenser, addition funnel, and temperature controller was charged an amount of starting alcohol listed in Table C below. The material was heated to 170° C under nitrogen sparge, after which an amount of potassium hydroxide listed in Table C was added. An amount of epoxide listed in Table C was fed to the reaction flask using an FMI feed pump at a rate such that addition of the epoxide was completed in 6 hours. Gel permeation chromatography showed that the purity of the biphobic product was greater than 90%.

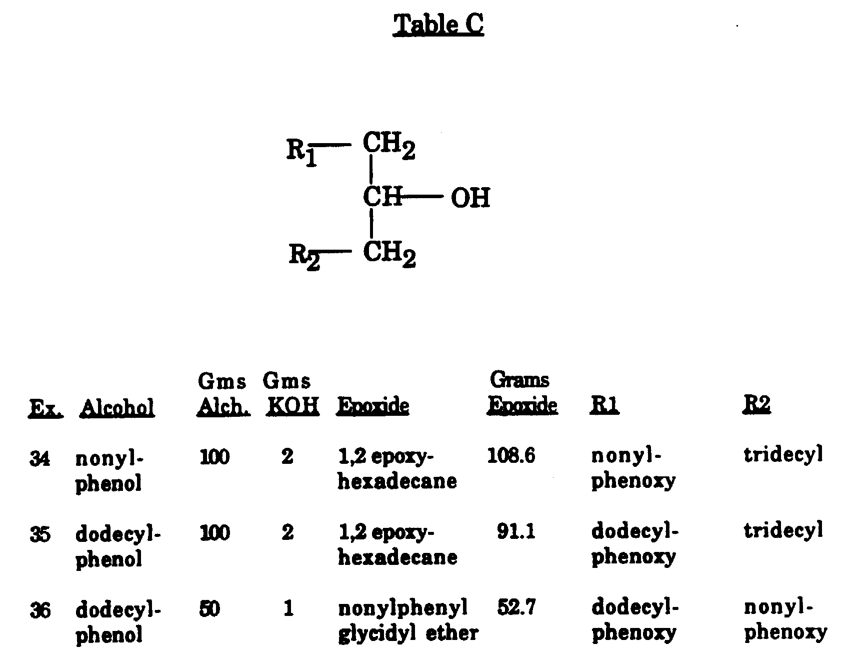

### Example 37

### Preparation of Poly(1,2-epoxyhexadecane)

The process described in Examples 34-36 was used with 50 grams of 1-hexadecanol, 1 gram of potassium hydroxide, and 49.4 grams of 1,2 epoxyhexadecane. The product multiphobe had a composition of 10% hexadecanol, 55.5% biphobe (i.e., 1-hexadecoxy-2-hexadecanol), 27.7% triphobe, and 6.5% quadphobe, as determined by gel permeation chromatography.

### Example 38

### Preparation of an Unsaturated Poly(nonylphenyl glycidyl ether)

To a 500 milliliter round bottom flask equipped with an overhead stirrer, nitrogen inlet, reflux condenser, addition funnel, and temperature controller was charged 10 grams of allyl alcohol, 40 grams of toluene, 0.5 grams of potassium hydroxide, and 2 grams of deionized water. The reaction mixture was refluxed to dryness, and cooled to 60° C. Once cool, 47.6 grams of nonylphenyl glycidyl ether was fed to the reaction vessel using a FMI pump over 35 minutes. The reaction mixture was heated to 112° C, and refluxed for 3 hours. The solvent was removed from the reaction mixture by vacuum stripping. The product was cooled and recovered. The product composition was 15% allyl alcohol, 43% biphobe (e.g., 1-(2-propene-1-oxy)-3-nonylphenoxy-2-propanol) and 42% triphobe, as determined by gel permeation chromatography.

### Example 39

### Solventless Macromonomer Preparation

To a 3 liter round bottom flask equipped with an overhead stirrer, nitrogen inlet and sparging tube, water cooled reflux condenser, monomer addition tube, FMI pump and feed tank, and heating mantel and temperature controller, 2000 grams of previously melted surfactant S-2 were charged. The materials were heated to 85° C under nitrogen sparge and mixing, and held at temperature for 1 hour to drive off residual water. Then 0.05 grams of 4-methoxyphenol were added, and the mixture was sparged with air for 15 minutes to activate the inhibitor. 2.4 grams of dibutyl tin dilaurate were added, and after 15 minutes of mixing, 201.25 grams of TMI were fed over 45 minutes. The mixture was held at 85° C for another 4 hours. Then 243 grams of water was pumped into the reaction mixture over a 25 minute period to wash the feed lines of isocyanate, and to dilute the product macromonomer to 90% solids. The product macromonomer was cooled and collected in a 3.785 l (1 gallon) jug.

### Example 40

### Preparation of Macromonomer Compound

Into a 1 liter round bottom reaction flask equipped with a heating mantle, dean stark trap, condenser, thermometer, nitrogen bubbler, nitrogen purge line and stirrer was charged 300 grams of toluene and 63 grams of a surfactant identified as S-1 in Table D below. With nitrogen purge, the resulting solution was heated to reflux at approximately 110°C and azeotroped to remove trace water to dryness. The solution was subsequently cooled to 90°C, and 1.5 grams of bismuth hex chem 28% bismuth octoate catalyst (Mooney Chemical, Inc., Cleveland, Ohio) was charged and allowed to mix well, after which a stoichiometric amount of 95% m-TMI aliphatic isocyanate (American Cyanamid, Stamford, Connecticut) was charged. After the reaction proceeded at 90°C for 1.3 hours, the resulting product was cooled to 70°C and 0.03 grams of 2,6-di-tert-4-methyl phenol (BHT) preservative was added. The mixture was poured into a stainless steel pan with large surface area to facilitate drying. The final product was a waxy material, and is designated herein as macromonomer M-1.

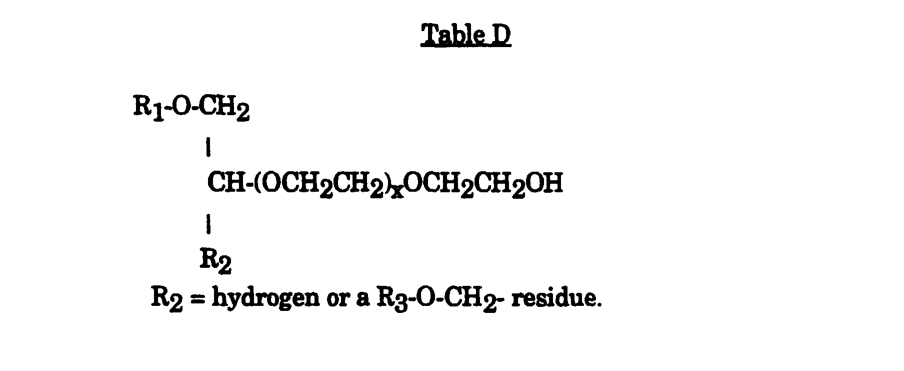

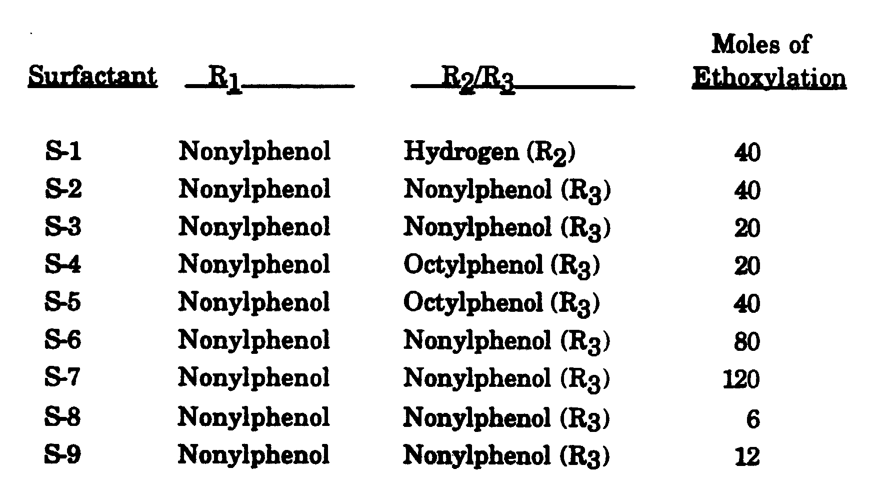

### Examples 41-61

### Preparation of Macromonomer Compounds

In a manner similar to that described in Example 40, other macromonomers were prepared using stoichiometric amounts of the surfactants and unsaturated compounds identified in Table E below.

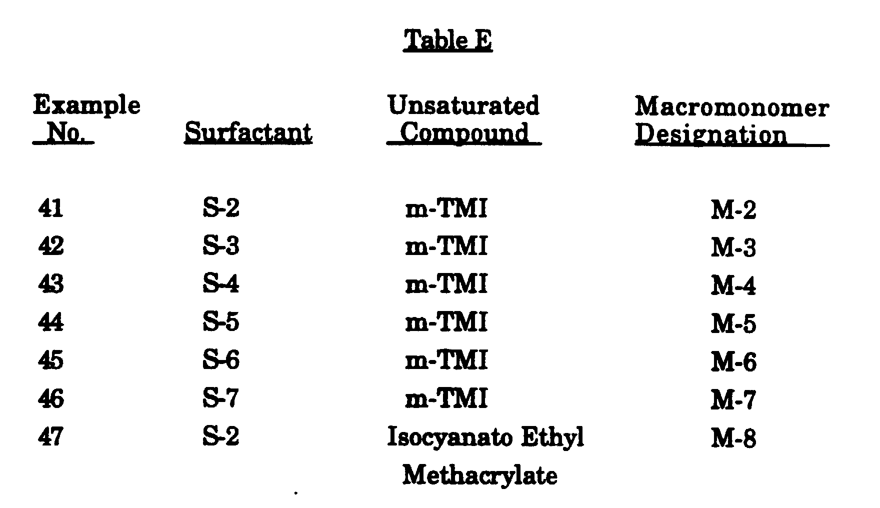

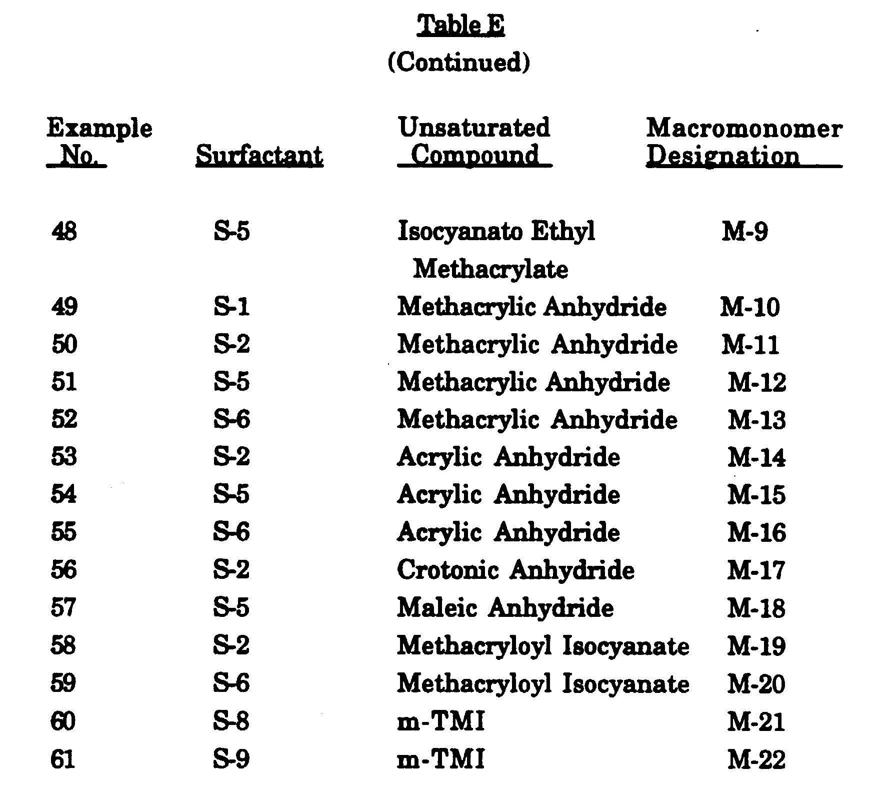

### Example 62

### Preparation of Alkali Soluble Thickener

A monomer mixture (300 grams) was prepared by charging ethyl acrylate (Aldrich), methacrylic acid (Aldrich), macromonomer M-1, 13 grams of a 75% solution of Aerosol OT surfactant (American Cyanamid, Stamford, Connecticut), and 3 grams of distilled deionized water to a bottle, and dispersing the contents with vigorous shaking. The ethyl acrylate, methacrylic acid and macromonomer M-1 were added in amounts identified in Table F below. A catalyst feed mixture comprised of 0.53 grams of sodium persulfate (Aldrich) and 52.47 grams of water was prepared in another container. To a 2 liter resin flask that had been immersed in a thermostated water bath and equipped with a 4-bladed stainless steel mechanical stirrer, Claisen connecting tube, water condenser, nitrogen sparge and bubble trap, thermometer and monomer and catalyst addition inlets, 1.20 grams of the sodium salt of vinyl sulfonic acid and 658.5 grams of water were charged. The monomer mixture was charged to a 1-liter graduated monomer feed cylinder, and the catalyst solution was charged to a 125 milliliter graduated catalyst feed cylinder. Under nitrogen purge, the reactor was heated to 70°C, whereupon 33 milliliters of the monomer mixture and 3 milliliters of the catalyst feed mixture were charged to the reaction vessel. The reaction vessel was subsequently heated to 80°C. After allowing the monomers to react for 20 minutes to form a seed product, the monomer and catalyst feed mixtures were conveyed to the reaction vessel by FMI pumps via 1/8" teflon tubing at a rate of 1.94 and 0.27 milliliters/minute, respectively, under continuous stirring at a reaction temperature held between 76-82°C. The reaction was allowed to proceed for another hour, after which the product was cooled and filtered with a 200 mesh nylon cloth. The coagulum was collected from the reaction vessel and filter cloth. Thickening ability of the resulting product was monitored by Brookfield viscosity at 6 rpm by diluting the latex to 0.25%, 0.50% and 0.75% solids, and subsequently neutralizing the product to pH=9.0 with a 95% solution of 2-amino-2-methyl-1-propanol (AMP-95, Angus Chemical Company). The results are given in Table F.

### Examples 63-174

### Preparation of Alkali Soluble Thickeners

In a manner similar to that described in Example 62, other alkali soluble thickeners were prepared using the monomers identified in Tables F-Q below in the amounts identified in Tables F-Q. Tables F and G illustrate the influence of m-TMI-containing macromonomer concentration and ethoxylation on thickening efficiency. Table H illustrates the influence of 2-SEM on thickening efficiency. Table I illustrates the influence of mixing m-TMI-containing macromonomers of various ethoxylations on thickening efficiency. Table J illustrates the influence of unsaturation type of urethane-containing macromonomers on thickening efficiency. Table K illustrates the influence of methacryloyl isocyanate incorporated into the macromonomer. Table L illustrates the influence of macromonomer ester structure and ethoxylation on thickening efficiency. Table M illustrates the influence of acid type and concentration on thickening efficiency. Table N illustrates the influence of polymer glass transition temperature and water solubility on thickening efficiency. Table O illustrates the influence of acrylamide incorporated into the macromonomer. Table P illustrates the influence of cross-linkable monomer concentration on thickening efficiency. Table Q illustrates the influence of mercaptan on thickening efficiency. As used in Tables F-Q below, the following abbreviations have the indicated meanings: MM = Macromonomer; EA = Ethyl Acrylate; MAA = Methacrylic Acid; AA = Acrylic Acid; MA = Methyl Acrylate; t-BA = t-Butyl Acrylate; n-BA = n-Butyl Acrylate; MMA = Methyl Methacrylate; 2-EHP = 2-Ethylhexyl Propionate Mercaptan; 2-SEM = 2-sulfoethyl methacrylate; and 2-HEA = 2-Hydroxy Ethyl Acrylate.

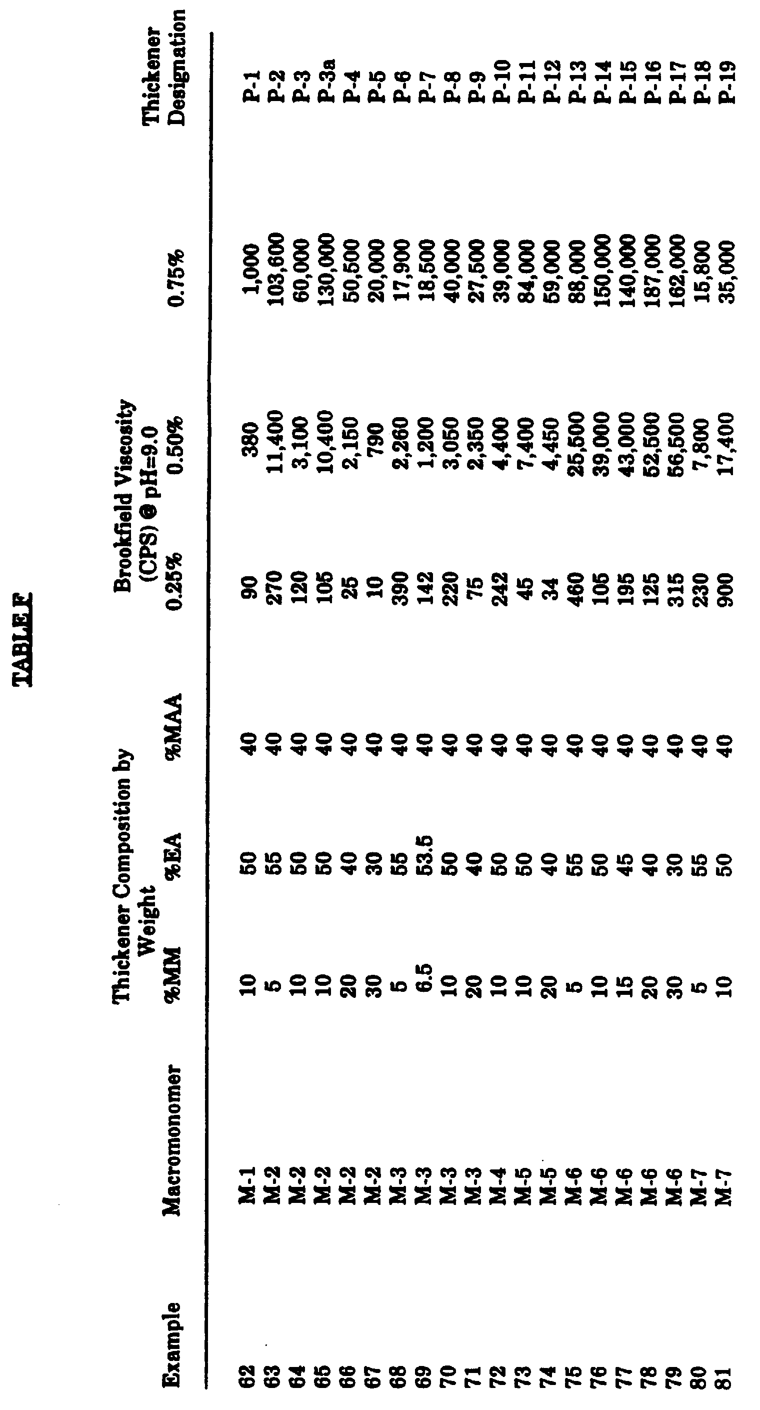

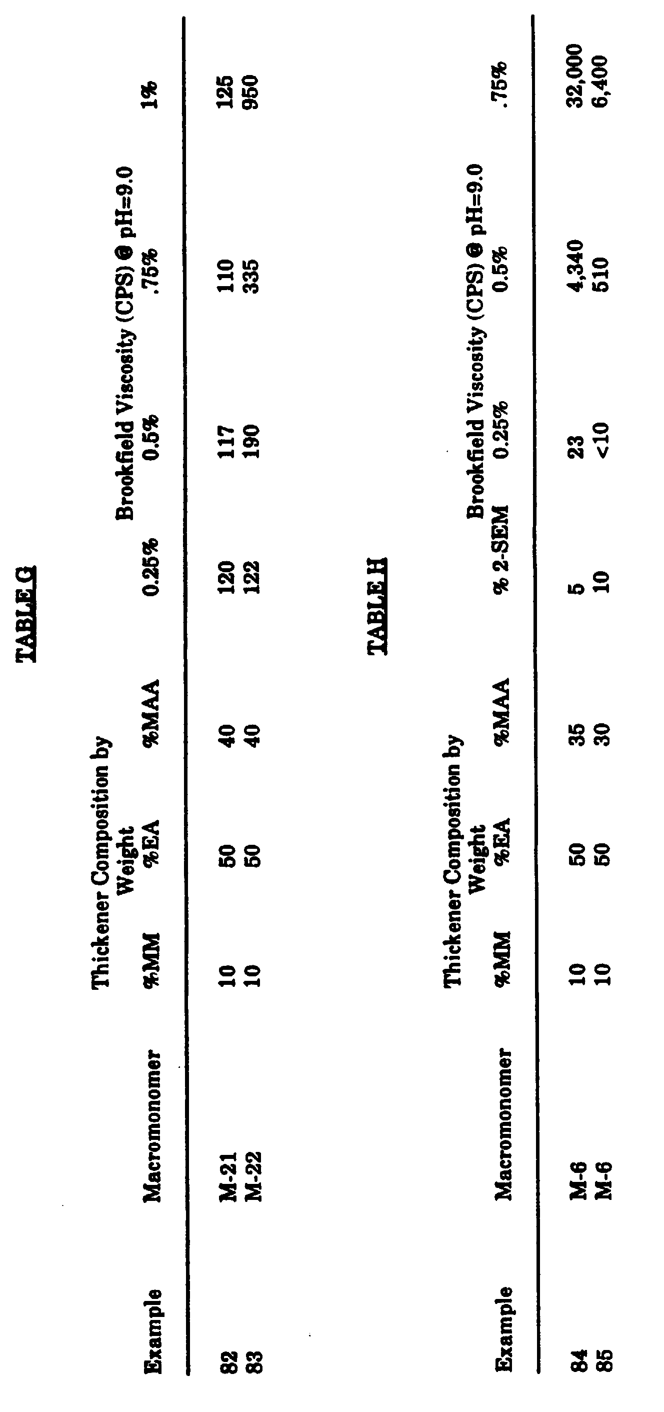

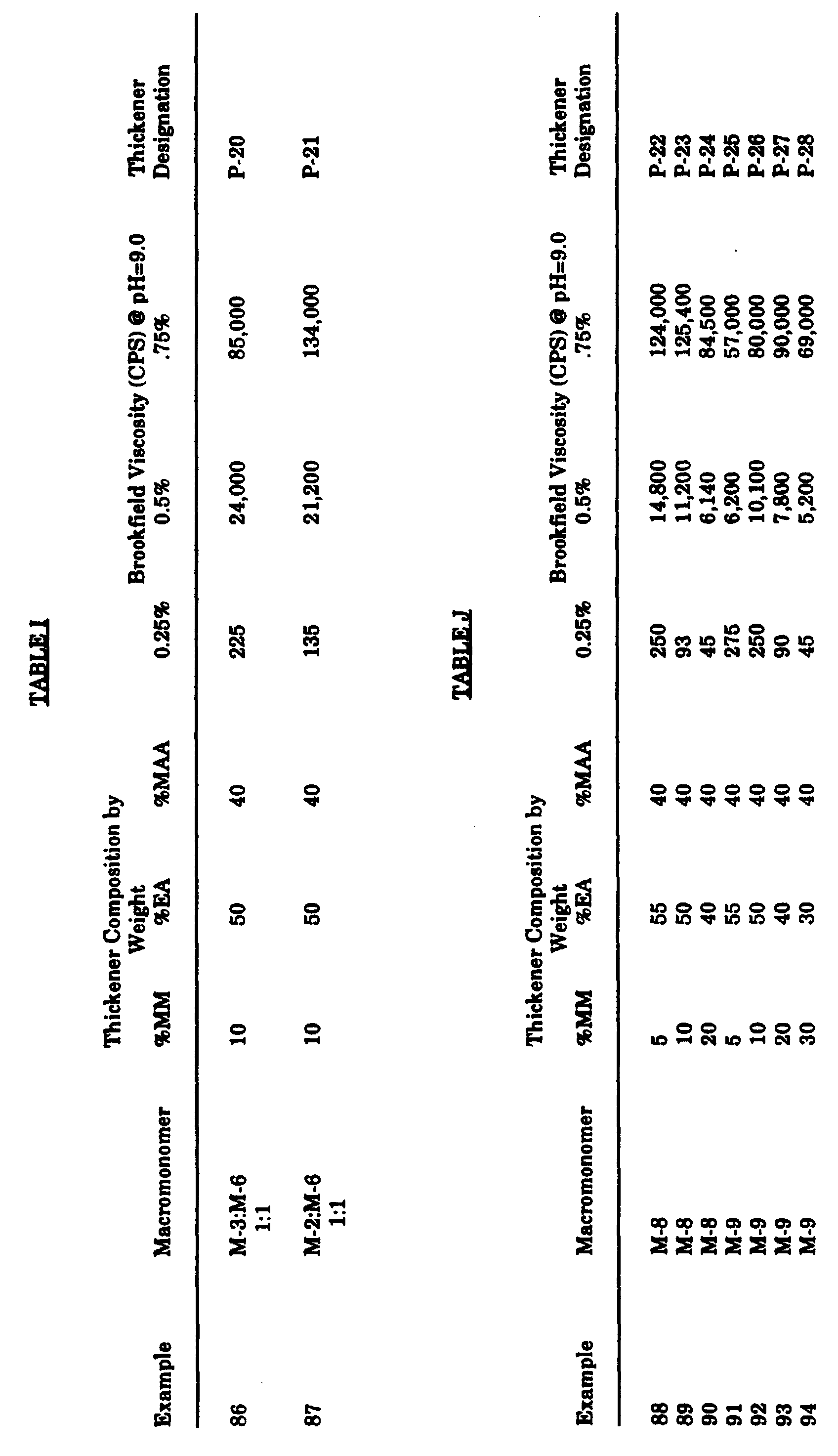

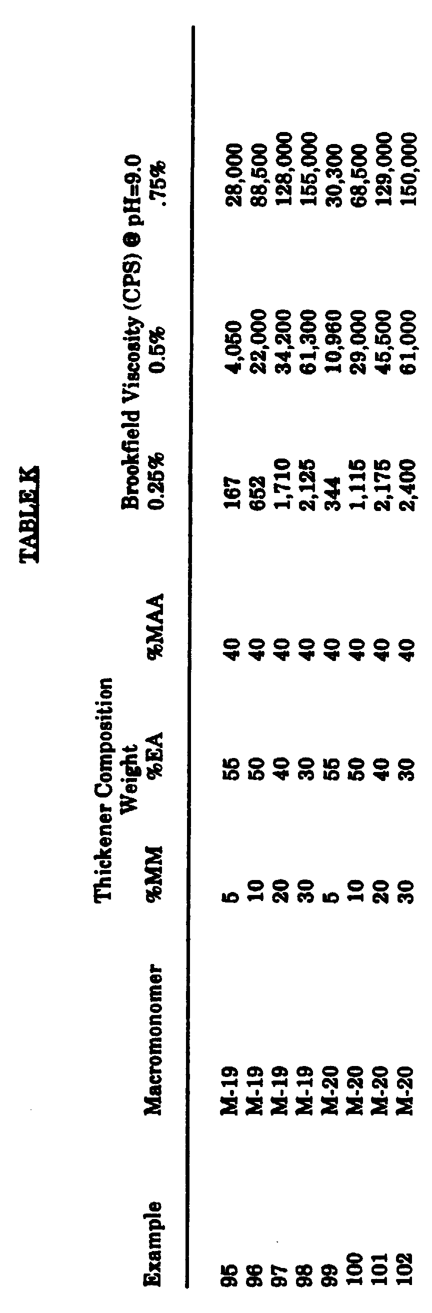

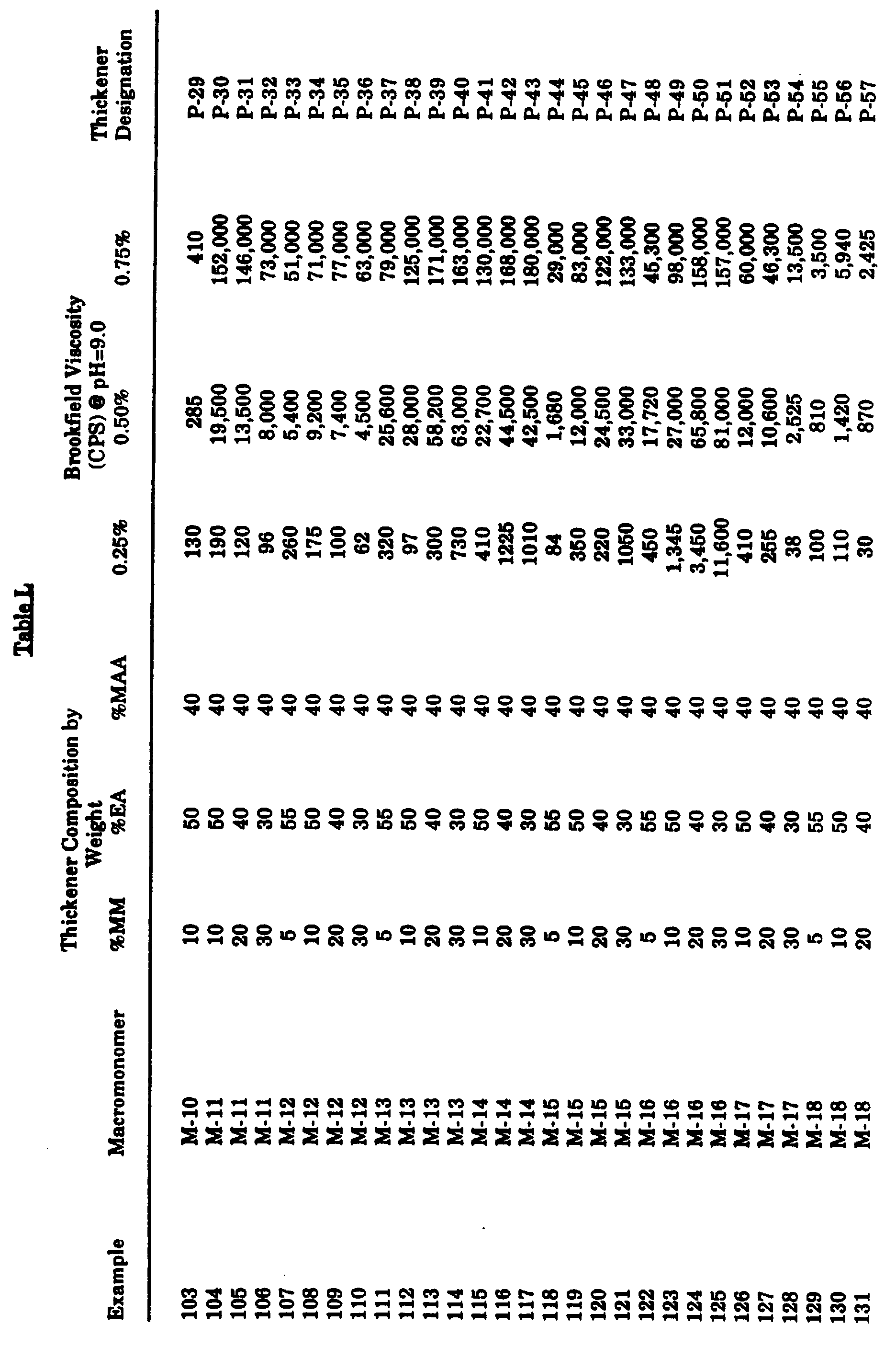

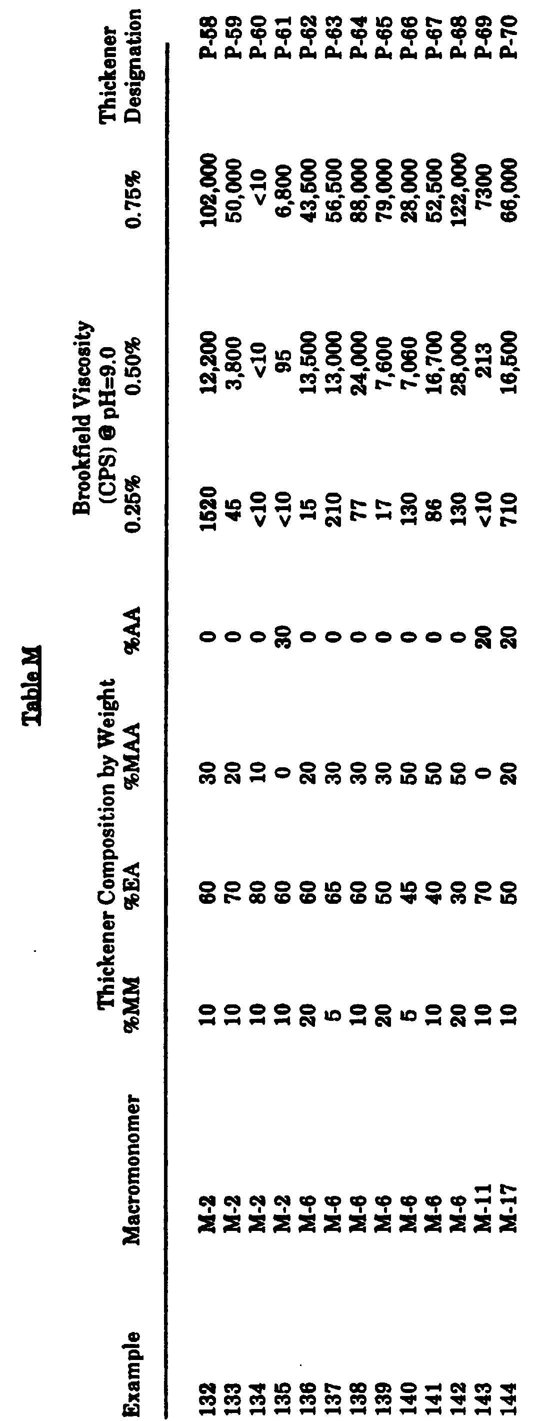

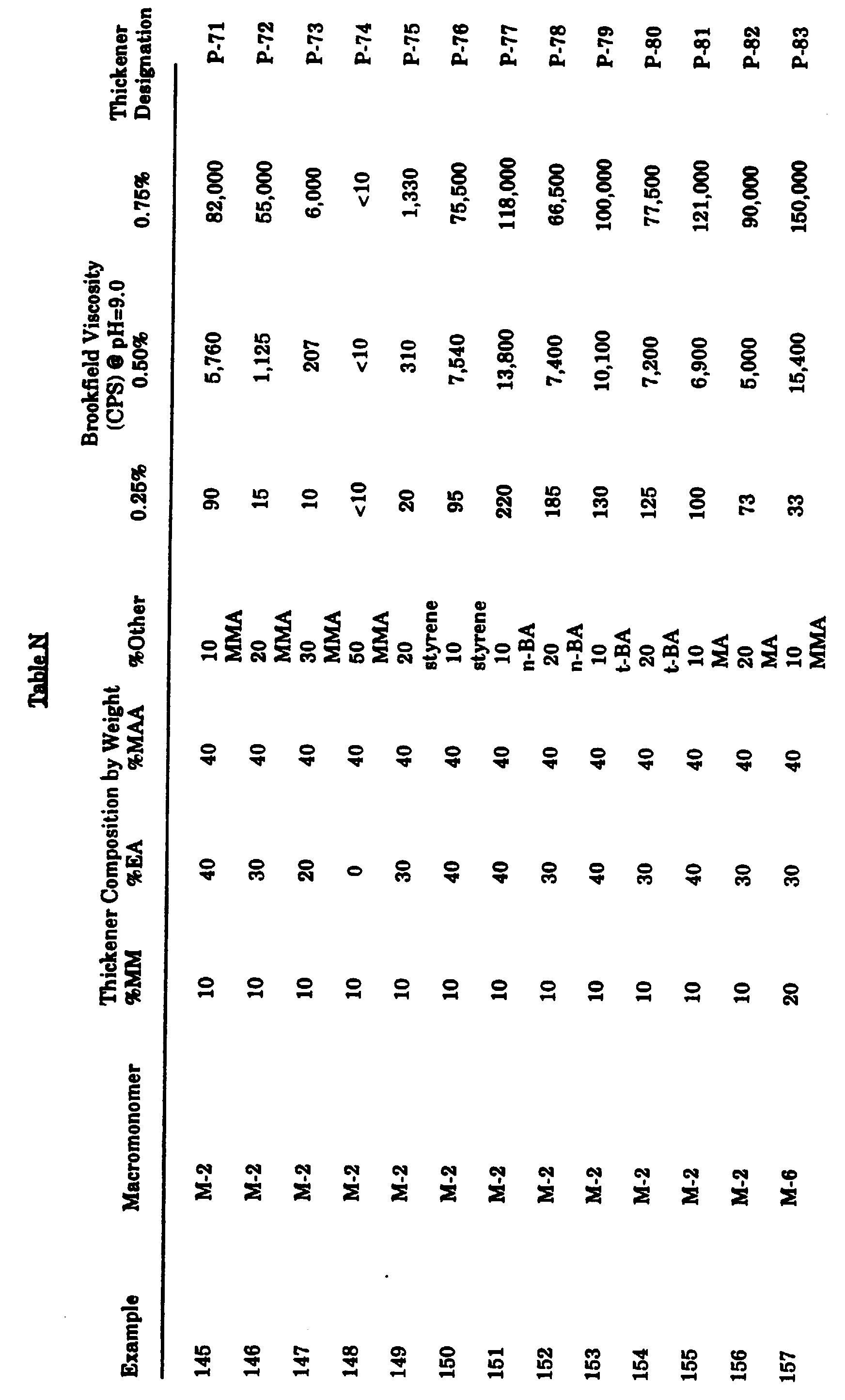

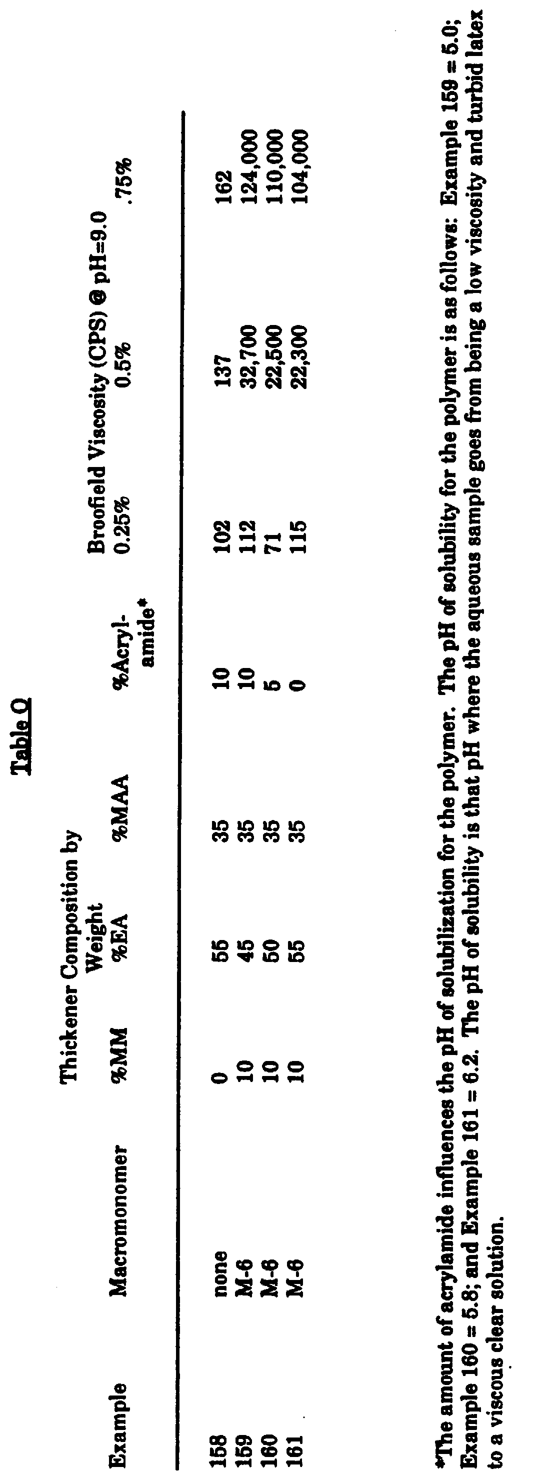

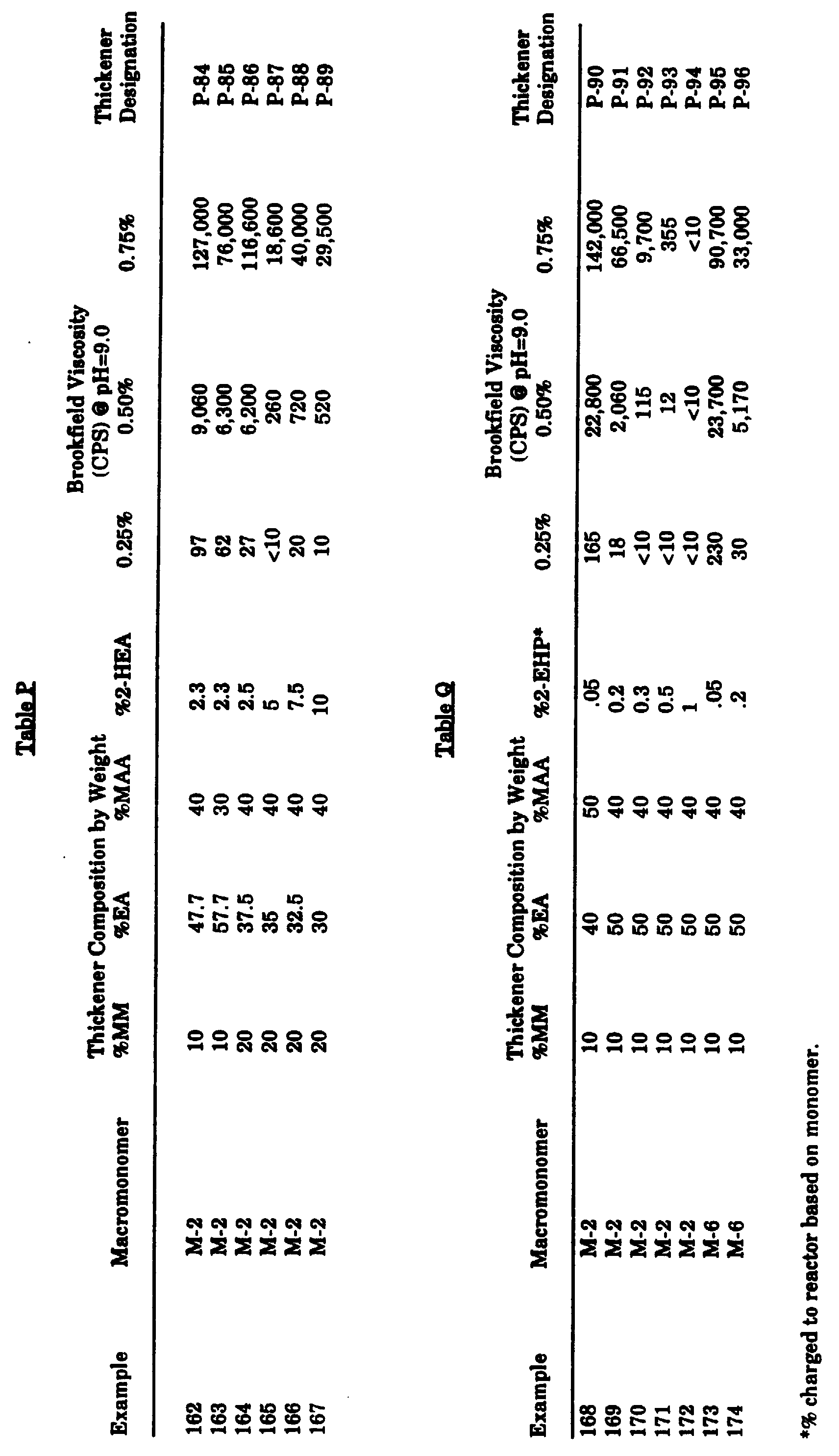

### Examples 175-230

### Co-Thickening with Surfactants

The addition of certain surfactants to an associative polymer solution produces a co-thickening effect. The results in Table L below show the co-thickening effect produced by the addition with thorough mixing of certain surfactants identified in Table R below in the amounts identified in Table L to a 0.5% alkaline solution of an alkali soluble thickener identified in Table S as measured with a Brookfield Viscometer at 6 rpm at pH = 9.0.

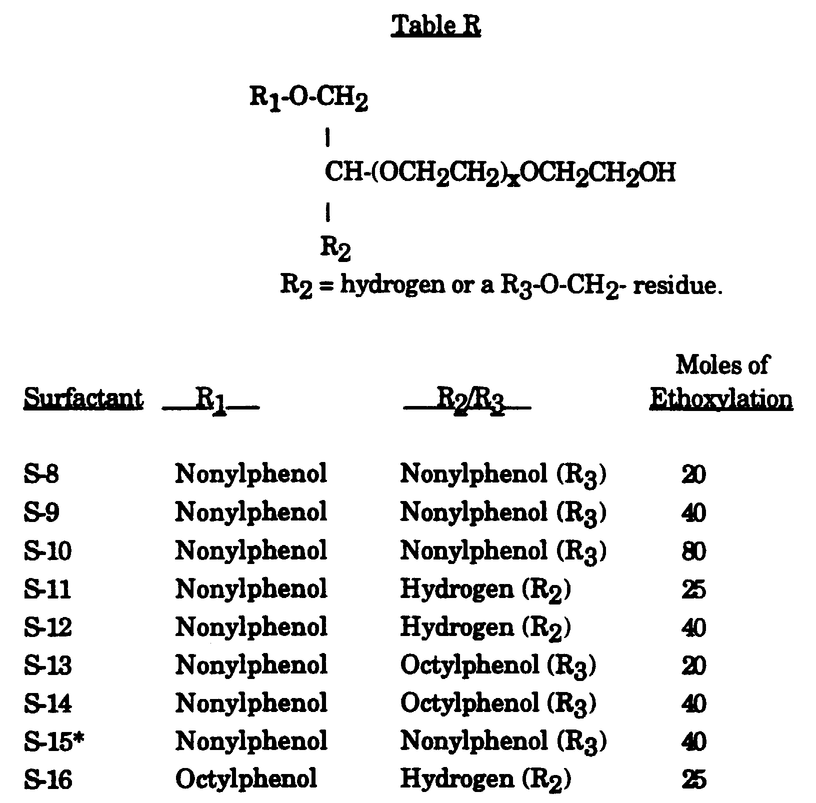

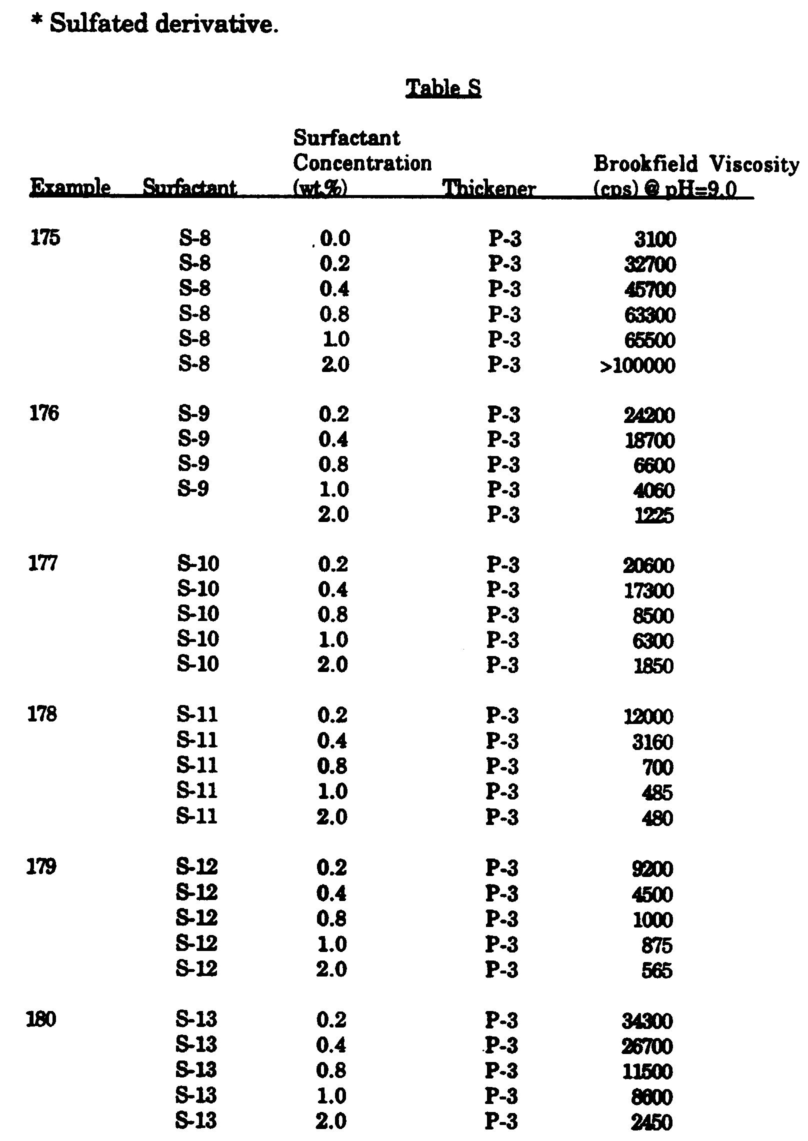

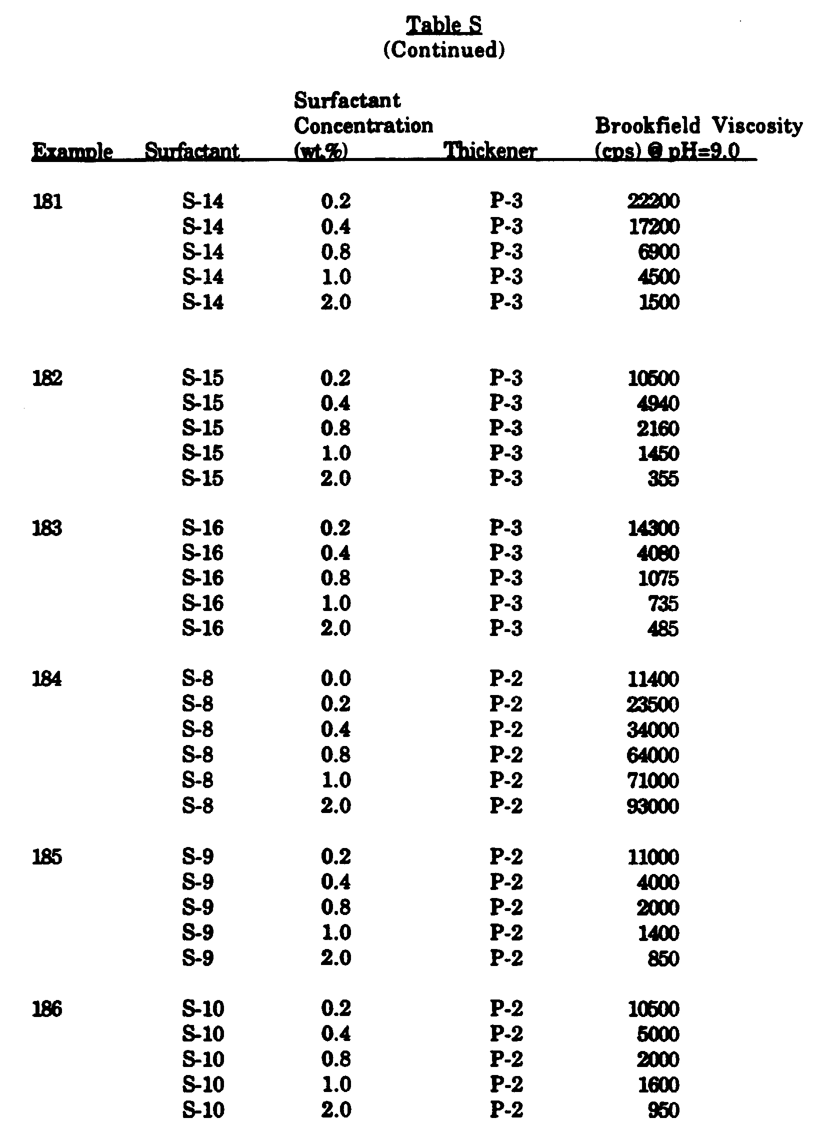

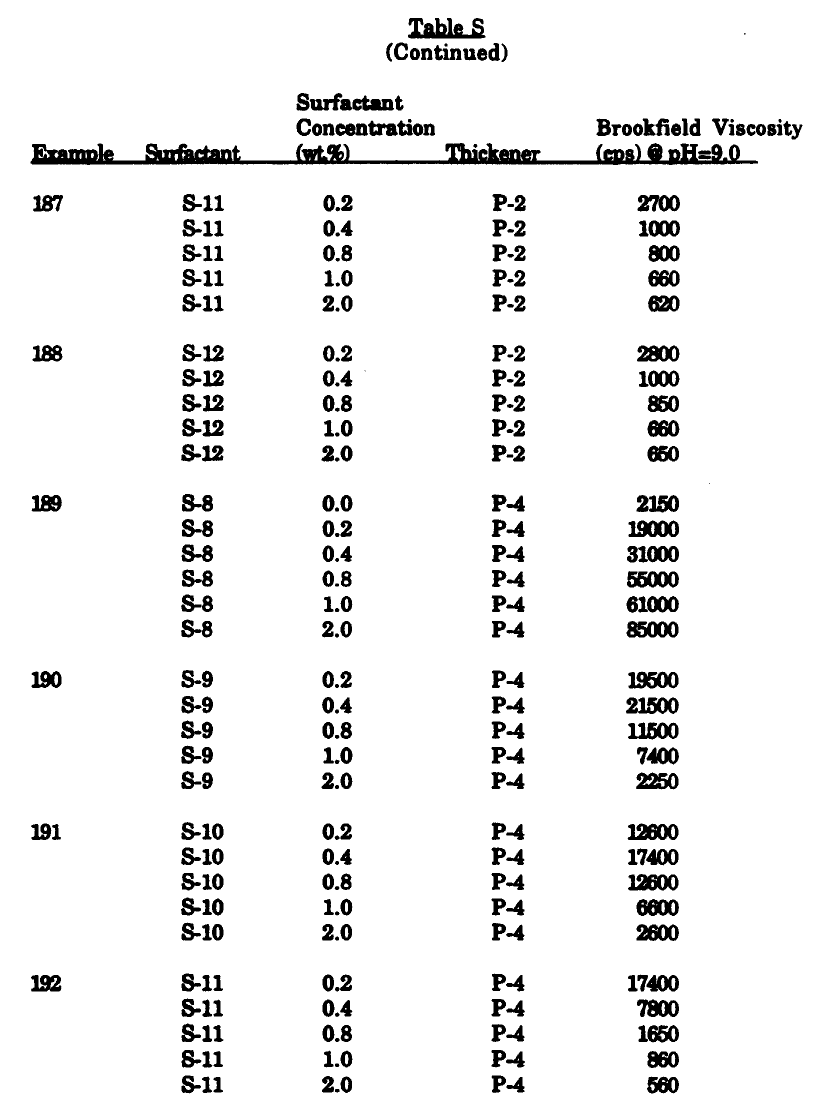

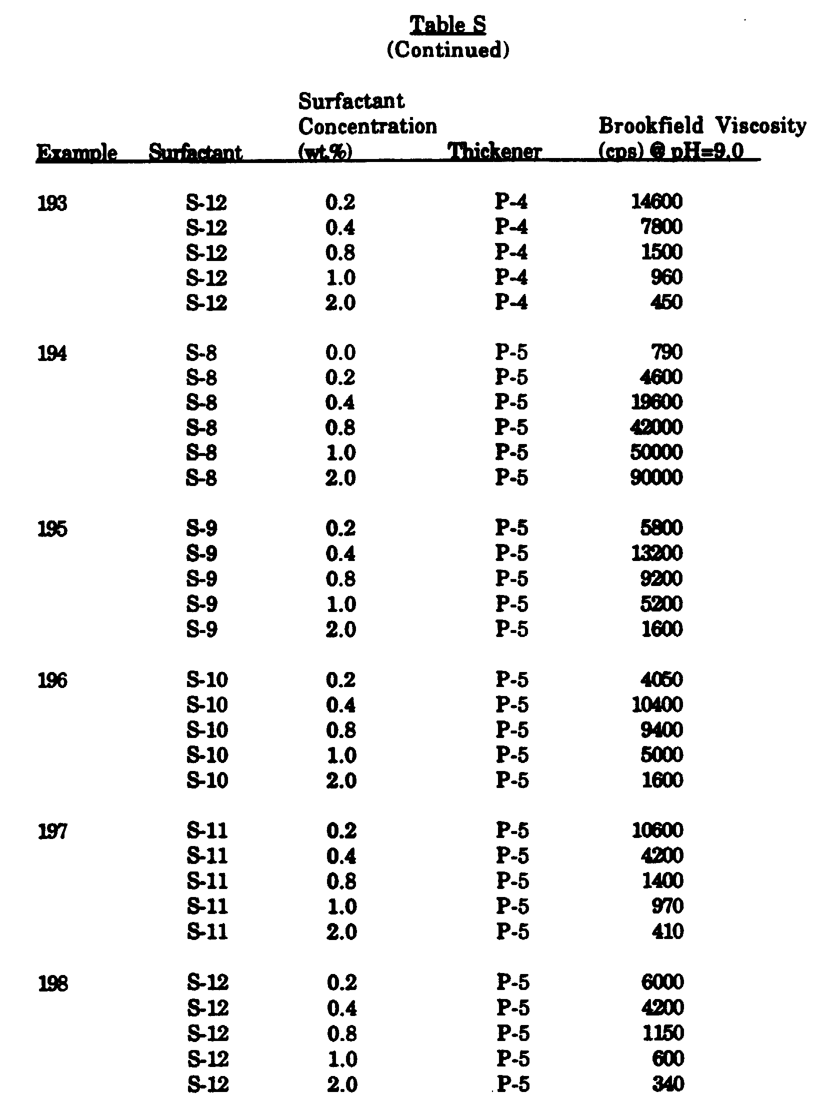

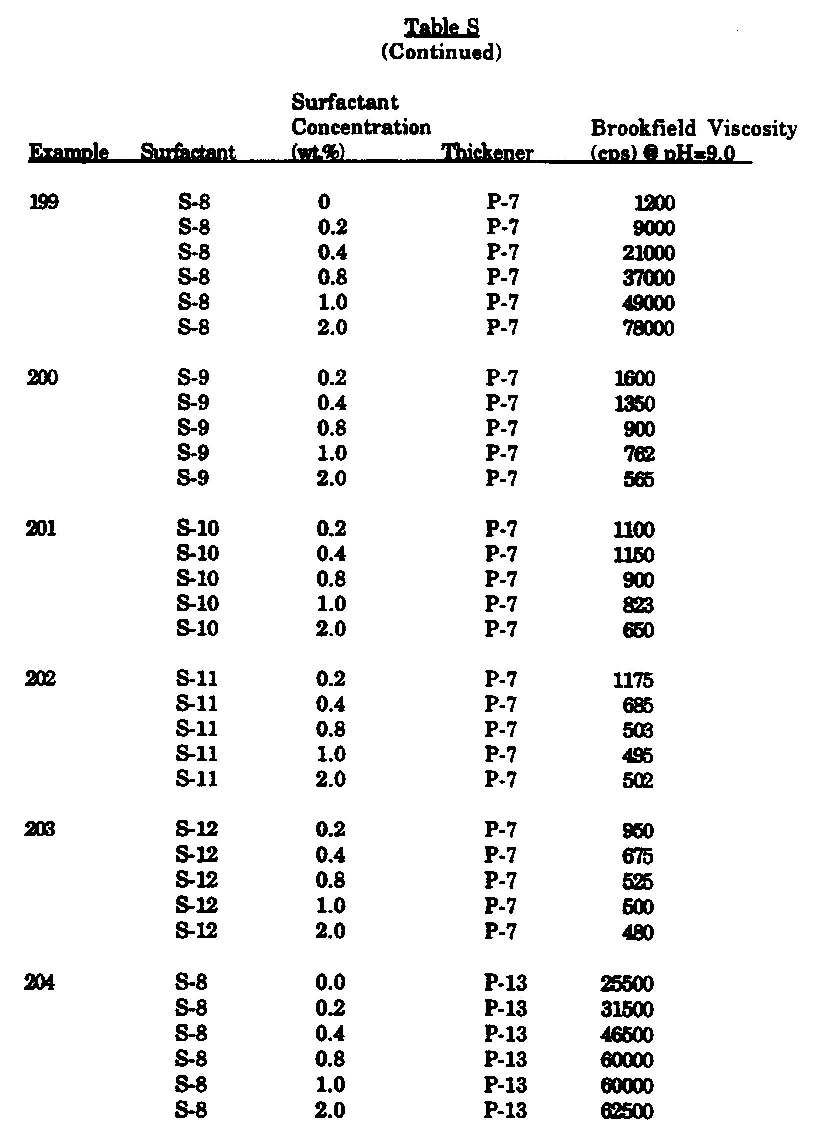

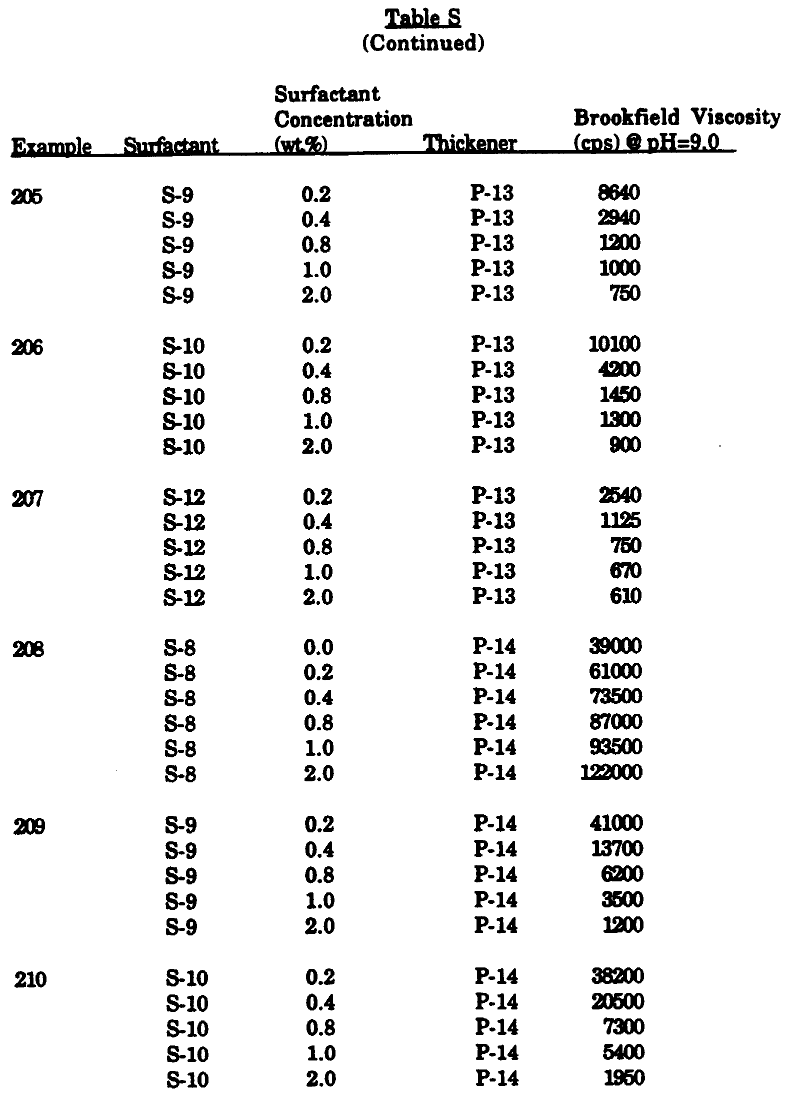

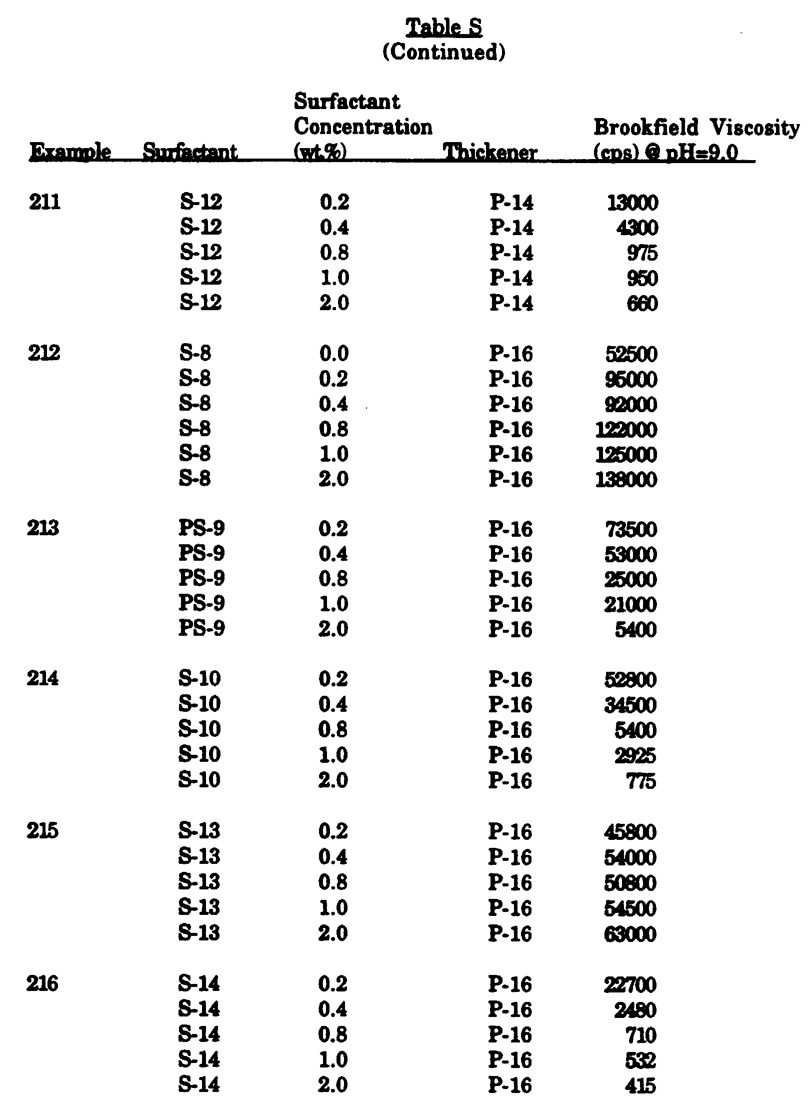

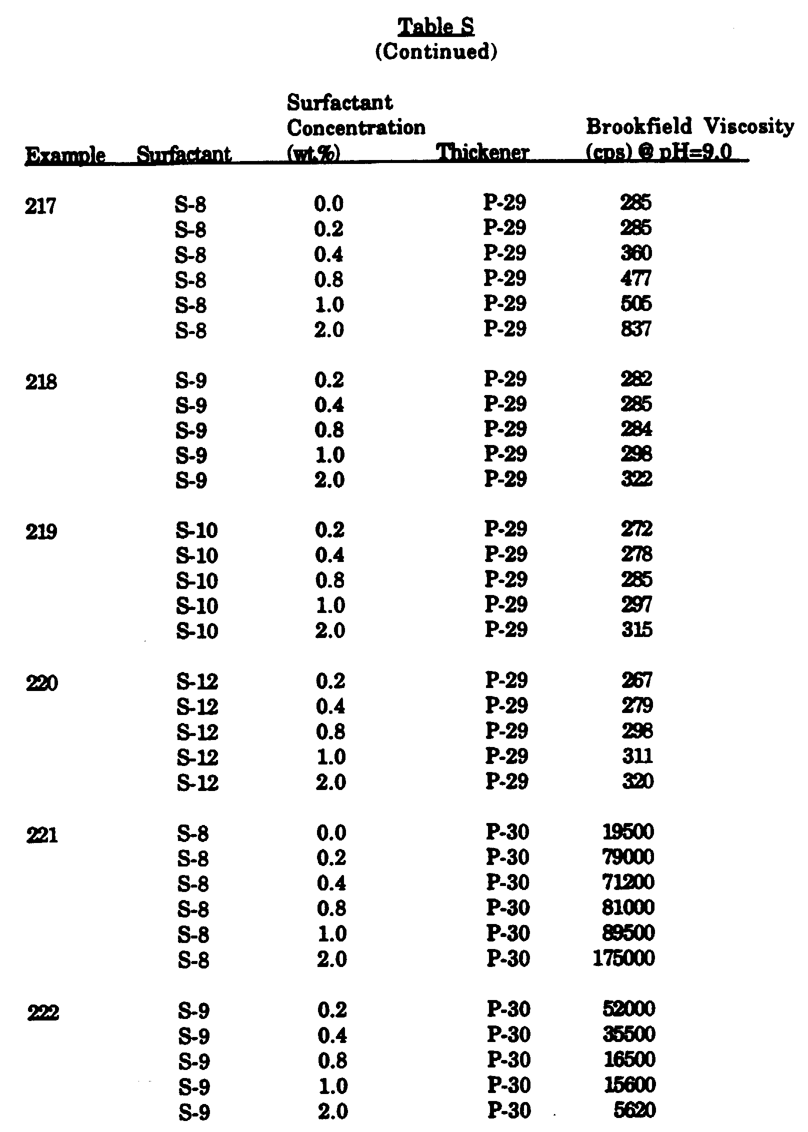

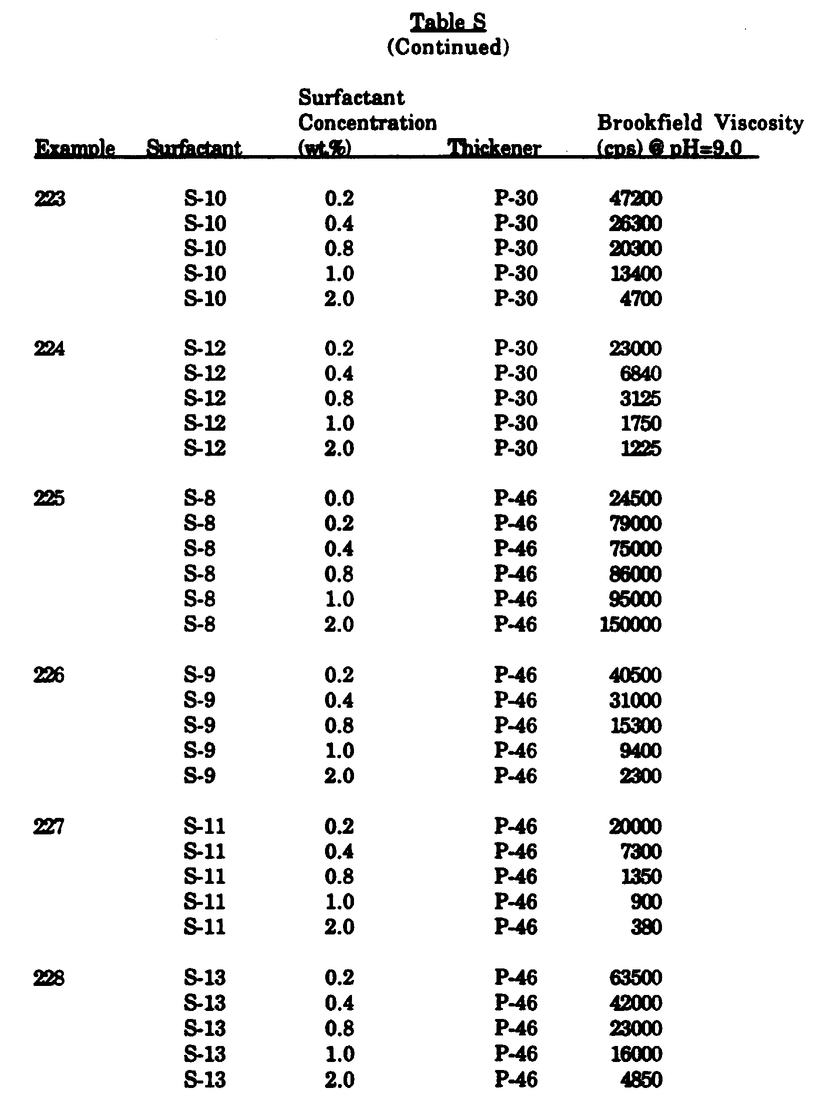

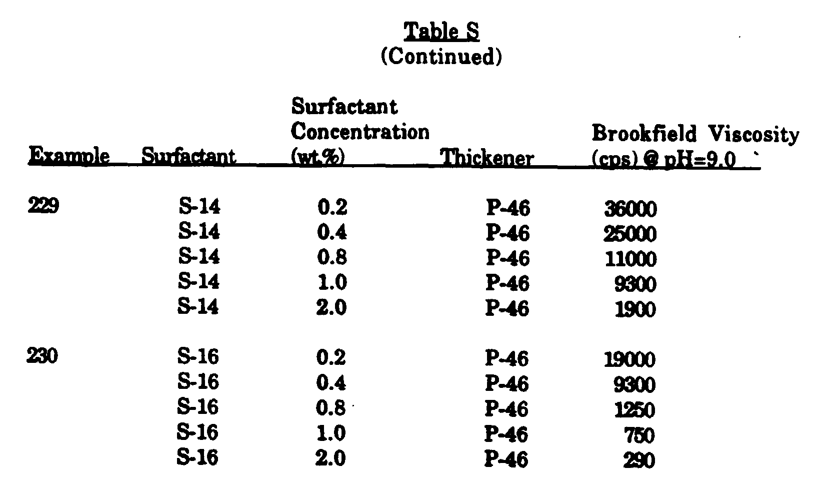

### Examples 231-275

### Co-Thickening with Surfactants

The degree of ethoxylation of a surfactant added to an associative polymer solution influences the co-thickening effect. The results in Table U below show the co-thickening effect produced by the addition with thorough mixing of certain surfactants identified in Table T below in the amounts identified in Table U to a 0.3% (Examples 172-189), 0.5% (Examples 190-215) or 0.75% (Example 216) alkaline solution of an alkali soluble thickener identified in Table U as measured with a Brookfield Viscometer at 6 rpm at pH = 9.0.

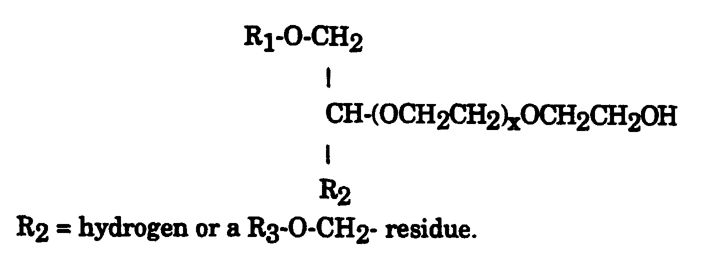

**Table T**

| Surfactant | R₁ | R₂/R₃ | Moles of Ethoxylation |
|---|---|---|---|
| S-17 | Nonylphenol | Hydrogen (R₂) | 4 |
| S-18 | Nonylphenol | Hydrogen (R₂) | 6 |
| S-19 | Nonylphenol | Hydrogen (R₂) | 7 |
| S-20 | Nonylphenol | Hydrogen (R₂) | 8 |
| S-21 | Nonylphenol | Hydrogen (R₂) | 9 |
| S-22 | Nonylphenol | Hydrogen (R₂) | 10 |
| S-23 | Nonylphenol | Hydrogen (R₂) | 15 |
| S-24 | Nonylphenol | Hydrogen (R₂) | 25 |
| S-25 | Nonylphenol | Hydrogen (R₂) | 40 |
| S-26 | Octylphenol | Hydrogen (R₂) | 1 |
| S-27 | Octylphenol | Hydrogen (R₂) | 3 |
| S-28 | Octylphenol | Hydrogen (R₂) | 5 |
| S-29 | Octylphenol | Hydrogen (R₂) | 7 |
| S-30 | Octylphenol | Hydrogen (R₂) | 9 |
| S-31 | Octylphenol | Hydrogen (R₂) | 12 |
| S-32 | Octylphenol | Hydrogen (R₂) | 16 |
| S-33 | C11-C15 | Hydrogen (R₂) | 5 |
| | Secondary | | |
| | Alcohol | | |
| S-34 | C11-C15 | Hydrogen (R₂) | 9 |
| | Secondary | | |
| | Alcohol | | |

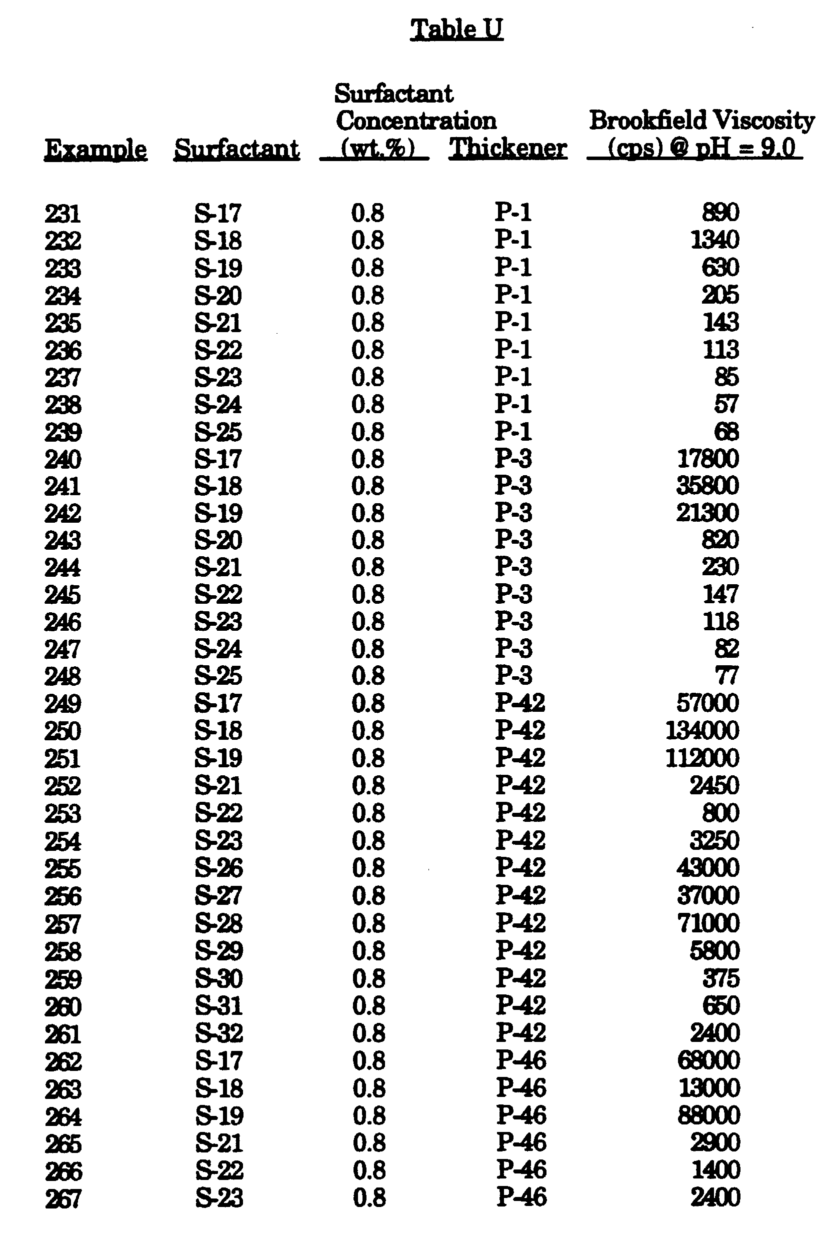

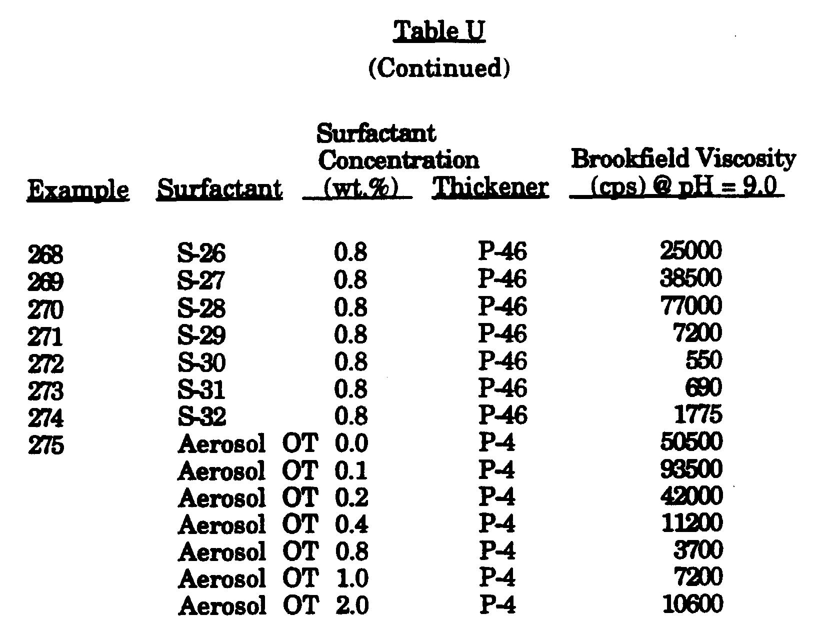

### Examples 276-288

### Co-Thickening with Solvents and Non-Solvents

Solvents and non-solvents added to an associative polymer solution influences the co-thickening effect. The results in Table W below show the co-thickening effect produced by the addition with thorough mixing of certain solvents and non-solvents identified in Table V below in the amounts identified in Table W to a 0.75% alkaline solution of an alkali soluble thickener identified in Table W as measured with a Brookfield Viscometer at 6 rpm at pH = 9.0.

**Table V**

| Solvent Designation | Solvent |
|---|---|
| O-1 | mineral spirits |
| O-2 | butanol |
| O-3 | Isobutanol |
| O-4 | Isopropanol |
| O-5 | 2-Ethylhexanol |
| O-6 | Butyl Carbitol |
| O-7 | Butyl DiPropasol |
| O-8 | Butyl Propasol |
| O-9 | Propyl DiPropasol |
| O-10 | Propyl Propasol |
| O-11 | Methyl DiPropasol |
| O-12 | Methyl Propasol |

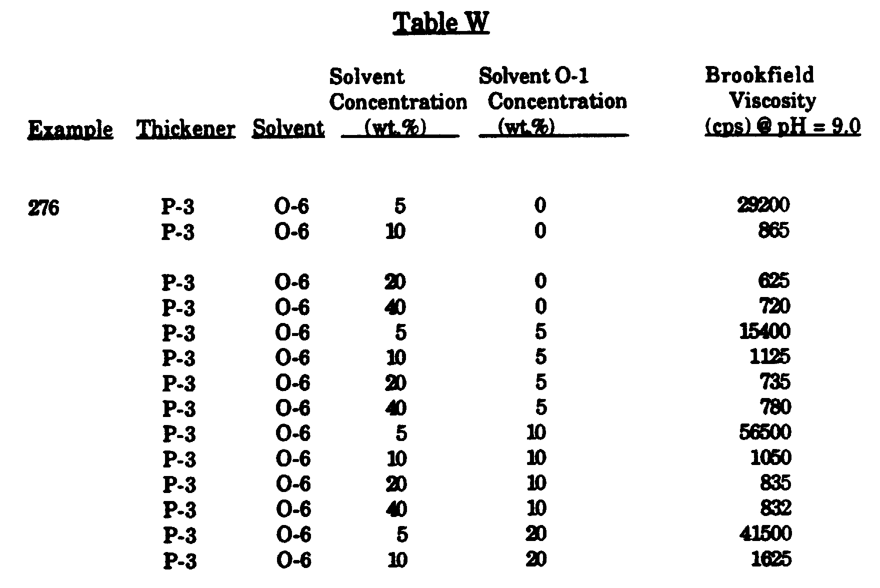

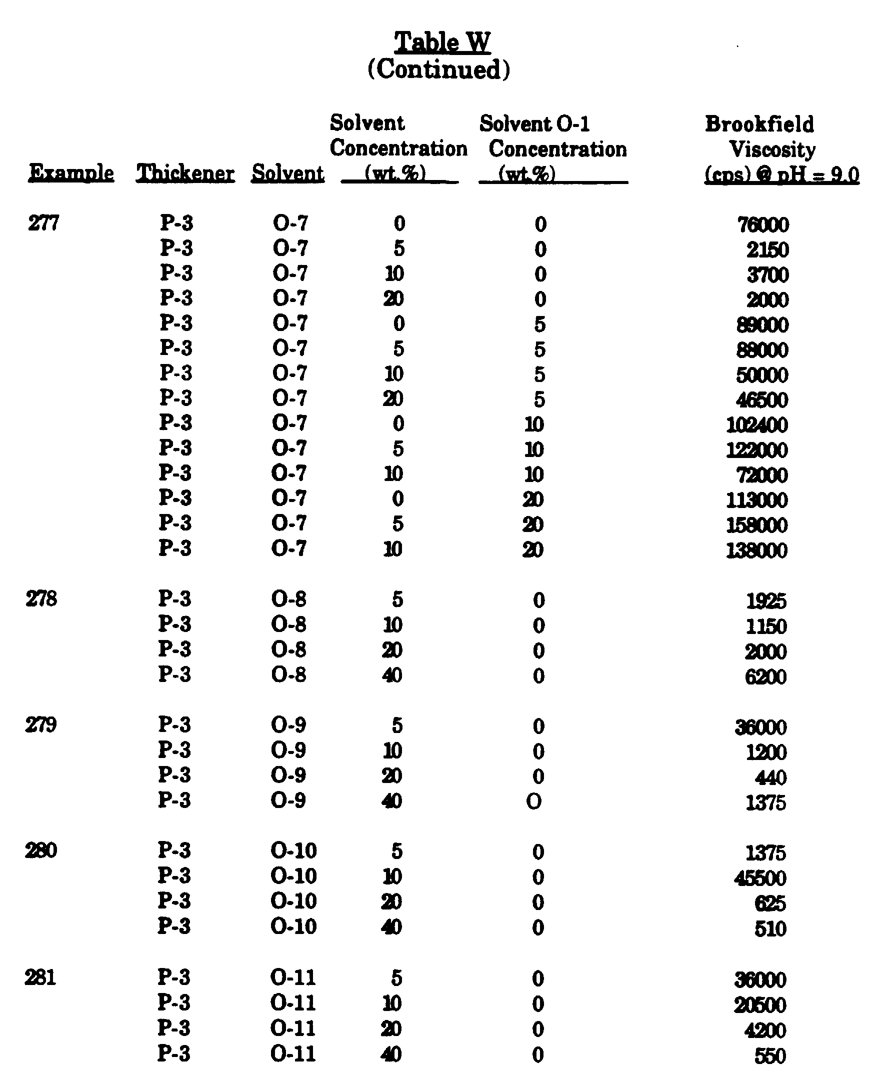

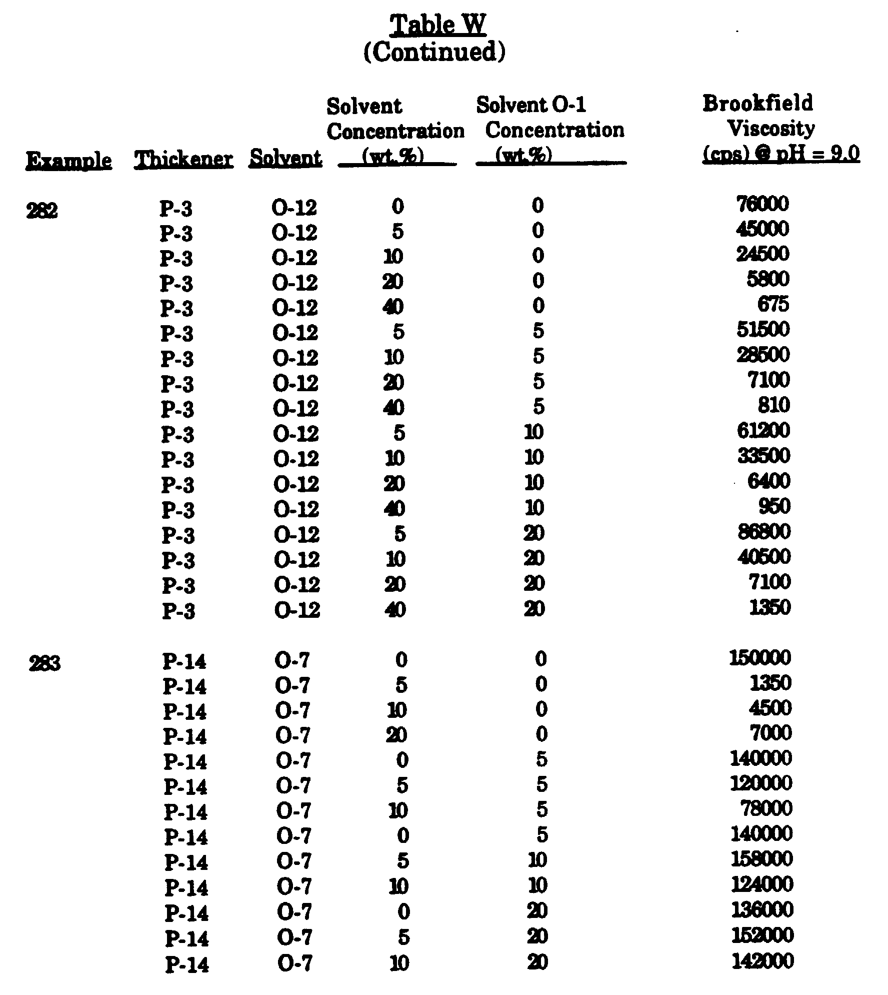

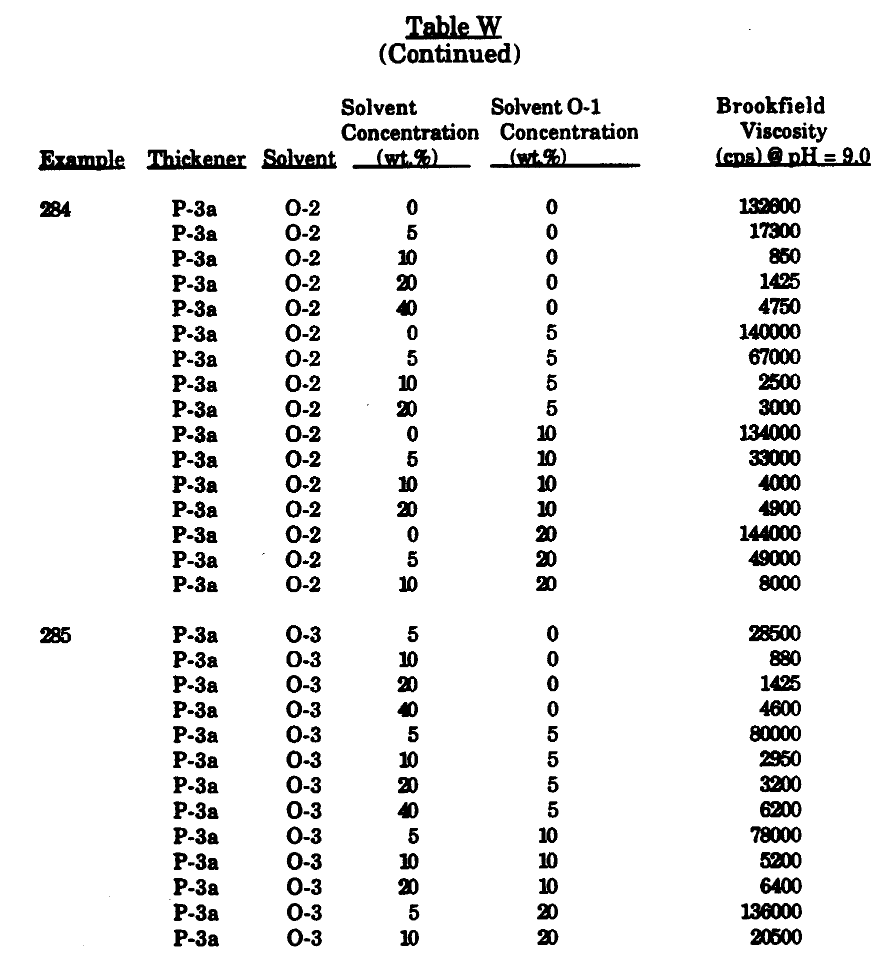

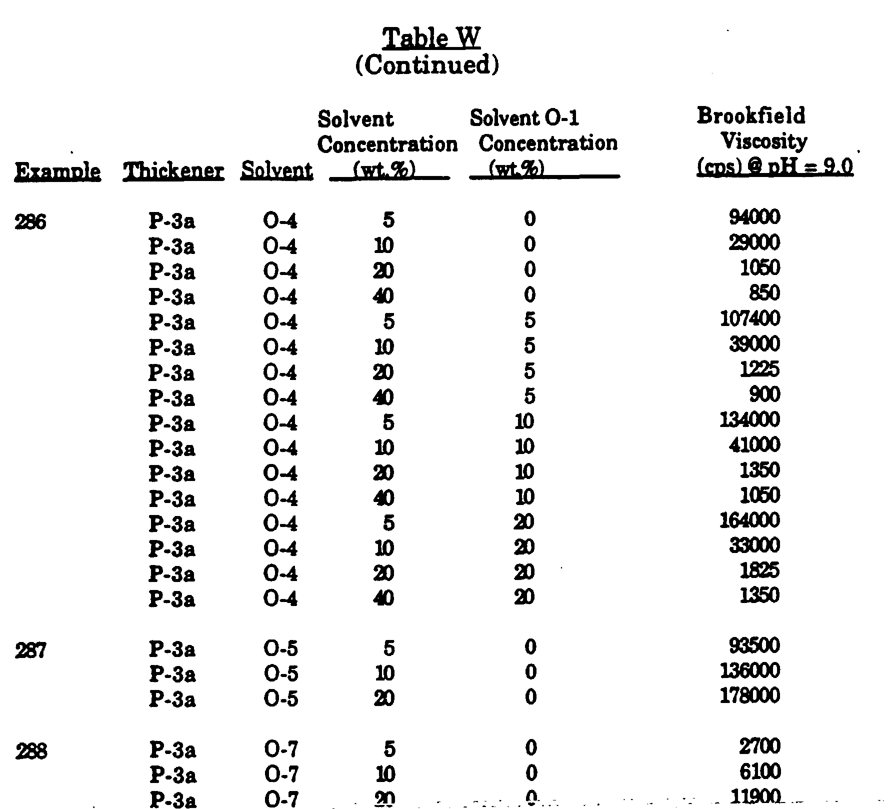

## Claims

1. A polymer comprising the reaction product of:
(A) about 0-99.9 weight percent of one or more nonionic, cationic, anionic or amphoteric monomers;
(B) about 0-99.9 weight percent of one or more monoethylenically unsaturated monomers different from (A);
(C) about 0.1-100 weight percent of one or more monoethylenically unsaturated macromonomers; and
(D) about 0-20 weight percent or greater of one or more polyethylenically unsaturated monomers different from (A) and (B) ; in which the monoethylenically unsaturated macromonomers (C) are represented by the formula: 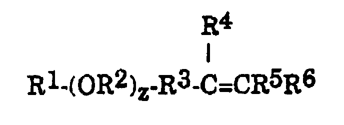
wherein:
R¹ is a monovalent residue of a substituted or unsubstituted complex hydrophobe compound;
each R² is the same or different and is a substituted or unsubstituted divalent hydrocarbon residue;
R³ is a substituted or unsubstituted divalent hydrocarbon residue;
R⁴, R⁵ and R⁶ are the same or different and are hydrogen or a substituted or unsubstituted monovalent hydrocarbon residue; and
z is a value of 0 or greater;
and in which said substituted or unsubstituted complex hydrophobe compound (R¹) is represented by the formula selected from: 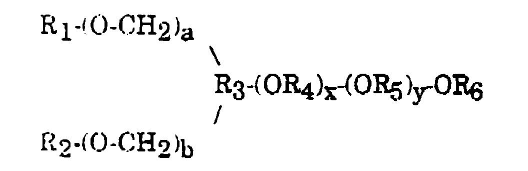 wherein R₁ and R₂ are the same or different and are hydrogen or a substituted or unsubstituted monovalent hydrocarbon residue, R₃ is a substituted or unsubstituted divalent or trivalent hydrocarbon residue, each R₄ is the same or different and is a substituted or unsubstituted divalent hydrocarbon residue, each R₅ is the same or different and is a substituted or unsubstituted divalent hydrocarbon residue, R₆ is hydrogen, a substituted or unsubstituted monovalent hydrocarbon residue or an ionic substituent, a and b are the same or different and are a value of 0 or 1, and x and y are the same or different and are a value of 0 or greater; provided at least two of R₁, R₂, R₃, R₄, R₅ and R₆ are a hydrocarbon residue having greater than 2 carbon atoms in the case of R₁, R₂ and R₆ or having greater than 2 pendant carbon atoms in the case R₃, R₄ and R₅; and 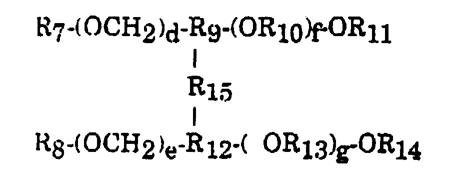 wherein R₇ and R₈ are the same or different and are hydrogen or a substituted or unsubstituted monovalent hydrocarbon residue, R₉ and R₁₂ are the same or different and are a substituted or unsubstituted divalent or trivalent hydrocarbon residue, each R₁₀ is the same or different and is a substituted or unsubstituted divalent hydrocarbon residue, each R₁₃ is the same or different and is a substituted or unsubstituted divalent hydrocarbon residue, R₁₁ and R₁₄ are the same or different and are hydrogen, a substituted or unsubstituted monovalent hydrocarbon residue or an ionic substituent, R₁₅ is a substituted or unsubstituted divalent hydrocarbon residue, d and e are the same or different and are a value of 0 or 1, and f and g are the same or different and are a value of 0 or greater; provided at least two of R₇, R₈, R₉, R₁₀, R₁₁, R₁₂, R₁₃, R₁₄, R₁₅ are a hydrocarbon residue having greater than 2 carbon atoms in the case of R₇, R₈, R₁₁ an R₁₄ or having greater than 2 pendant carbon atoms in the case of R₉, R₁₀, R₁₂, R₁₃ and R₁₅.

2. The polymer of claim 1 comprising the reaction product of:
(A) about 1-99.9 weight percent of one or more alpha, beta-monoethylenically unsaturated carboxylic acids;
(B) about 0-98.9 weight percent of one or more monoethylenically unsaturated monomers different from (A);
(C) about 0.1-99 weight percent of one or more monoethylenically unsaturated macromonomers; and
(D) about 0-20 weight percent or greater of one or more polyethylenically unsaturated monomers different from (A) and (B); in which the monoethylenically unsaturated macromonomers are represented by the formula: 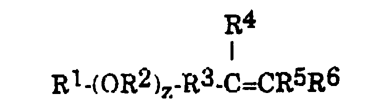
wherein:
R¹ is a monovalent residue of a substituted or unsubstituted complex hydrophobe compound;
each R² is the same or different and is a substituted or unsubstituted divalent hydrocarbon residue;
R³ is a substituted or unsubstituted divalent hydrocarbon residue;
R⁴, R⁵ and R⁶ are the same or different and are hydrogen or a substituted or unsubstituted monovalent hydrocarbon residue; and
z is a value of 0 or greater;
and in which said substituted or unsubstituted complex hydrophobe compound (R¹) is represented by the formula selected from: 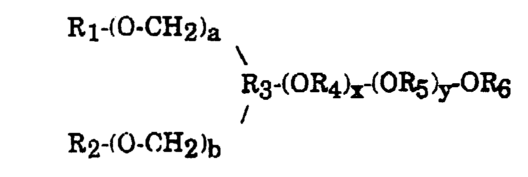 wherein R₁ and R₂ are the same or different and are hydrogen or a substituted or unsubstituted monovalent hydrocarbon residue, R₃ is a substituted or unsubstituted divalent or trivalent hydrocarbon residue, each R₄ is the same or different and is a substituted or unsubstituted divalent hydrocarbon residue, each R₅ is the same or different and is a substituted or unsubstituted divalent hydrocarbon residue, R₆ is hydrogen a substituted or unsubstituted monovalent hydrocarbon residue or an ionic substituent, a and b are the same or different and are a value of 0 or 1, and x and y are the same or different and are a value of 0 or greater; provided at least two of R₁, R₂, R₃, R₄, R₅ and R₆ are a hydrocarbon residue having greater than 2 carbon atoms in the case of R₁, R₂ and R₆ or having greater than 2 pendant carbon atoms in the case of R₃, R₄ and R₅; and 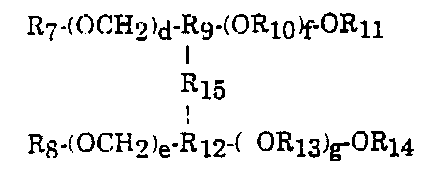 wherein R₇ and R₈ are the same or different and are hydrogen or a substituted or unsubstituted monovalent hydrocarbon residue, R₉ and R₁₂ are the same or different and are a substituted or unsubstituted divalent or trivalent hydrocarbon residue, each R₁₀ is the same or different and is a substituted or unsubstituted divalent hydrocarbon residue, each R₁₃ is the same or different and is a substituted or unsubstituted divalent hydrocarbon residue, R₁₁ and R₁₄ are the same or different and are hydrogen, a substituted or unsubstituted monovalent hydrocarbon residue or an ionic substituent, R₁₅ is a substituted or unsubstituted divalent hydrocarbon residue, d and e are the same or different and are a value of 0 or 1, and f and g are the same or different and are a value of 0 or greater; provided at least two of R₇, R₈, R₉, R₁₀, R₁₁, R₁₂, R₁₃, R₁₄ and R₁₅ are a hydrocarbon residue having greater than 2 carbon atoms in the case of R₇, R₈, R₁₁ an R₁₄ or having greater than 2 pendant carbon atoms in the case of R₉, R₁₀, R₁₂, R₁₃ and R₁₅.

3. The polymer of claim 1 comprising the reaction product of:
(A) from 1 to about 99.9 weight percent of one or more nonionic monoethylenically unsaturated monomers; and
(B) from about 0.1 to 99 weight percent of one or more monoethylenically unsaturated macromonomers;
in which the monoethylenically unsaturated macromonomers (B) are represented by the formula: 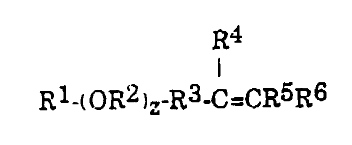 wherein:
R¹ is a monovalent residue of a substituted or unsubstituted complex hydrophobe compound;
each R² is the same or different and is a substituted or unsubstituted divalent hydrocarbon residue;
R³ is a substituted or unsubstituted divalent hydrocarbon residue;
R⁴, R⁵ and R⁶ are the same or different and are hydrogen or a substituted or unsubstituted monovalent hydrocarbon residue; and
z is a value of 0 or greater;
and in which said substituted or unsubstituted complex hydrophobe compound (R¹) is represented by the formula selected from: 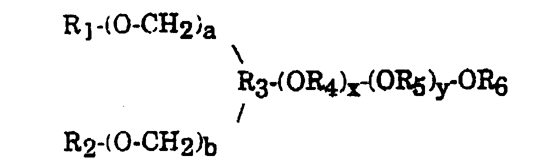 wherein R₁ and R₂ are the same or different and are hydrogen or a substituted or unsubstituted monovalent hydrocarbon residue, R₃ is a substituted or unsubstituted divalent or trivalent hydrocarbon residue, each R₄ is the same or different and is a substituted or unsubstituted divalent hydrocarbon residue, each R₅ is the same or different and is a substituted or unsubstituted divalent hydrocarbon residue, R₆ is hydrogen, a substituted or unsubstituted monovalent hydrocarbon residue or an ionic substituent, a and b are the same or different and are a value of 0 or 1, and x and y are the same or different and are a value of 0 or greater; provided at least two of R₁, R₂, R₃, R₄, R₅ and R₆ are a hydrocarbon residue having greater than 2 carbon atoms in the case of R₁, R₂ and R₆ or having greater than 2 pendant carbon atoms in the case of R₃, R₄ and R₅; and 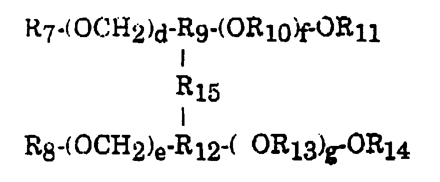 wherein R₇ and R₈ are the same or different and are hydrogen or a substituted or unsubstituted monovalent hydrocarbon residue, R₉ and R₁₂ are the same or different and are a substituted or unsubstituted divalent or trivalent hydrocarbon residue, each R₁₀ is the same or different and is a substituted or unsubstituted divalent hydrocarbon residue, each R₁₃ is the same or different and is a substituted or unsubstituted divalent hydrocarbon residue, R₁₁ and R₁₄ are the same or different and are hydrogen, a substituted or unsubstituted monovalent hydrocarbon residue or an ionic substituent, R₁₅ is a substituted or unsubstituted divalent hydrocarbon residue, d and e are the same or different and are a value of 0 or 1, and f and g are the same or different and are a value of 0 or greater; provided at least two of R₇, R₈, R₉, R₁₀, R₁₁, R₁₂, R₁₃, R₁₄ and R₁₅ are a hydrocarbon residue having greater than 2 carbon atoms in the case of R₇, R₈, R₁₁ an R₁₄ or having greater than 2 pendant carbon atoms in the case of R₉, R₁₀, R₁₂, R₁₃ and R₁₅.

4. A compound represented by the formula: 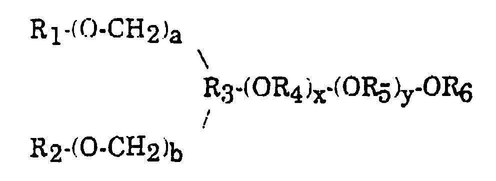 wherein R₁ and R₂ are the same or different and are hydrogen or a substituted or unsubstituted monovalent hydrocarbon residue, R₃ is a substituted or unsubstituted divalent or trivalent hydrocarbon residue, each R₄ is the same or different and is a substituted or unsubstituted divalent hydrocarbon residue, each R₅ is the same or different and is a substituted or unsubstituted divalent hydrocarbon residue, R₆ is hydrogen, a substituted or unsubstituted monovalent hydrocarbon residue or an ionic substituent, a and b are the same or different and are a value of 0 or 1, and x and y are the same ar different and are a value of 0 or greater; provided (i) at least two of R₁, R₂, R₃, R₄, R₅ and R₆ are a hydrocarbon residue having greater than 2 carbon atoms in the case of R₁, R₂ and R₆ or having greater than 2 pendant carbon atoms in the case of R₃, R₄ and R₅, (ii) at least one of R₄ and R₅ is other than -CH₂CH₂- when R₁ and R₂ are nonylphenyl, R₃ is >CH-, R₆ is hydrogen or SO₃, a is a value of 1, b is a value of 1, and at least one of x and y is a value of 1 or greater, and (iii) R₄ is -CH₂CH₂- and x is a value of at least 2 when R₁ is hexadecyl, R₂ is tetradecyl, R₃ is >CH-, at least one R₅ is -CH₂CH(tetradecyl)-, R₆ is hydrogen, y is a value of 1 or greater, a is a value of 1, and b is a value of 0; and 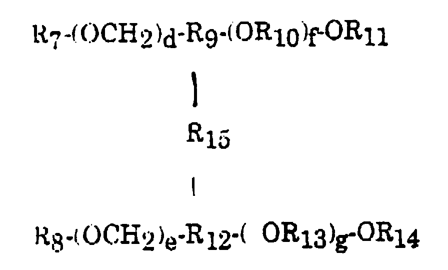 wherein R₇ and R₈ are the same or different and are hydrogen or a substituted or unsubstituted monovalent hydrocarbon residue, R₉ and R₁₂ are the same or different and are a substituted or unsubstituted divalent or trivalent hydrocarbon residue, each R₁₀ is the same or different and is a substituted or unsubstituted divalent hydrocarbon residue, each R₁₃ is the same or different and is a substituted or unsubstituted divalent hydrocarbon residue, R₁₁ and R₁₄ are the same or different and are hydrogen, a substituted or unsubstituted monovalent hydrocarbon residue or an ionic substituent, R₁₅ is a substituted or unsubstituted divalent hydrocarbon residue, d and e are the same or different and are a value of 0 or 1, and f and g are the same or different and are a value of 0 or greater, provided at least two of R₇, R₈, R₉, R₁₀, R₁₁, R₁₂, R₁₃, R₁₄ and R₁₅ are a hydrocarbon residue having greater than 2 carbon atoms in the case of R₇, R₈, R₁₁ an R₁₄ or having greater than 2 pendant carbon atoms in the case of R₉, R₁₀, R₁₂, R₁₃ and R₁₅.

5. The polymers of claims 1, 2 and 3 and the compound of claim 4 wherein (i) at least one of R₁, R₂, R₇ and R₈ is a hydrocarbon radical represented by the formula: 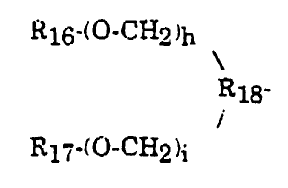 wherein R₁₆ and R₁₇ are the same or different and are hydrogen or a substituted or unsubstituted monovalent hydrocarbon residue, R₁₈ is a substituted or unsubstituted divalent or trivalent hydrocarbon residue, and h and i are the same or different and are a value of 0 or 1; and/or (ii) at least one of R₄, R₅, R₁₀ and R₁₃ is a hydrocarbon radical represented by the formula:
-CH[(OR₁₉)ⱼOR₂₀]-
wherein each R₁₉ is the same or different and is a substituted or unsubstituted divalent hydrocarbon residue, R₂₀ is hydrogen, a substituted or unsubstituted monovalent hydrocarbon residue or an ionic substituent, and j is a value of 0 or greater.

6. The polymers of claim 1,2 and 3 in which said monoethylenically unsaturated macromonomer and compound are represented by the formula selected from: 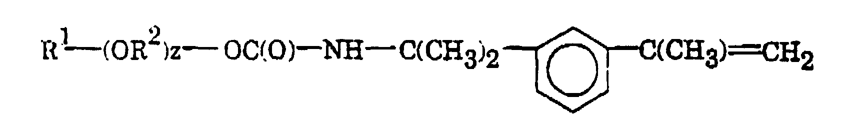 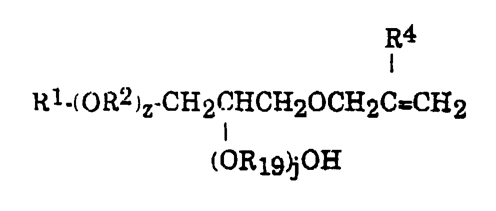 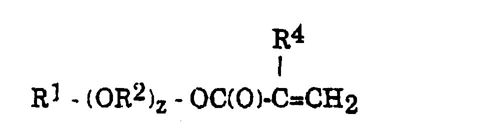 wherein R¹, R², R⁴ and z are as defined in claim 1, and R₁₉ and j are as defined in claim 5.

7. An aqueous latex containing the solubilized or neutralized aqueous polymer of claim 1.

8. A process of thickening an aqueous system comprising adding to the system a polymer of claim 1 and at least partially solubilizing or neutralizing said polymer.

9. The process of claim 8 wherein the system is thickened further by the addition of an effective amount of surfactant, solvent or non-solvent.

10. An aqueous polymer emulsion useful as a thickening agent in aqueous compositions when the polymer is dissolved therein, which comprises water and emulsified polymer particles comprising the polymer of claims 1, 2 or 3.

11. A latex paint composition comprising latex polymer, water, pigment, and thickener, which comprises having as at least a portion of the thickener dissolved therein a polymer comprising the polymer of claims 1, 2 or 3.

12. An aqueous composition comprising water and thickener, which comprises having as at least a portion of the thickener dissolved therein a polymer comprising the polymer of claims 1, 2 or 3.

13. An emulsifier, dispersant, stabilizer, wetting agent, a copolymerizable monomer for use in polymerization reaction or a latex binder comprising the compound of claims 1 or 4.

14. A latex composition containing water, latex polymer and the compound of claims 1 or 4.

15. A method for the alkoxylation of a complex hydrophobe compound having at least one active hydrogen comprising alkoxylating the complex hydrophobe compound of claim 4 with an alkylene oxide in the presence of a catalyst to produce alkoxylates of the complex hydrophobe compound under alkoxylation conditions.

16. A method for preparing alkoxylation product mixtures having a narrow distribution of species with at least one specie comprising at least about 10 weight percent of the product mixture comprising contacting a complex hydrophobe compound of claim 4 having at least one active hydrogen with an alkylene oxide in the presence of a catalytically effective amount of catalyst under alkoxylation conditions sufficient to provide a product mixture having at least one alkoxylation specie comprising at least about 10 weight percent of the mixture.

17. The method of claim 15 further comprising derivatizing the product in which the derivatizing reaction comprises an oxidation, carboxylation, reduction, hydrogenation, dehydrogenation, condensation, amination, esterification, etherification, silylation, alkylation or acylation reaction.

## Patentansprüche

1. Polymer, umfassend das Reaktionsprodukt von:
(A) ungefähr 0 - 99,9 Gewichtsprozent eines oder mehrerer nicht-ionischer, kationischer, anionischer oder amphoterer Monomerer;
(B) ungefähr 0 - 99,9 Gewichtsprozent eines oder mehrerer monoethylenisch ungesättigter Monomerer, die von (A) verschieden sind;
(C) ungefähr 0,1 - 100 Gewichtsprozent eines oder mehrerer monoethylenisch ungesättigter Makromonomerer; und
(D) ungefähr 0 - 20 Gewichtsprozent oder mehr eines oder mehrerer polyethylenisch ungesättigter Monomerer, die von (A) und (B) verschieden sind;
wobei die monoethylenisch ungesättigten Makromonomere (C) durch die Formel: 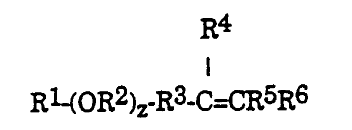 dargestellt werden, in der:
R¹ ein einwertiger Rest einer substituierten oder unsubstituierten komplexen hydrophoben Verbindung ist;
jedes R² gleich oder verschieden ist und ein substituierter oder unsubstituierter zweiwertiger Kohlenwasserstoffrest ist;
R³ ein substituierter oder unsubstituierter zweiwertiger Kohlenwasserstoffrest ist;
R⁴, R⁵ und R⁶ gleich oder verschieden sind und Wasserstoff oder ein substituierter oder unsubstituierter einwertiger Kohlenwasserstoffrest sind; und
z ein Wert von 0 oder größer ist;
und in der die substituierte oder unsubstituierte komplexe hydrophobe Verbindung (R¹) durch die Formel dargestellt wird, die ausgewählt ist aus: 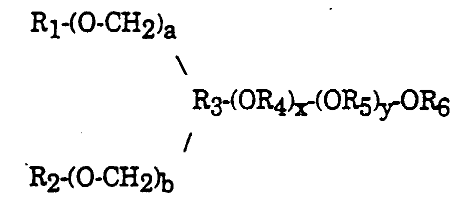 worin R₁ und R₂ gleich oder verschieden sind und Wasserstoff oder ein substituierter oder unsubstituierter einwertiger Kohlenwasserstoffrest sind, R₃ ein substituierter oder unsubstituierter zweiwertiger oder dreiwertiger Kohlenwasserstoffrest ist, jedes R₄ gleich oder verschieden ist und ein substituierter oder unsubstituierter zweiwertiger Kohlenwasserstoffrest ist, jedes R₅ gleich oder verschieden ist und ein substituierter oder unsubstituierter zweiwertiger Kohlenwasserstoffrest ist, R₆ Wasserstoff, ein substituierter oder unsubstituierter einwertiger Kohlenwasserstoffrest oder ein ionischer Substituent ist, a und b gleich oder verschieden sind und ein Wert von 0 oder 1 sind und x und y gleich oder verschieden sind und ein Wert von 0 oder größer sind; vorausgesetzt, daß mindestens zwei von R₁, R₂, R₃, R₄, R₅ und R₆ ein Kohlenwasserstoffrest mit mehr als 2 Kohlenstoffatomen im Fall von R₁, R₂ und R₆ oder mit mehr als 2 seitenständigen Kohlenstoffatomen im Fall von R₃, R₄ und R₅ sind; und 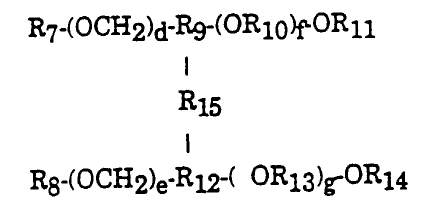 worin R₇ und R₈ gleich oder verschieden sind und Wasserstoff oder ein substituierter oder unsubstituierter einwertiger Kohlenwasserstoffrest sind, R₉ und R₁₂ gleich oder verschieden sind und ein substituierter oder unsubstituierter zweiwertiger oder dreiwertiger Kohlenwasserstoffrest sind, jedes R₁₀ gleich oder verschieden ist und ein substituierter oder unsubstituierter zweiwertiger Kohlenwasserstoffrest ist, jedes R₁₃ gleich oder verschieden ist und ein substituierter oder unsubstituierter zweiwertiger Kohlenwasserstoffrest ist, R₁₁ und R₁₄, gleich oder verschieden sind und Wasserstoff, ein substituierter oder unsubstituierter einwertiger Kohlenwasserstoffrest oder ein ionischer Substituent sind, R₁₅ ein substituierter oder unsubstituierter zweiwertiger Kohlenwasserstoffrest ist, d und e gleich oder verschieden sind und ein Wert von 0 oder 1 sind und f und g gleich oder verschieden sind und ein Wert von 0 oder größer sind; vorausgesetzt, daß mindestens zwei von R₇, R₈, R₉, R₁₀, R₁₁, R₁₂, R₁₃, R₁₄ und R₁₅ ein Kohlenwasserstoffrest mit mehr als 2 Kohlenstoffatomen im Fall von R₇, R₈, R₁₁ und R₁₄ oder mit mehr als 2 seitenständigen Kohlenstoffatomen im Fall von R₉, R₁₀, R₁₂, R₁₃ und R₁₅ sind.

2. Polymer nach Anspruch 1, umfassend das Reaktionsprodukt von:
(A) ungefähr 1 - 99,9 Gewichtsprozent einer oder mehrerer alpha,beta-monoethylenisch ungesättigter Carbonsäuren;
(B) ungefähr 0 - 98,9 Gewichtsprozent eines oder mehrerer monoethylenisch ungesättigter Monomerer, die von (A) verschieden sind;
(C) ungefähr 0,1 - 99 Gewichtsprozent eines oder mehrerer monoethylenisch ungesättigter Makromonomerer; und
(D) ungefähr 0 - 20 Gewichtsprozent oder mehr eines oder mehrerer polyethylenisch ungesättigter Monomerer, die von (A) und (B) verschieden sind;
wobei die monoethylenisch ungesättigen Makromonomere durch die Formel: 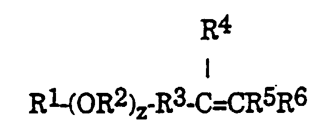 dargstellt werden, in der:
R¹ ein einwertiger Rest einer substituierten oder unsubstituierten komplexen hydrophoben Verbindung ist;
jedes R² gleich oder verschieden ist und ein substituierter oder unsubstituierter zweiwertiger Kohlenwasserstoffrest ist;
R³ ein substituierter oder unsubstituierter zweiwertiger Kohlenwasserstoffrest ist;
R⁴, R⁵ und R⁶ gleich oder verschieden sind und Wasserstoff oder ein substituierter oder unsubstituierter einwertiger Kohlenwasserstoffrest sind; und
z ein Wert von 0 oder größer ist;
und in der die substituierte oder unsubstituierte komplexe hydrophobe Verbindung (R¹) durch die Formel dargestellt wird, die ausgewählt ist aus: 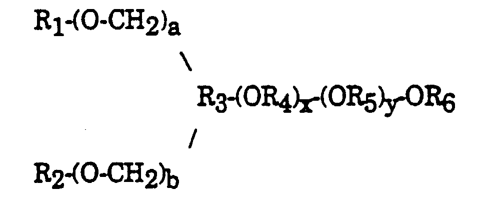 worin R₁ und R₂ gleich oder verschieden sind und Wasserstoff oder ein substituierter oder unsubstituierter einwertiger Kohlenwasserstoffrest sind, R₃ ein substituierter oder unsubstituierter zweiwertiger oder dreiwertiger Kohlenwasserstoffrest ist, jedes R₄ gleich oder verschieden ist und ein substituierter oder unsubstituierter zweiwertiger Kohlenwasserstoffrest ist, jedes R₅ gleich oder verschieden ist und ein substituierter oder unsubstituierter zweiwertiger Kohlenwasserstoffrest ist, R₆ Wasserstoff, ein substituierter oder unsubstituierter einwertiger Kohlenwasserstoffrest oder ein ionischer Substituent ist, a und b gleich oder verschieden sind und ein Wert von 0 oder 1 sind und x und y gleich oder verschieden sind und ein Wert von 0 oder größer sind; vorausgesetzt, daß mindestens zwei von R₁, R₂, R₃, R₄, R₅ und R₆ ein Kohlenwasserstoffrest mit mehr als 2 Kohlenstoffatomen im Fall von R₁, R₂ und R₆ oder mit mehr als 2 seitenständigen Kohlenstoffatomen im Fall von R₃, R₄ und R₅ sind; und 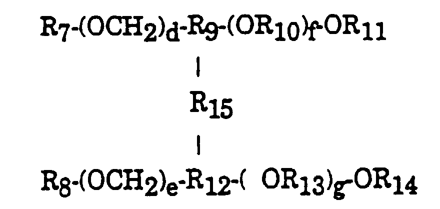 worin R₇ und R₈ gleich oder verschieden sind und Wasserstoff oder ein substituierter oder unsubstituierter einwertiger Kohlenwasserstoffrest sind, R₉ und R₁₂ gleich oder verschieden sind und ein substituierter oder unsubstituierter zweiwertiger oder dreiwertiger Kohlenwasserstoffrest sind, jedes R₁₀ gleich oder verschieden ist und ein substituierter oder unsubstituierter zweiwertiger Kohlenwasserstoffrest ist, jedes R₁₃ gleich oder verschieden ist und ein substituierter oder unsubstituierter zweiwertiger Kohlenwasserstoffrest ist, R₁₁ und R₁₄ gleich oder verschieden sind und Wasserstoff, ein substituierter oder unsubstituierter einwertiger Kohlenwasserstoffrest oder ein ionischer Substituent sind, R₁₅ ein substituierter oder unsubstituierter zweiwertiger Kohlenwasserstoffrest ist, d und e gleich oder verschieden sind und ein Wert von 0 oder 1 sind und f und g gleich oder verschieden sind und ein Wert von 0 oder größer sind; vorausgesetzt, daß mindestens zwei von R₇, R₈, R₉, R₁₀, R₁₁, R₁₂, R₁₃, R₁₄ und R₁₅ ein Kohlenwasserstoffrest mit mehr als 2 Kohlenstoffatomen im Fall von R₇, R₈, R₁₁ und R₁₄ oder mit mehr als 2 seitenständigen Kohlenstoffatomen im Fall von R₉, R₁₀, R₁₂, R₁₃ und R₁₅ sind.

3. Polymer nach Anspruch 1, umfassend das Reaktionsprodukt von:
(A) 1 bis ungefähr 99,9 Gewichtsprozent eines oder mehrerer nicht-ionischer monoethylenisch ungesättigter Monomerer; und
(B) ungefähr 0,1 bis 99 Gewichtsprozent eines oder mehrerer monoethylenisch ungesättigter Makromonomerer;
wobei die monoethylenisch ungesättigten Makromonomere (B) durch die Formel: 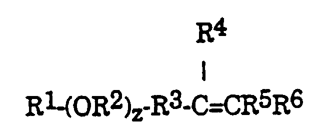 dargestellt werden, in der:
R¹ ein einwertiger Rest einer substituierten oder unsubstituierten komplexen hydrophoben Verbindung ist;
jedes R² gleich oder verschieden ist und ein substituierter oder unsubstituierter zweiwertiger Kohlenwasserstoffrest ist;
R³ ein substituierter oder unsubstituierter zweiwertiger Kohlenwasserstoffrest ist;
R⁴, R⁵ und R⁶ gleich oder verschieden sind und Wasserstoff oder ein substituierter oder unsubstituierter einwertiger Kohlenwasserstoffrest sind; und
z ein Wert von 0 oder größer ist;
und in der die substituierte oder unsubstituierte komplexe hydrophobe Verbindung (R¹) durch die Formel dargestellt wird, die ausgewählt ist aus: 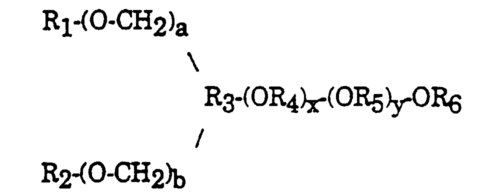 worin R₁ und R₂ gleich oder verschieden sind und Wasserstoff oder ein substituierter oder unsubstituierter einwertiger Kohlenwasserstoffrest sind, R₃ ein substituierter oder unsubstituierter zweiwertiger oder dreiwertiger Kohlenwasserstoffrest ist, jedes R₄ gleich oder verschieden ist und ein substituierter oder unsubstituierter zweiwertiger Kohlenwasserstoffrest ist, jedes R₅ gleich oder verschieden ist und ein substituierter oder unsubstituierter zweiwertiger Kohlenwasserstoffrest ist, R₆ Wasserstoff, ein substituierter oder unsubstituierter einwertiger Kohlenwasserstoffrest oder ein ionischer Substituent ist, a und b gleich oder verschieden sind und ein Wert von 0 oder 1 sind und x und y gleich oder verschieden sind und ein Wert von 0 oder größer sind; vorausgesetzt, daß mindestens zwei von R₁, R₂, R₃, R₄, R₅ und R₆ ein Kohlenwasserstoffrest mit mehr als 2 Kohlenstoffatomen im Fall von R₁, R₂ und R₆ oder mit mehr als 2 seitenständigen Kohlenstoffatomen im Fall von R₃, R₄ und R₅ sind; und 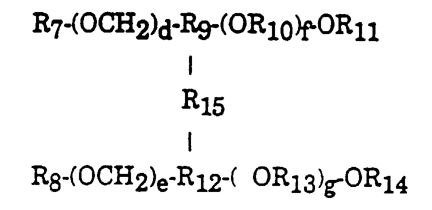 worin R₇ und R₈ gleich oder verschieden sind und Wasserstoff oder ein substituierter oder unsubstituierter einwertiger Kohlenwasserstoffrest sind, R₉ und R₁₂ gleich oder verschieden sind und ein substituierter oder unsubstituierter zweiwertiger oder dreiwertiger Kohlenwasserstoffrest sind, jedes R₁₀ gleich oder verschieden ist und ein substituierter oder unsubstituierter zweiwertiger Kohlenwasserstoffrest ist, jedes R₁₃ gleich oder verschieden ist und ein substituierter oder unsubstituierter zweiwertiger Kohlenwasserstoffrest ist, R₁₁ und R₁₄ gleich oder verschieden sind und Wasserstoff, ein substituierter oder unsubstituierter einwertiger Kohlenwasserstoffrest oder ein ionischer Substituent sind, R₁₅ ein substituierter oder unsubstituierter zweiwertiger Kohlenwasserstoffrest ist, d und e gleich oder verschieden sind und ein Wert von 0 oder 1 sind und f und g gleich oder verschieden sind und ein Wert von 0 oder größer sind; vorausgesetzt, daß mindestens zwei von R₇, R₈, R₉, R₁₀, R₁₁, R₁₂, R₁₃, R₁₄ und R₁₅ ein Kohlenwasserstoffrest mit mehr als 2 Kohlenstoffatomen im Fall von R₇, R₈, R₁₁ und R₁₄ oder mit mehr als 2 seitenständigen Kohlenstoffatomen im Fall von R₉, R₁₀, R₁₂, R₁₃ und R₁₅ sind.

4. Verbindung, dargestellt durch die Formel: 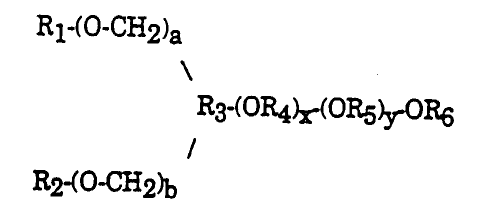 in der R₁ und R₂ gleich oder verschieden sind und Wasserstoff oder ein substituierter oder unsubstituierter einwertiger Kohlenwasserstoffrest sind, R₃ ein substituierter oder unsubstituierter zweiwertiger oder dreiwertiger Kohlenwasserstoffrest ist, jedes R₄ gleich oder verschieden ist und ein substituierter oder unsubstituierter zweiwertiger Kohlenwasserstoffrest ist, jedes R₅ gleich oder verschieden ist und ein substituierter oder unsubstituierter zweiwertiger Kohlenwasserstoffrest ist, R₆ Wasserstoff, ein substituierter oder unsubstituierter einwertiger Kohlenwasserstoffrest ist oder ein ionischer Substituent ist, a und b gleich oder verschieden sind und ein Wert von 0 oder 1 sind und x und y gleich oder verschieden sind und ein Wert von 0 oder größer sind; vorausgesetzt, (i) daß mindestens zwei von R₁, R₂, R₃, R₄, R₅ und R₆ ein Kohlenwasserstoffrest mit mehr als 2 Kohlenstoffatomen im Fall von R₁, R₂ und R₆ oder mit mehr als 2 seitenständigen Kohlenstoffatomen im Fall von R₃, R₄ und R₅ sind, (ii) daß mindestens eines von R₄ und R₅ von -CH₂CH₂- verschieden ist, wenn R₁ und R₂ Nonylphenyl sind, R₃ >CH- ist, R₆ Wasserstoff oder SO₃ ist, a ein Wert von 1 ist, b ein Wert von 1 ist und mindestens eines von x und y ein Wert von 1 oder mehr ist, und (iii) daß R₄ -CH₂CH₂- ist und x ein Wert von mindestens 2 ist, wenn R₁ Hexadecyl ist, R₂ Tetradecyl ist, R₃ >CH- ist, mindestens ein R₅ -CH₂CH(Tetradecyl)- ist, R₆ Wasserstoff ist, y ein Wert von 1 oder größer ist, a ein Wert von 1 ist und b ein Wert von 0 ist; und 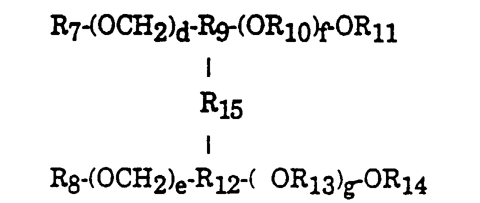 in der R₇ und R₈ gleich oder verschieden sind und Wasserstoff oder ein substituierter oder unsubstituierter einwertiger Kohlenwasserstoffrest sind, R₉ und R₁₂ gleich oder verschieden sind und ein substituierter oder unsubstituierter zweiwertiger oder dreiwertiger Kohlenwasserstoffrest sind, jedes R₁₀ gleich oder verschieden ist und ein substituierter oder unsubstituierter zweiwertiger Kohlenwasserstoffrest ist, jedes R₁₃ gleich oder verschieden ist und ein substituierter oder unsubstituierter zweiwertiger Kohlenwasserstoffrest ist, R₁₁ und R₁₄ gleich oder verschieden sind und Wasserstoff, ein substituierter oder unsubstituierter einwertiger Kohlenwasserstoffrest oder ein ionischer Substituent sind, R₁₅ ein substituierter oder unsubstituierter zweiwertiger Kohlenwasserstoffrest ist, d und e gleich oder verschieden sind und ein Wert von 0 oder 1 sind und f und g gleich oder verschieden sind und ein Wert von 0 oder mehr sind, vorausgesetzt, daß mindestens zwei von R₇, R₈, R₉, R₁₀, R₁₁, R₁₂, R₁₃, R₁₄ und R₁₅ ein Kohlenwasserstoffrest mit mehr als 2 Kohlenstoffatomen im Fall von R₇, R₈, R₁₁ und R₁₄ oder mit mehr als 2 seitenständigen Kohlenstoffatomen im Fall von R₉, R₁₀, R₁₂, R₁₃ und R₁₅ sind.

5. Polymere nach den Ansprüchen 1, 2 und 3 und Verbindung nach Anspruch 4, worin (i) mindestens eines von R₁, R₂, R₇ und R₈ ein Kohlenwasserstoffrest ist, der durch die Formel: 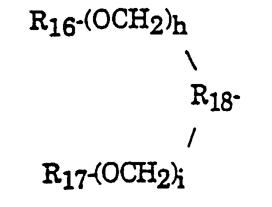 dargestellt wird, in der R₁₆ und R₁₇ gleich oder verschieden sind und Wasserstoff oder ein substituierter oder unsubstituierter einwertiger Kohlenwasserstoffrest sind, R₁₈ ein substituierter oder unsubstituierter zweiwertiger oder dreiwertiger Kohlenwasserstoffrest ist und h und i gleich oder verschieden sind und ein Wert von 0 oder 1 sind; und/oder (ii) mindestens eines von R₄, R₅, R₁₀ und R₁₃ ein Kohlenwasserstoffrest ist, der durch die Formel:
-CH[(OR₁₉)ⱼOR₂₀]-
dargestellt wird, in der R₁₉ gleich oder verschieden ist und ein substituierter oder unsubstituierter zweiwertiger Kohlenwasserstoffrest ist, R₂₀ Wasserstoff, ein substituierter oder unsubstituierter einwertiger Kohlenwasserstoffrest oder ein ionischer Substituent ist und j ein Wert von 0 oder größer ist.

6. Polymere nach Anspruch 1, 2 und 3, worin das monoethylenisch ungesättigte Makromonomer und die monoethylenisch ungesättigte Verbindung durch die Formel dargestellt werden, die ausgewählt ist aus: 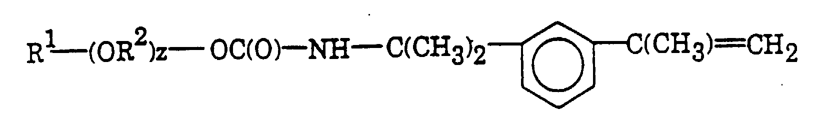 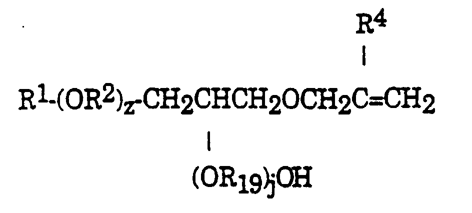 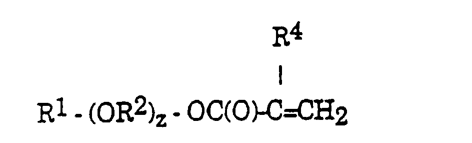 worin R¹, R², R⁴ und z wie in Anspruch 1 definiert sind und R₁₉ und j wie in Anspruch 5 definiert sind.

7. Wäßriger Latex, der das solubilisierte oder neutralisierte wäßrige Polymer nach Anspruch 1 enthält.

8. Verfahren zur Vedickung eines wäßrigen Systems, umfassend die Zugabe eines Polymers nach Anspruch 1 zu dem System und das mindestens teilweise Solubilisieren oder Neutralisieren des Polymers.

9. Verfahren nach Anspruch 8, in dem das System weiter durch die Zugabe einer wirksamen Menge an Tensid, Lösungsmittel oder Nicht-Lösungsmittel verdickt wird.

10. Wäßrige Polymeremulsion, die als Verdickungsmittel in wäßrigen Zusammensetzungen nützlich ist, wenn das Polymer darin gelöst ist, welche Wasser und emulgierte Polymerteilchen umfaßt, die das Polymer nach den Ansprüchen 1, 2 oder 3 umfassen.

11. Latex-Anstrichmittel-Zusammensetzung, umfassend Latex-Polymer, Wasser, Pigment und Verdickungsmittel, welche umfaßt, daß sie als mindestens einen Teil des Verdickungsmittels darin gelöst ein Polymer aufweist, welches das Polymer der Ansprüche 1, 2 oder 3 umfaßt.

12. Wäßrige Zusammensetzung, umfassend Wasser und ein Verdickungsmittel, welche umfaßt, daß sie als mindestens einen Teil des Verdickungsmittels darin gelöst ein Polymer aufweist, welches das Polymer der Ansprüche 1, 2 oder 3 umfaßt.

13. Emulgator, Dispergiermittel, Stabilisator, Netzmittel, copolymerisierbares Monomer zur Verwendung in einer Polymerisationsreaktion oder Latex-Bindemittel, der bzw. das die Verbindung der Ansprüche 1 oder 4 umfaßt.

14. Latex-Zusammensetzung, die Wasser, Latex-Polymer und die Verbindung der Ansprüche 1 oder 4 umfaßt.

15. Verfahren zur Alkoxylierung einer komplexen hydrophoben Verbindung mit mindestens einem aktiven Wasserstoff, umfassend das Alkoxylieren der komplexen hydrophoben Verbindung von Anspruch 4 mit einem Alkylenoxid in Anwesenheit eines Katalysators, um Alkoxylate der komplexen hydrophoben Verbindung unter Alkoxylierungsbedingungen herzustellen.

16. Verfahren zur Herstellung von Alkoxylierungsprodukt-Mischungen mit einer engen Verteilung von Spezies, wobei mindestens eine Spezies mindestens ungefähr 10 Gewichtsprozent der Produktmischung umfaßt, umfassend das Inkontaktbringen einer komplexen hydrophoben Verbindung von Anspruch 4, die mindestens einen aktiven Wasserstoff aufweist, mit einem Alkylenoxid in Anwesenheit einer katalytisch wirksamen Menge an Katalysator unter Alkoxylierungsbedingungen, die ausreichen, um eine Produktmischung bereitzustellen, die mindestens eine Alkoxylierungsspezies aufweist, die mindestens ungefähr 10 Gewichtsprozent der Mischung umfaßt.

17. Verfahren nach Anspruch 15, das weiter das Derivatisieren des Produktes umfaßt, bei dem die Derivatisierungsreaktion eine Oxidations-, Carboxylierungs-, Reduktions-, Hydrierungs-, Dehydrierungs-, Kondensations-, Aminierungs-, Veresterungs-, Veretherungs-, Silylierungs-, Alkylierungs- oder Acylierungsreaktion umfaßt.

## Revendications

1. Un polymère comprenant le produit de la réaction de:
(A) environ 0 à 99,9 % en poids de un ou plusieurs monomères non-ioniques, cationiques, anioniques ou amphotères;
(B) environ 0 à 99,9 % en poids de un ou plusieurs monomères insaturés par du monoéthylène qui soient différents de (A);
(C) environ 0,1 à 100 % en poids de un ou plusieurs macromonomères insaturés par du monoéthylène; et
(D) environ 0 à 20 % en poids ou plus de un ou plusieurs monomères insaturés par du polyéthylène qui soient différents de (A) et de (B);
caractérisé en ce que les macromonomères insaturés par du monoéthylène (C) sont représentés par la formule: 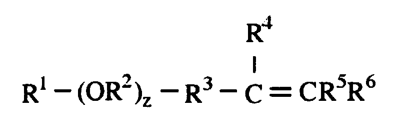 où:
R¹ représente un résidu monovalent d'un composé complexe hydrophobe substitué ou non;
chaque R² est identique ou différent et représente un résidu divalent d'hydrocarbure substitué ou non;
R³ représente un résidu divalent d'hydrocarbure substitué ou non;
R⁴, R⁵ et R⁶ sont identiques ou différents et représentent un atome d'hydrogène ou un résidu monovalent d'hydrocarbure substitué ou non; et z représente une valeur de 0 ou plus;
et en ce que ledit composé complexe hydrophobe substitué ou non (R¹) est représenté par une formule sélectionnée parmi: 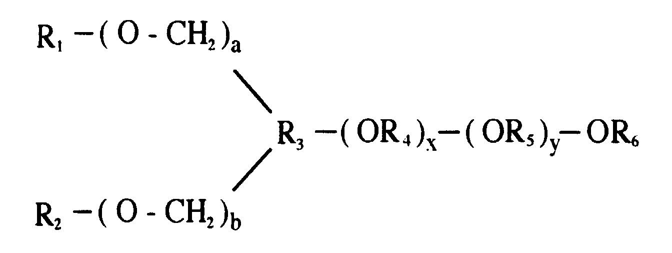 où R₁ et R₂ sont identiques ou différents et représentent un atome d'hydrogène ou un résidu monovalent d'hydrocarbure substitué ou non, R₃ représente un résidu divalent ou trivalent d'hydrocarbure substitué ou non, chaque R₄ est identique ou différent et représente un résidu divalent d'hydrocarbure substitué ou non, chaque R₅ est identique ou différent et représente un résidu divalent d'hydrocarbure substitué ou non, R₆ représente un atome d'hydrogène, un résidu monovalent d'hydrocarbure substitué ou non, ou un substituent ionique, a et b sont identiques ou différents et représentent une valeur de 0 ou 1, et x et y sont identiques ou différents et représentent une valeur de 0 ou plus; à la condition que au moins deux parmi R₁, R₂, R₃, R₄, R₅ et R₆ représentent un résidu d'hydrocarbure ayant plus de 2 atomes de carbone dans le cas de R₁, R₂ et R₆ ou ayant plus de deux atomes de carbone adjacents dans le cas de R₃, R₄, et R₅; et 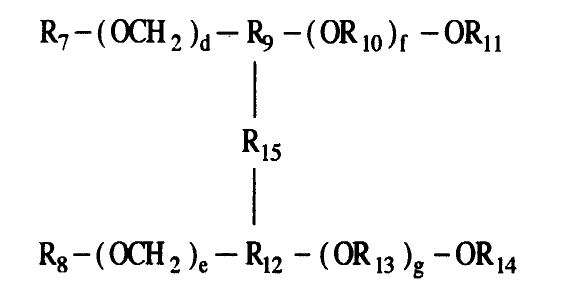 où R₇ et R₈ sont identiques ou différents et représentent un atome d'hydrogène ou un résidu monovalent d'hydrocarbure substitué ou non, R₉ et R₁₂ sont identiques ou différents et représentent un résidu divalent ou trivalent d'hydrocarbure substitué ou non, chaque R₁₀ est identique ou différent et représente un résidu divalent d'hydrocarbure substitué ou non, chaque R₁₃ est identique ou différent et représente un résidu divalent d'hydrocarbure substitué ou non, R₁₁ et R₁₄ sont identiques ou différents et représentent un atome d'hydrogène, un résidu monovalent d'hydrocarbure substitué ou non, ou un substituent ionique, R₁₅ représente un résidu divalent d'hydrocarbure substitué ou non, d et e sont identiques ou différents et représentent une valeur de 0 ou 1, et f et g sont identiques ou différents et représentent une valeur de 0 ou plus; à la condition que au moins deux parmi R₇, R₈, R₉, R₁₀, R₁₁, R₁₂, R₁₃, R₁₄ et R₁₅ représentent un résidu d'hydrocarbure ayant plus de 2 atomes de carbone dans le cas de R₇, R₈, R₁₁ et R₁₄ ou ayant plus de deux atomes de carbone adjacents dans le cas de R₉, R₁₀, R₁₂, R₁₃ et R₁₅.

2. Le polymère selon la revendication 1 comprenant le produit de la réaction de:
(A) environ 1 à 99,9 % en poids de un ou plusieurs acides carboxyliques alpha, beta-insaturés par du monoéthylène;
(B) environ 0 à 98,9 % en poids de un ou plusieurs monomères insaturés par du monoéthylène qui soient différents de (A);
(C) environ 0,1 à 99 % en poids de un ou plusieurs macromonomères insaturés par du monoéthylène; et
(D) environ 0 à 20 % en poids ou plus de un ou plusieurs monomères insaturés par du polyéthylène qui soient différents de (A) et de (B);
caractérisé en ce que les macromonomères insaturés par du monoéthylène sont représentés par la formule: 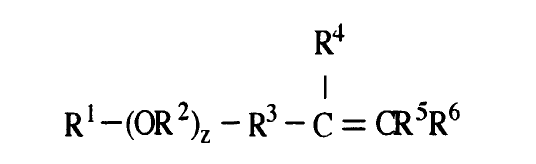 où:
R¹ représente un résidu monovalent d'un composé complexe hydrophobe substitué ou non;
chaque R² est identique ou différent et représente un résidu divalent d'hydrocarbure substitué ou non;
R³ représente un résidu divalent d'hydrocarbure substitué ou non;
R⁴, R⁵ et R⁶ sont identiques ou différents et représentent un atome d'hydrogène ou un résidu monovalent d'hydrocarbure substitué ou non; et z représente une valeur de 0 ou plus;
et en ce que ledit composé complexe hydrophobe substitué ou non (R¹) est représenté par une formule sélectionnée parmi: 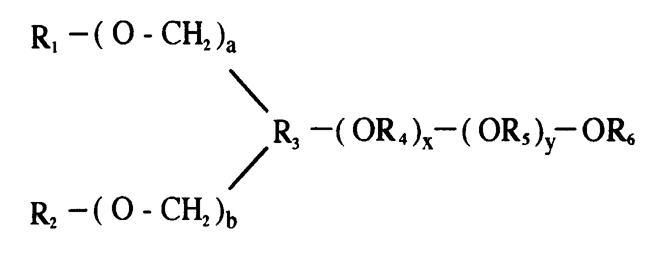 où R₁ et R₂ sont identiques ou différents et représentent un atome d'hydrogène ou un résidu monovalent d'hydrocarbure substitué ou non, R₃ représente un résidu divalent ou trivalent d'hydrocarbure substitué ou non, chaque R₄ est identique ou différent et représente un résidu divalent d'hydrocarbure substitué ou non, chaque R₅ est identique ou différent et représente un résidu divalent d'hydrocarbure substitué ou non, R₆ représente un atome d'hydrogène, un résidu monovalent d'hydrocarbure substitué ou non, ou un substituent ionique, a et b sont identiques ou différents et représentent une valeur de 0 ou 1, et x et y sont identiques ou différents et représentent une valeur de 0 ou plus; à la condition que au moins deux parmi R₁, R₂, R₃, R₄, R₅ et R₆ représentent un résidu d'hydrocarbure ayant plus de 2 atomes de carbone dans le cas de R₁, R₂ et R₆ ou ayant plus de deux atomes de carbone adjacents dans le cas de R₃, R₄, et R₅; et 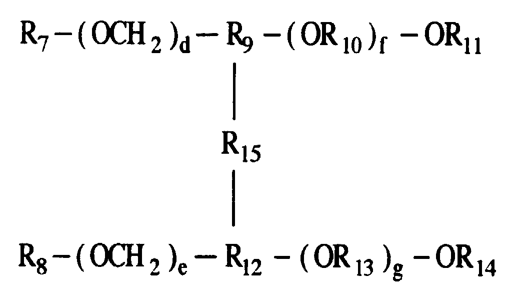 où R₇ et R₈ sont identiques ou différents et représentent un atome d'hydrogène ou un résidu monovalent d'hydrocarbure substitué ou non, R₉ et R₁₂ sont identiques ou différents et représentent un résidu divalent ou trivalent d'hydrocarbure substitué ou non, chaque R₁₀ est identique ou différent et représente un résidu divalent d'hydrocarbure substitué ou non, chaque R₁₃ est identique ou différent et représente un résidu divalent d'hydrocarbure substitué ou non, R₁₁ et R₁₄ sont identiques ou différents et représentent un atome d'hydrogène, un résidu monovalent d'hydrocarbure substitué ou non, ou un substituent ionique, R₁₅ représente un résidu divalent d'hydrocarbure substitué ou non, d et e sont identiques ou différents et représentent une valeur de 0 ou 1, et f et g sont identiques ou différents et représentent une valeur de 0 ou plus; à la condition que au moins deux parmi R₇, R₈, R₉, R₁₀, R₁₁, R₁₂, R₁₃, R₁₄ et R₁₅ représentent un résidu d'hydrocarbure ayant plus de 2 atomes de carbone dans le cas de R₇, R₈, R₁₁ et R₁₄ ou ayant plus de deux atomes de carbone adjacents dans le cas de R₉, R₁₀, R₁₂, R₁₃ et R₁₅.

3. Le polymère selon la revendication 1 comprenant le produit de la réaction de:
(A) de 1 à environ 99,9 % en poids de un ou plusieurs monomères non-ioniques insaturés par du monoéthylène; et
(B) de environ 0,1 à 99 % en poids de un ou plusieurs macromonomères insaturés par du monoéthylène;
caractérisé en ce que les macromonomères insaturés par du monoéthylène (B) sont représentés par la formule: 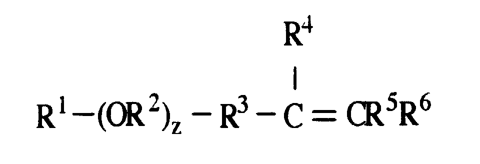 où:
R¹ représente un résidu monovalent d'un composé complexe hydrophobe substitué ou non;
chaque R² est identique ou différent et représente un résidu divalent d'hydrocarbure substitué ou non;
R³ représente un résidu divalent d'hydrocarbure substitué ou non;
R⁴, R⁵ et R⁶ sont identiques ou différents et représentent un atome d'hydrogène ou un résidu monovalent d'hydrocarbure substitué ou non; et z représente une valeur de 0 ou plus;
et en ce que ledit composé complexe hydrophobe substitué ou non (R¹) est représenté par une formule sélectionnée parmi: 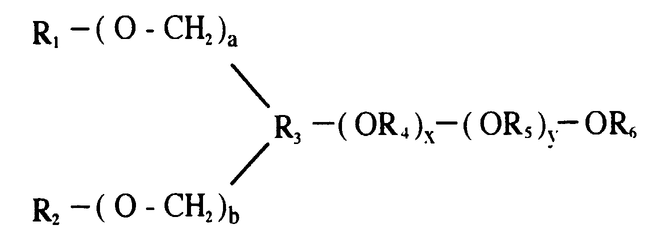 où R₁ et R₂ sont identiques ou différents et représentent un atome d'hydrogène ou un résidu monovalent d'hydrocarbure substitué ou non, R₃ représente un résidu divalent ou trivalent d'hydrocarbure substitué ou non, chaque R₄ est identique ou différent et représente un résidu divalent d'hydrocarbure substitué ou non, chaque R₅ est identique ou différent et représente un résidu divalent d'hydrocarbure substitué ou non, R₆ représente un atome d'hydrogène, un résidu monovalent d'hydrocarbure substitué ou non, ou un substituent ionique, a et b sont identiques ou différents et représentent une valeur de 0 ou 1, et x et y sont identiques ou différents et représentent une valeur de 0 ou plus; à la condition que au moins deux parmi R₁, R₂, R₃, R₄, R₅ et R₆ représentent un résidu d'hydrocarbure ayant plus de 2 atomes de carbone dans le cas de R₁, R₂ et R₆ ou ayant plus de deux atomes de carbone adjacents dans le cas de R₃, R₄, et R₅; et 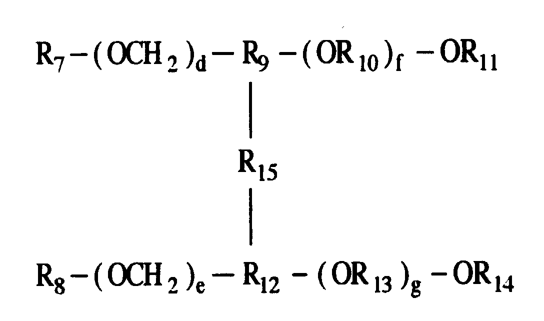 où R₇ et R₈ sont identiques ou différents et représentent un atome d'hydrogène ou un résidu monovalent d'hydrocarbure substitué ou non, R₉ et R₁₂ sont identiques ou différents et représentent un résidu divalent ou trivalent d'hydrocarbure substitué ou non, chaque R₁₀ est identique ou différent et représente un résidu divalent d'hydrocarbure substitué ou non, chaque R₁₃ est identique ou différent et représente un résidu divalent d'hydrocarbure substitué ou non, R₁₁ et R₁₄ sont identiques ou différents et représentent un atome d'hydrogène, un résidu monovalent d'hydrocarbure substitué ou non, ou un substituent ionique, R₁₅ représente un résidu divalent d'hydrocarbure substitué ou non, d et e sont identiques ou différents et représentent une valeur de 0 ou 1, et f et g sont identiques ou différents et représentent une valeur de 0 ou plus; à la condition que au moins deux parmi R₇, R₈, R₉, R₁₀, R₁₁, R₁₂, R₁₃, R₁₄ et R₁₅ représentent un résidu d'hydrocarbure ayant plus de 2 atomes de carbone dans le cas de R₇, R₈, R₁₁ et R₁₄ ou ayant plus de deux atomes de carbone adjacents dans le cas de R₉, R₁₀, R₁₂, R₁₃ et R₁₅.

4. Un composé représenté par la formule: 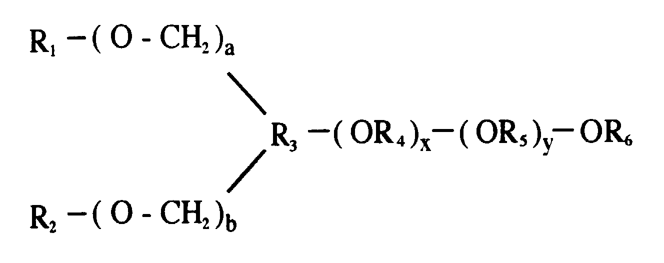 où R₁ et R₂ sont identiques ou différents et représentent un atome d'hydrogène ou un résidu monovalent d'hydrocarbure substitué ou non, R₃ représente un résidu divalent ou trivalent d'hydrocarbure substitué ou non, chaque R₄ est identique ou différent et représente un résidu divalent d'hydrocarbure substitué ou non, chaque R₅ est identique ou différent et représente un résidu divalent d'hydrocarbure substitué ou non, R₆ représente un atome d'hydrogène, un résidu monovalent d'hydrocarbure substitué ou non, ou un substituent ionique, a et b sont identiques ou différents et représentent une valeur de 0 ou 1, et x et y sont identiques ou différents et représentent une valeur de 0 ou plus; à la condition que (i) au moins deux parmi R₁, R₂, R₃, R₄, R₅ et R₆ représentent un résidu d'hydrocarbure ayant plus de 2 atomes de carbone dans le cas de R₁, R₂ et R₆ ou ayant plus de deux atomes de carbone adjacents dans le cas de R₃, R₄, et R₅, (ii) au moins un parmi R₄ et R₅ est différent de -CH₂CH₂ lorsque R₁ et R₂ représentent un phényle nonylique, R₃ représente >CH-, R₆ représente un atome d'hydrogène ou SO₃, a représente une valeur de 1, b représente une valeur de 1, et au moins l'un de x et y représente une valeur de 1 ou supérieure, et (iii) R₄ représente -CH₂CH₂ et x représente une valeur au moins égale à 2 lorsque R₁ représente un hexadécyle, R₂ représente un tétradécyle, R₃ représente >CH-, au moins l'un des R₅ représente -CH2CH(tétradécyle)-, R₆ représente un atome d'hydrogène, y représente une valeur de 1 ou supérieure, a représente une valeur de 1, et b représente une valeur de 0; et 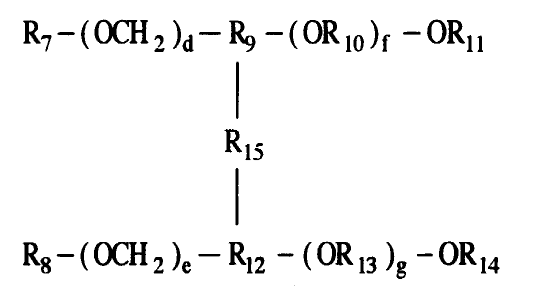 où R₇ et R₈ sont identiques ou différents et représentent un atome d'hydrogène ou un résidu monovalent d'hydrocarbure substitué ou non, R₉ et R₁₂ sont identiques ou différents et représentent un résidu divalent ou trivalent d'hydrocarbure substitué ou non, chaque R₁₀ est identique ou différent et représente un résidu divalent d'hydrocarbure substitué ou non, chaque R₁₃ est identique ou différent et représente un résidu divalent d'hydrocarbure substitué ou non, R₁₁ et R₁₄ sont identiques ou différents et représentent un atome d'hydrogène, un résidu monovalent d'hydrocarbure substitué ou non, ou un substituent ionique, R₁₅ représente un résidu divalent d'hydrocarbure substitué ou non, d et e sont identiques ou différents et représentent une valeur de 0 ou 1, et f et g sont identiques ou différents et représentent une valeur de 0 ou plus; à la condition que au moins deux parmi R₇, R₈, R₉, R₁₀, R₁₁, R₁₂, R₁₃, R₁₄ et R₁₅ représentent un résidu d'hydrocarbure ayant plus de 2 atomes de carbone dans le cas de R₇, R₈, R₁₁ et R₁₄ ou ayant plus de deux atomes de carbone adjacents dans le cas de R₉, R₁₀, R₁₂, R₁₃ et R₁₅.

5. Les polymères selon l'une quelconque des revendications 1, 2 ou 3 et le composé selon la revendication 4, caractérisés en ce que (i) au moins l'un des R₁, R₂, R₇, et R₈ est un radical d'hydrocarbure représenté par la formule: 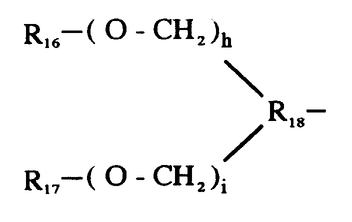 où R₁₆ et R₁₇ sont identiques ou différents et représentent un résidu monovalent d'hydrocarbure substitué ou non, R₁₈ représente un résidu divalent ou trivalent d'hydrocarbure substitué ou non, et h et i sont identiques ou différents et représentent une valeur de 0 ou 1; et/ou (ii) au moins l'un des R₄, R₅, R₁₀, et R₁₃ est un radical d'hydrocarbure représenté par la formule:
-CH[(OR₁₉)ⱼOR₂₀]-
où les R₁₉ sont identiques ou différents et représentent un résidu divalent d'hydrocarbure substitué ou non, R₂₀ représente un atome d'hydrogène, un résidu monovalent d'hydrocarbure substitué ou non ou un substituent ionique, et j représente une valeur de 0 ou plus.

6. Les polymères selon l'une quelconque des revendications 1, 2 ou 3, caractérisés en ce que ledit macromonomère insaturé par du monoéthylène et ledit composé insaturé par du monoéthylène sont sélectionnés parmi: 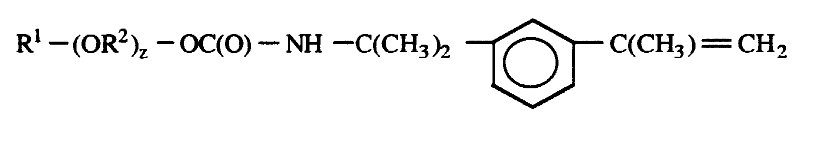 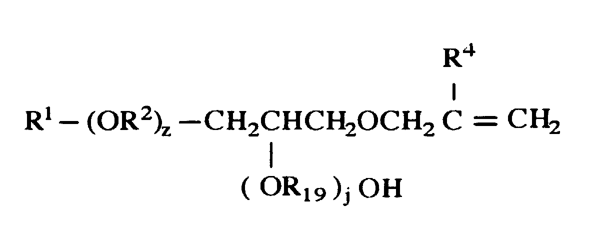 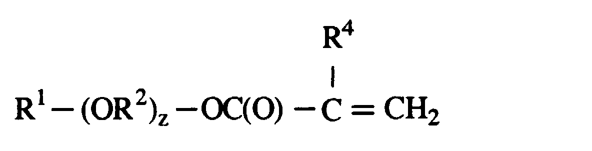 où R¹, R², R⁴ et z sont tels que définis dans la revendication 1, et R₁₉ et j sont tels que définis dans la revendication 5.

7. Un latex aqueux contenant le polymère aqueux selon la revendication 1 sous forme solubilisée ou neutralisée.

8. Un procédé pour épaissir un système aqueux comprenant l'adjonction à ce système d'un polymère selon la revendication 1 et la solubilisation ou neutralisation au moins partielle dudit polymère.

9. Le procédé selon la revendication 8, caractérisé en ce que le système est additionellement épaissi par l'adjonction d'une quantité effective d'agent tensio-actif, de solvant ou de non-solvant.

10. Une émulsion de polymère aqueux servant d'agent épaississant pour des compositions aqueuses dans lesquelles on le dissous, caractérisée en ce qu'elle comprend de l'eau et des particules de polymère émulsionnées comprenant le polymère selon l'une des revendications 1, 2 ou 3.

11. Une composition de peinture au latex comprenant du polymère de latex, de l'eau, du pigment et de l'épaississant, caractérisée en ce qu'elle comprend au moins pour une partie de l'épaississant qui y est dissout le polymère selon l'une des revendications 1, 2 ou 3.

12. Une composition aqueuse comprenant de l'eau et de l'épaississant, caractérisée en ce qu'elle comprend au moins pour une partie de l'épaississant qui y est dissout le polymère selon l'une des revendications 1, 2 ou 3.

13. Un émulsifiant, un dispersant, un stabilisateur, un agent mouillant, un monomère copolymérisable pour son utilisation dans une réaction de polymérisation ou un liant de latex comprenant le composé selon l'une des revendications 1 ou 4.

14. Une composition de latex contenant de l'eau, du polymère de latex et le composé selon l'une des revendications 1 ou 4.

15. Un procédé pour l'alkoxylation d'un composé hydrophobe complexe ayant au moins un atome d'hydrogène actif, comprenant l'alkoxylation du composé hydrophobe complexe selon la revendication 4 avec un alkylène oxyde en présence d'un catalyseur, pour obtenir, sous des conditions d'alkoxylation, des alkoxylates du composé hydrophobe complexe.

16. Un procédé pour la préparation de mélanges de produits d'alkoxylation ayant une distribution étroite d'espèces avec au moins une espèce représentant au moins environ 10 % en poids du mélange de produits, comprenant la mise en contact d'un composé hydrophobe complexe selon la revendication 4 ayant au moins un atome d'hydrogène actif avec un alkylène oxyde, en présence d'une quantité effective pour la catalyse d'un catalyseur, sous des conditions d'alkoxylation suffisantes pour obtenir un mélange de produits ayant au moins une espèce alkoxylée représentant au moins environ 10 % en poids du mélange.

17. Le procédé selon la revendication 15 comprenant additionellement la modification du produit, caractérisé en ce que la réaction de modification comprend une réaction d'oxydation, carboxylation, réduction, hydrogénation, déshydrogénation, condensation, amination, estérification, étherification, silylation, alkylation ou acylation.
